# EUROPEAN PATENT APPLICATION

(11) **EP 2 611 152 A2**
(43) Date of publication of application: **03.07.2013**
(21) Application number: 12195272.5
(22) Date of filing: 03.12.2012
(51) Int. Cl.: H04N 7/18, H04N 13/04

(54) **Display apparatus, image processing system, display method and imaging processing thereof**

(30) Priority: 28.12.2011 KR 20110144942; 28.12.2011 KR 20110145026; 28.12.2011 KR 20110145124; 28.12.2011 KR 20110145278; 29.12.2011 KR 20110146164; 29.12.2011 KR 20110146564; 30.12.2011 KR 20110147499; 30.12.2011 KR 20110147506; 04.06.2012 KR 20120059958
(71) Applicant: Samsung Electronics Co., Ltd., Gyeonggi-do 443-742 (KR)
(72) Inventor: Park, Jung-jin, Gyeonggi-do (KR); Seo, Je-hwan, Daegu (KR); Ka, Jee-hoon, Gyeonggi-do (KR); Kang, Keun-seok, Gyeonggi-do (KR); Koo, Jae-phil, Chungcheongnam-do (KR); Kim, Ki-suk, Gyeonggi-do (KR); Na, Moon-sung, Gyeonggi-do (KR); Nam, Dae-hyun, Gyeonggi-do (KR); Min, Kwan-sik, Gyeonggi-do (KR); Yang, Geun-sam, Gyeonggi-do (KR); Lee, Sang-jun, Gyeonggi-do (KR); Lee, Seung-bok, Gyeonggi-do (KR); Lee, Cheon-seong, Gyeonggi-do (KR); Jun, Byung-jo, Gyeonggi-do (KR); Choi, Nak-won, Gyeonggi-do (KR); Ha, Tae-hyeun, Gyeonggi-do (KR)
(74) Representative: Clark, David James

(57) **Abstract**

An image processing apparatus, an image processing system, and a method thereof are provided. The apparatus includes: a signal processor which receives a plurality of contents and constructs image frames of the respective contents; an outputter which operates in a first mode to output image frames of only one content, and in a second mode to combine and output the image frames of the plurality of contents; a video telephony processor including an image capturer to capture an image external to the apparatus, the video telephony processor connecting video telephony, if a request for video telephony is received via an external network; and a controller which controls the outputter to determine a combination of the image frames of the plurality of contents outputted through the signal processor, according to an operational status of the video telephony processor.

## Description

### BACKGROUND

### 1. Field

Apparatuses, systems, and methods consistent with exemplary embodiments relate to a display apparatus, an image processing system, a display method, and an image processing method, and more particularly, to a display apparatus, an image processing system, a display method, and an image processing method which provide a plurality of contents on one single screen.

Further, apparatuses and methods consistent with exemplary embodiments relate to a display apparatus which provides different contents to a plurality of users and also performs video telephony, and a video telephony method using the same.

Further, apparatuses and methods consistent with exemplary embodiments relate to a display apparatus which provides different contents to a plurality of users and also can store the contents during video telephony, and a video telephony method using the same.

Further, apparatuses and methods consistent with exemplary embodiments relate to a display apparatus which restrictively performs content view switching and a method thereof.

Further, apparatuses, multiview display methods, glasses, and control methods consistent with exemplary embodiments relate to a display apparatus which provides different contents to a plurality of users, a multiview display method using the same, glasses, and a control method thereof.

Further, glasses, communication methods, apparatuses, and methods consistent with exemplary embodiments relate to glasses which provide different contents to a plurality of users, a communication method thereof, and a control providing method using the same.

Further, glasses, content switching methods, display apparatuses, and content providing methods consistent with exemplary embodiments relate to glasses which provide different contents to a plurality of users, a content switching method thereof, a display apparatus and a content providing method using the same.

### 2. Description of the Related Art

With the development of digital technologies, various electronic products have been developed and provided. To be specific, display apparatuses such as TVs, mobile phones, personal computers (PCs), laptop computers, and personal digital assistants (PDAs), tablets, etc., are utilized frequently at homes.

As the utilization of display apparatuses increases, user needs for various functions also rise. Accordingly, as electronic manufacturers exert greater efforts to meet user demands, new products having new functions are launched continuously.

To be specific, a demand for viewing different contents among a plurality of users through one common display has recently grown. A display apparatus basically has the task of delivering contents to users with high fidelity. Accordingly, a display apparatus is required to be as large and clear as possible within the eye scope of the users. Individual display apparatuses such as PCs and smartphones continuously provide solutions in an effort to meet this task. However, since the individual display apparatuses also have to provide mobility, they have a limitation in terms of size. Meanwhile, public display apparatuses such as TVs or large screens may be large enough to deliver the contents with high quality, they may not provide contents customized for the individual needs. Accordingly, there is a demand for a technology that can provide contents that suit individual needs from among a plurality of contents through one common display but with high fidelity.

To utilize the public display apparatus for the individual display apparatus, several convergence technologies may be considered. The scope of utilizing the public display apparatus has to expand enough to meet the task, and the functions of the public display apparatus also has to be good enough to replace the individual display apparatus. Accordingly, in addition to the functions of the individual display apparatus, the interface is also relevant.

By utilizing the public display apparatus meeting the task, a plurality of users may individually select and watch different intended contents through one display. The contents that can be displayed on the display apparatus may include a received broadcast image, and images of various programs being executed. Each user watching different contents may input a content select command to select new content. Accordingly, there is a demand for a control method that can efficiently control a plurality of contents according to change of a plurality of users.

The users of the display apparatus may intend to change the content that other users are watching. However, particularly when the game program or the mail program is in use, the user may not be allowed to change the content in consideration of the game publicity or the individual privacy. Accordingly, there is a demand for a technology that can perform a content view switching efficiently.

Further, in order to enable users to watch content in a multiview mode through glasses, there is a demand for a simpler switching into multiview mode.

Further, the display apparatus may interoperate with the glasses to provide the content to the users wearing the glasses. Accordingly, there is a demand for a method that can prevent malfunction of the glasses.

Further, a user does not know whether the glasses operate normally or not, before the user wears the glasses. Accordingly, there is a demand for a method that enables a user to check the operation of the glasses with simple manipulation.

Regarding the display apparatus, a user watching one content he wishes to view does not view other contents. Accordingly, there is a demand for a method that enables a user to check the other contents with simple manipulation.

### SUMMARY

Exemplary embodiments overcome the above disadvantages and other disadvantages not described above. Also, an exemplary embodiment is not required to overcome the disadvantages described above, and an exemplary embodiment may not overcome any of the problems described above.

According to one or more exemplary embodiments, there is provided a display apparatus which switches between single view mode and multiview mode according to a change of a user, and a display method thereof.

According to an aspect of an exemplary embodiment, there is provided an image processing apparatus including: an outputter which outputs one content view in a single view mode, and combines a plurality of content views and outputs the result in a multiview mode; an image capturer which performs photographing; and a controller which detects a change of a viewer viewing the display apparatus using the data photographed at the image capturer and controls the outputter to operate in either the single view mode or the multiview mode depending on the change of the viewer.

The controller may control the outputter to switch to the multiview mode, if detecting addition of a viewer while the outputter is operating in the single view mode, and controls the outputter to switch to the single view mode if detecting disappearance of the viewer while the outputter is operating in the multiview mode.

The display apparatus may additionally include a storage, and the controller may control the outputter to switch to the single view mode, if detecting disappearance of the viewer while the outputter is operating in the multiview mode, store viewing environment information of content corresponding to the disappeared viewer from among the plurality of contents outputted in the multiview mode, re-construct content corresponding to the disappeared viewer using the viewing environment information of the content upon return of the disappeared viewer, and control the outputter to output a plurality of contents including the re-constructed content.

If public mode is set, the controller may perform switching between the multiview mode and the single view mode according to the change of the viewer, and if private mode is set, may restrict switching between the multiview mode and the single view mode irrespective of the change of the viewer, and control the outputter to operate fixedly in the multiview mode.

The display apparatus may additionally include a storage which stores viewing environment information of contents of individual viewers, and if detecting addition of a new viewer, the controller may construct new content using the viewing environment information of the content corresponding to the new viewer and control the outputter to output a plurality of contents including the new content.

The image capturer may photographs an infrared (IR) signal outputted from a remote controlling device, and if a user command is received from the remote controlling device while the outputter is operating in the multiview mode, the controller may detect a viewer adjacent to the remote controlling device based on photographed image of the IR signal and apply the user command to the content corresponding to the detected viewer.

According to an aspect of another exemplary embodiment, there is provided a display method of a display apparatus which outputs image frames of only one content in a single view mode and combines and outputs the respective frames of a plurality of contents in a multiview mode, the display method including: detecting a change of a viewer viewing the display apparatus using photographed data; and operating in either the single view mode or the multiview mode according to the detected change of the viewer.

The operating in either the single view mode or the multiview mode may include if detecting addition of a viewer in the single view mode, switching to the multiview mode, and if detecting disappearance of a viewer in the multiview mode, switching to the single view mode.

The operating in either the single view mode or the multiview mode may include if detecting disappearance of a viewer in the multiview mode, switching to the single view mode and storing viewing environment information of content corresponding to the disappeared viewer from among the plurality of contents outputted in the multiview mode, and if determining return of the disappeared viewer, re-constructing content corresponding to the disappeared viewer using the viewing environment information of the content and outputting a plurality of contents including the re-constructed content.

The operating in either the single view mode or the multiview mode may additionally include, if public mode is set, switching between the multiview mode and the single view mode depending on the change of the viewer, and if private mode is set, blocking switching between the multiview mode and the single view mode irrespective of whether or not the change of the viewer is detected, and operating fixedly in the multiview mode.

The display apparatus may store in advance viewing environment information of the contents per individual viewers, and the operating in either the single view mode or the multiview mode may include, if detecting addition of new viewer, constructing new content view using the viewing environment information of the content view corresponding to the new viewer and outputting a plurality of content views including the new content view.

The display method may include photographing an infrared (IR) signal outputted from a remote control device, and if a user command is received from the remote control device in a state that the outputter operates in the multiview mode, detecting a viewer adjacent to the remote control device based on the photographed image of the IR signal and applying the user command to content corresponding to the detected viewer.

According to an aspect of another exemplary embodiment, there is provided a display apparatus which provides video telephony at the same time of providing different contents to a plurality of viewers and a method thereof.

According to an aspect of another exemplary embodiment, there is provided a display apparatus including: a plurality of signal processors which receive a plurality of contents and construct image frames of the respective contents, an outputter which combines and displays the image frames of the plurality of contents outputted from the signal processors, a video telephony processor which receives a request for video telephony, and a controller which controls the outputter to replace a video telephony screen with image frames of one of the plurality of contents.

The display apparatus may additionally include an interface which receives a command to connect video telephony, and if the command to connect video telephony is inputted through the interface, the controller may control the video telephony processor to connect video telephony to a correspondent node which transmits the request for video telephony.

The interface may receive a command to connect video telephony from one of a plurality of glasses corresponding to the plurality of contents, and the controller may control the outputter to replace a screen for video telephony with image frames of content corresponding to one of the plurality of glasses that transmits the command to connect video telephony.

The video telephony processor may include an image capturer which performs photographing, a video telephony receiving unit which receives video telephony data from a correspondent node transmitting the request for video telephony, if the video telephony is connected, and a video telephony screen processor which constructs the screen for video telephony using video data contained in the video telephony data and photographed data captured at the image capturer.

The interface may be a motion detecting unit which detects a viewer motion using data photographed at the image capturer, and if a preset viewer motion is detected at the motion detecting unit, the controller may control the video telephony processor to connect to the correspondent node transmitting the request for video telephony and control the image capturer to shift a direction of photographing to a direction the viewer motion is detected.

If the request for video telephony is received, the controller may control the outputter to display a message for inquiring as to whether or not to perform video telephony.

If the video telephony is connected in a state that one of the plurality of contents is being displayed through the outputter, the controller may control the outputter to combine image frames of the content displayed at the outputter with the video telephony screen and display the result.

According to an aspect of another exemplary embodiment, there is provided a display method including: combining a plurality of different contents on a basis of image frames and displaying the result, receiving a request for video telephony, and if video telephony is connected in response to the request for video telephony, replacing video telephony screen with image frames of one of the plurality of contents.

The display method may additionally include receiving a command to connect video telephony from one of a plurality of glasses corresponding to the plurality of contents, and connecting video telephony to a correspondent node which transmits the request for video telephony.

The connecting the video telephony may include performing photographing, if the video telephony is connected, receiving video telephony data from a correspondent node which transmits the request for video telephony, constructing the video telephony screen using the video data contained in the video telephony data and photographed data, replacing image frames of the content corresponding to one of the plurality of glasses that transmits the command to connect video telephony with the video telephony screen, processing audio data contained in the video telephony data and transmitting the same to the glasses that transmits the command to connect video telephony.

Further, the display method may additionally include performing photographing, detecting user motion using the photographed data, and if preset user motion is detected, connecting video telephony to a correspondent node that transmits the request for video telephony and shifting a direction of photographing to a direction where the user motion is detected.

Further, the display method may additionally include, if the request for video telephony is received, displaying a message to inquire about whether or not to perform video telephony.

The display method may additionally include, if the video telephony is connected in a state that one of the plurality of contents is being displayed, combining image frames of the displayed content with the video telephony screen and displaying the result.

According to one or more exemplary embodiments, several viewers may view respectively different contents through one common display apparatus, and have video telephony without affecting the other viewer's viewing.

According to an aspect of another exemplary embodiment, there is provided a display apparatus which stores image frames that replace video telephony screen when video telephony is initiated while respectively different contents are concurrently provided to a plurality of viewers, and which provides the stored content when the video telephony finishes, and a video telephony method using the same.

According to an aspect of another exemplary embodiment, there is provided a display apparatus including: a plurality of signal processors which receive a plurality of different contents and constructs image frames of the respective contents, an outputter which combines the image frames of the plurality of contents processed at the plurality of signal processors and displays the result, a video telephony processor which receives a request for video telephony, a storage which stores image frames, and a controller which controls the outputter to replace image frames of one of the plurality of contents with video telephony screen if the video telephony is connected in response to the request for video telephony and controls the storage to store the image frames replaced by the video telephony screen.

The controller may control the outputter to combine the stored image frames with image frames of the contents which are not replaced by the video telephony screen and display the result, if the video telephony is finished.

Further, the display apparatus may additionally include an interface which receives a command to connect video telephony, and the controller may control the video telephony processor to connect video telephony to a correspondent node that transmits the request for video telephony, if the command to connect video telephony is inputted through the interface.

The interface may receive a command to connect video telephony from one of a plurality of glasses corresponding to the plurality of contents, and the controller may control the outputter to replace a screen for video telephony with image frames of content corresponding to one of the plurality of glasses that transmits the command to connect video telephony.

The video telephony processor may include an image capturer which performs photographing, a video telephony receiving unit which receives video telephony data from a correspondent node transmitting the request for video telephony, if the video telephony is connected, and a video telephony screen processor which constructs the screen for video telephony using video data contained in the video telephony data and photographed data captured at the image capturer.

The interface may be a motion detector which detects a viewer motion using data photographed at the image capturer, and if a preset viewer motion is detected at the motion detector, the controller may control the video telephony processor to connect to the correspondent node transmitting the request for video telephony and control the image capturer to shift a direction of photographing to a direction the viewer motion is detected.

If the request for video telephony is received, the controller may control the outputter to display a message for inquiring as to whether or not to perform video telephony.

If the video telephony is connected in a state that one of the plurality of contents is being displayed through the outputter, the controller may control the outputter to combine image frames of the content displayed at the outputter with the video telephony screen and display the result.

According to an aspect of another exemplary embodiment, there is provided a method of video telephony including: combining a plurality of different contents on a basis of image frames and display the result, receiving a request for video telephony, and if the video telephony is connected in response to the request for video telephony, replacing image frames of one of the plurality of contents with video telephony screen and storing the image frames replaced by the video telephony screen.

If the video telephony is finished, the method may additionally include combining the stored image frames with image frames of the contents that are not replaced by the video telephony screen and displaying the result.

The display method may additionally include receiving a command to connect video telephony from one of a plurality of glasses corresponding to the plurality of contents, and connecting video telephony to a correspondent node which transmits the request for video telephony.

The connecting the video telephony may include performing photographing, if the video telephony is connected, receiving video telephony data from a correspondent node which transmits the request for video telephony, constructing the video telephony screen using the video data contained in the video telephony data and photographed data, replacing image frames of the content corresponding to one of the plurality of glasses that transmits the command to connect video telephony with the video telephony screen, processing audio data contained in the video telephony data and transmitting the same to the glasses that transmits the command to connect video telephony.

Further, the display method may additionally include performing photographing, detecting user motion using the photographed data, and if preset user motion is detected, connecting video telephony to a correspondent node that transmits the request for video telephony and shifting a direction of photographing to a direction where the user motion is detected.

Further, the display method may additionally include, if the request for video telephony is received, displaying a message to inquire about whether or not to perform video telephony.

The display method may additionally include, if the video telephony is connected in a state that one of the plurality of contents is being displayed, combining image frames of the displayed content with the video telephony screen and displaying the result.

According to one or more exemplary embodiments, several viewers may be able to involve in video telephony while viewing different contents from each other through one single display apparatus, in which the image frames replaced by the video telephony screen may be stored so that the stored content may be displayed as the video telephony finishes.

According to an aspect of another exemplary embodiment, there is provided a display apparatus which can restrictively perform content view switching and a method thereof.

According to an aspect of another exemplary embodiment, there is provided a display apparatus including: an outputter which combines a plurality of different content views and outputs the result, a synchronous signal generator which generates synchronous signals to synchronize the plurality of content views and a plurality of glasses, an interface which transmits the synchronous signals to the plurality of glasses, and a controller which restrictively performs content view switching to switch contents of the plurality of content views synchronized to the respective glasses.

The display apparatus may additionally include an inputter to receive a command to restrict content view switching.

If a content view switching command is received from at least one of the plurality of glasses in a state that the command to restrict content view switching is not inputted, the controller may perform the content view switching. If the content view switching command is received in a state that the command to restrict content view switching is inputted, the controller may restrict the content view switching.

The display apparatus may additionally include an inputter to receive a command to restrict content view switching and release command, and the controller may restrict the content view switching from when the command to restrict the content view switching is inputted to when the release command is inputted.

The controller may restrict the content view switching with respect to a preset type of contents, while allowing the content view switching with respect to the other contents.

The controller may restrict the content view switching if the content is a program screen with viewing restriction, an execution screen of game program, an execution screen of a messenger program, a mail check screen or a social network service (SNS) screen.

The outputter may display a setting menu to set whether or not to restrict content switching, and the controller may perform the content switching if a command to switch the content is inputted in a state that the content switching allowability is set through the setting menu, and restrict the content switching if the command to switch the content is inputted in a state that the content switching restriction is set through the setting menu.

According to an aspect of another exemplary embodiment, there is provided a method for switching content view of a display apparatus, the method including: combining a plurality of different contents and outputting the result, generating synchronous signals to synchronize the plurality of contents and a plurality of glasses according to output timings of the plurality of contents, transmitting the synchronous signals to the plurality of glasses, and restrictively performing content view switching to switch the content of the plurality of contents that is synchronized to the respective glasses.

The restrictively performing content view switching may include performing the convent view switching if a content view switching command is received from one of the plurality of glasses in a state that a command to restrict content view switching is not inputted, and restricting the convent view switching if the content view switching command is received in a state that the command to restrict the content view switching is inputted.

The method may additionally include receiving the command to restrict the content view switching and release command, and the content view switching may be restricted from when the command to restrict the content view switching is inputted to when the release command is inputted.

The convent view switching may be restricted with respect to a preset type of contents, and allowed with respect to the other types of contents.

The content view switching may be restricted if the content is a program screen with viewing restriction, an execution screen of game program, an execution screen of a messenger program, a mail check screen or a social network service (SNS) screen.

Alternatively, the method may additionally include displaying a setting menu to set whether to allow or restrict the content view switching. The restrictively performing content view switching may include performing the convent view switching if the content view switching command is received in a state that allowability of the content view switching is set through the setting menu, and restricting the convent view switching if the content view switching command is received in a state that restriction of the content view switching is set through the setting menu.

According to aspects of one or more exemplary embodiments, since the display apparatus can restrictively perform the content view switching, user satisfaction increases.

According to aspects of one or more exemplary embodiments, there is provided a display apparatus which performs multiview display to enable convenient switching between single view mode and multiview mode, and a method thereof.

According to an aspect of another exemplary embodiment, there is provided a display apparatus including: an outputter which displays content, an inputter which receives a user signal with orientation from a remote control, an image capturer which performs photographing, a detecting unit which detects glasses corresponding to the orientation using the images photographed at the image capturer, and a controller which switches to the multiview mode to enable viewing of the content at the detected glasses, if the user signal is inputted.

The controller may control the outputter so that, if switched into the multiview mode, a plurality of contents including the content may be combined and displayed.

The controller may randomly select the contents other than the content from among the plurality of contents.

The display apparatus may additionally include a synchronous signal transmitter which, when switched into the multiview mode, synchronizes the glasses detected at an output timing of the content of the plurality of contents, and outputs synchronous signals to synchronize the other glasses at output timing of the other contents of the plurality of contents.

The detecting unit may perceive a location of a light emitting element attached to the plurality of glasses included in the images photographed at the image capturer, and detect the glasses that corresponds to the orientation among the plurality of glasses.

The remote controller may include a touch pad, and the user signal may be a touch manipulation signal of the viewer moving to a specific direction on the touch pad.

According to an aspect of another exemplary embodiment, there is provided a method for multiview display of a display apparatus, the method including: displaying content, receiving a user signal with orientation from a remote control, performing photographing, detecting glasses corresponding to the orientation using the photographed image, and switching into multiview mode to enable viewing of the content at the detected glasses.

The switching into the multiview mode may include receiving new content using at least one receiving units other than a receiving unit that receives the content, and combining the content and the new content and displaying the result.

The switching into the multiview mode may include synchronize the glasses detected at the output timing of one of the plurality of contents, and outputting synchronous signals to synchronize the other glasses at output timings of the rest of the plurality of contents.

The detecting the glasses may include detecting one of the plurality of glasses corresponding to the orientation by perceiving locations of light light emitting elements attached to the plurality of glasses contained in the photographed image.

The remote controller may include a touch pad, and the user signal may be a touch manipulation signal of the viewer moving to a specific direction on the touch pad.

According to aspect of one or more exemplary embodiments, there is provided a display apparatus which transmits information about current operational status of the display apparatus to glasses to prevent malfunction of the glasses, a multiview display method and a control method thereof.

According to an aspect of another exemplary embodiment, there is provided a display apparatus including: an inputter which receives a multiview viewing command, a plurality of receiving units which receive a plurality of different contents if the multiview viewing command is inputted, a plurality of image processors which construct image frames of the plurality of contents, respectively, a display unit which alternately arranges image frames of the plurality of contents processed at the plurality of image processor and displays the result, a communication interface which transmits synchronous signals to at least one glasses interoperating with the display apparatus, and a controller which controls the communication interface to record multiview mode information in the synchronous signal and transmit the result, if the multiview viewing command is inputted.

The controller may generate the synchronous signals according to a communication protocol defined with respect to the plurality of glasses and record the multiview mode information in a reserved area within the synchronous signals.

The multiview mode information may include information to notify initiation of the multiview mode.

According to an aspect of another exemplary embodiment, there is provided a multiview display method of a display apparatus, the method including: receiving a multiview viewing command, receiving a plurality of different contents if the multiview viewing command is inputted and constructing image frames of the plurality of contents, respectively, alternately arranging image frames of the plurality of contents and displaying the result, generating synchronous signals including multiview mode information, and transmitting the synchronous signals to at least one glasses interoperating with the display apparatus.

The multiview mode information may be recorded in a reserved area of the synchronous signals which are generated according to a communication protocol defined with respect to at least one glasses.

The multiview mode information may include information to notify initiation of the multiview mode.

According to an aspect of another exemplary embodiment, there is provided glasses which interoperate with a display apparatus, the glasses including: a first shutter glass, a second shutter glass, a shutter glass driving unit which turns on the first and second shutter glasses according to a display timing of content displayed on the display apparatus, a communication interface which receives synchronous signals from the display apparatus, and a controller which controls the shutter glass driving unit to adjust on-timing of the first and second shutter glasses according to the multiview mode information, if the multiview mode information is included in the synchronous signals.

The controller may control so that if the display apparatus displays 3D content, the first and second shutter glasses are turned on alternately, and if the synchronous signals including the multiview mode information is received, the first and second shutter glasses are turned on according to display timing of one of the plurality of contents displayed on the display apparatus that corresponds to the glasses.

According to an aspect of another exemplary embodiment, there is provided a control method of glasses, in which the glasses interoperate with the display apparatus and first and second shutter glasses are turned on in accordance with display timing of the content displayed on the display apparatus, the control method including: receiving synchronous signals from the display apparatus; and if the synchronous signals include multiview mode information, adjusting on-timing of the first and second shutter glasses according to the multiview mode information.

The adjusting the on-timing may include alternately turning on the first and second shutter glasses if the display apparatus displays 3D content, and if the synchronous signals including the multiview mode information are received, turning on the first and second shutter glasses according to display timing of one of the plurality of contents displayed on the display apparatus that corresponds to the glasses.

According to aspects of one or more exemplary embodiments, a plurality of viewers may view different contents through one single display apparatus, and information about whether the multiview mode of the display apparatus is executed or not may be transmitted to the glasses, thereby preventing malfunction of the glasses.

According to aspects of one or more exemplary embodiments, there is provided glasses which provides information as to whether or not glasses operate normally when different contents are provided to a plurality of viewers by synchronizing a plurality of different glasses to the contents displayed on the display apparatus, the display apparatus and a content providing method using the same.

According to an aspect of another exemplary embodiment, there is provided glasses interoperating with a display apparatus which displays a plurality of contents alternately, the glasses including: a communication interface which transmits a message for requesting connection to the display apparatus, an audio data receiving unit which receives audio data from the display apparatus, and a controller which controls the audio data receiving unit to tune to a preset frequency band and receive audio data corresponding to the one content, and controls the communication interface to transmit information indicating reception or non-reception of the audio data, if a response message is received in response to the message for requesting connection.

The controller may record the information indicating reception or non-reception of the audio data in a reserved area within a transmission packet which is transmitted to connect the display apparatus and the communication interface.

The communication interface may include a Bluetooth communication module.

Meanwhile, glasses according to an embodiment may additionally include a first shutter glass, a second shutter glass and a shutter glass driving unit which turns on the first and second shutter glasses. The controller may control the shutter glass driving unit to control on-timing of the first and second shutter glasses in accordance with display timing of the one content, based on the synchronous signals, if the synchronous signals are received upon completion of the connection between the display apparatus and the communication interface.

Further, the glasses according to an embodiment may additionally include an audio outputter which outputs audio data corresponding to the one content.

According to an aspect of another exemplary embodiment, there is provided a method for providing content of glasses interoperating with a display apparatus which displays a plurality of contents alternately, the method including: transmitting a message for requesting connection to the display apparatus to receive synchronous signals corresponding to the one of the plurality of contents, tuning to a preset frequency band and receiving audio data corresponding to the one content if a response message is received in response to the message for requesting connection, and transmitting information indicating reception or non-reception of the audio data.

The glasses may include a communication interface which receives synchronous signals corresponding to one of the plurality of contents, and the transmitting the information indicating reception or non-reception of the audio data may include recording the information indicating reception or non-reception of the audio data in a reserved area within a transmission packet which is transmitted to connect the display apparatus and the communication interface, according to a communication protocol defined with respect to the display apparatus.

Further, the communication interface may include a Bluetooth communication module.

In one embodiment, a content providing method may additionally include, if the synchronous signals are received upon completion of the connection between the display apparatus and the communication interface, controlling on-timing of the first and second shutter glasses according to display timing of the one content based on the synchronous signals.

Further, the content providing method according to an embodiment may additionally include outputting audio data corresponding to the one content.

According to an aspect of another exemplary embodiment, there is provided a display apparatus interoperating with glasses, the display apparatus including: a display which displays a plurality of contents alternately; a communication interface which communicates with the glasses and transmits synchronous signals corresponding to one of the plurality of contents; an audio data transmitter which transmits audio data corresponding to the one content to the glasses; and a controller which controls the audio data transmitter to transmit audio data corresponding to the one content to the glasses, if the message for requesting connection to transmit the synchronous signals is received from the glasses.

If the message for requesting connection is received, the controller may transmit a response message to the glasses in response and perform operations to connect the communication interface and the glasses according to a communication protocol defined with reference to the glasses.

Further, if information indicating reception or non-reception of the audio data is received from the glasses, the controller may control so that the information appears on a screen of the display unit in the form of a user interface (UI).

Further, the information indicating reception or non-reception of the audio data may be recorded in a reserved area within a transmission packet which is transmitted during operations to connect the communication interface and the glasses.

Further, the communication interface may include a Bluetooth communication module.

According to an aspect of another exemplary embodiment, there is provided a content providing method of a display apparatus interoperating with glasses, the method including: alternately displaying a plurality of contents, receiving, from the glasses, a message for requesting connection to transmit synchronous signals corresponding to one of the plurality of contents, and if the message for requesting connection is received, transmitting audio data corresponding to the one content on a preset frequency band to the glasses.

The glasses may include a communication interface to transmit the synchronous signals, and if the message for requesting connection is received, the content providing method in one embodiment may additionally include transmitting a response message to the glasses so that the operations to connect the communication interface and the glasses are performed according to a communication protocol defined with respect to the glasses.

If information indicating reception or non-reception of the audio data is received from the glasses, the content providing method may additionally include displaying the received information in the form of user interface (UI) on a screen.

The information indicating reception or non-reception of the audio data may be recorded in a reserved area within a transmission packet which is transmitted during operations to connect the communication interface and the glasses.

Meanwhile, the communication interface may include a Bluetooth communication module.

According to aspects of one or more exemplary embodiments, operation of the glasses is determined conveniently.

According to an aspect of another exemplary embodiment, there is provided glasses which check contents provided to other viewers while different contents are concurrently provided to a plurality of viewers, a content switching method using the same, and a display apparatus and a content providing method using the same.

According to an aspect of another exemplary embodiment, there is provided glasses interoperating with a display apparatus which displays a plurality of contents alternately on a basis of image frames, the glasses including: a first shutter glass; a second shutter glass; an interface which performs communication with the display apparatus; a shutter glass river which turns on the first and second shutter glasses in accordance with the synchronous signals received from the display apparatus; an inputter which receives a switching command to initiate switching mode; and a controller which receives synchronous signals corresponding to another content of the plurality of contents and controls so that on-timing of the first and second shutter glasses is changed sequentially, if the switching mode begins.

If the switching mode begins, the controller may control the interface so that a content switching command for requesting synchronous signals corresponding to the another content is transmitted to the display apparatus.

Meanwhile, if a select command is inputted through the inputter in a state that the switching mode is performed, the controller may finish the switching mode and control the shutter glass driving unit to fix the on-timing of the first and second shutter glasses according to display timing of content viewable at a timing when the select command is inputted.

The inputter may include a switching button to receive the switching command, and the controller may perform the switching mode as long as the switching button is touched, and finish the switching mode when the touching on the switching button is ceased and control the shutter glass driving unit to fix on-timing of the first and second shutter glasses according to display timing of the content viewable at a time point when the touching is ceased.

According to an aspect of another exemplary embodiment, there is provided a content selecting method of glasses interoperating with a display apparatus which alternately displays a plurality of contents on a basis of image frames, the method including: turning on the first and second shutter glasses according to a display timing of one of the plurality of contents, if switching mode begins, receiving synchronous signals corresponding to another content of the plurality of contents and changing on-timing of the first and second shutter glasses sequentially, and if the switching mode finishes in response to selecting of one of the sequentially-switched contents, selecting, in which the first and second shutter glasses are maintained in on-timing to enable viewing of the selected content.

The content switching method may additionally include transmitting a content switching command to request synchronous signals corresponding to the another content, when the switching mode begins.

Meanwhile, the switching mode may be initiated in response to an input of a switching command through a switching button provided on the glasses.

The selecting may include receiving a select command during implementation of the switching mode, and finishing the switching mode and fixing on-timing of the first and second shutter glasses according to display timing of the content which is viewable at a timing the select command is inputted.

The switching mode may be performed as long as the switching button is being touched, and finish when the touching on the switching button is ceased.

According to an aspect of another exemplary embodiment, there is provided a display apparatus including: a plurality of receiving unit which receive different contents, a plurality of signal processors which construct image frames by processing the contents received at the plurality of receiving units, an outputter which alternately arranges the image frames of the respective contents and displays the result, a synchronous signal generator which generates synchronous signals to synchronize glasses corresponding to the respective contents, in accordance with display timing of the respective contents, an interface which performs communication with the glasses, and a controller which switches the content corresponding to the glasses to another content of the plurality of contents sequentially if a content switching command is received from the glasses.

If the content switching command is received, the controller may control the outputter to change arrangement pattern of the image frames of the respective contents so that image frames of another content are placed at a location of image frames of the content corresponding to the glasses.

Meanwhile, the controller may control the interface to transmit synchronous signals corresponding to another content of the plurality of contents, if the content switching command is received, so that the glasses is synchronized to the another content of the plurality of contents.

If the interface receives a select command from the glasses during the sequential switching of the content corresponding to the glasses to another content of the plurality of contents, the controller may finish the switching operation so that the content at a time point of receiving the select command is viewable through the glasses.

Further, the controller may control so that, the switching operation is performed as long as the content switching command is received from the glasses, and finished when reception of the content switching command is finished so that the content at a time point of receiving the content switching command is viewed through the glasses.

According to an aspect of another exemplary embodiment, there is provided a content switching method of a display apparatus, the method including: arranging a plurality of different contents alternately on a basis of image frames and displaying the result, transmitting synchronous signals to synchronize glasses corresponding to the respective contents according to display timing of the respective contents, receiving a content switching command from the glasses, and if the content switching command is received, switching the content corresponding to the glasses to another content of the plurality of contents sequentially, and if one of the plurality of content is selected, finishing the switching.

The switching may include, if the content switching command is received, changing arrangement pattern of the content so that frames of another content are placed at a location of frames of the content corresponding to the glasses.

Meanwhile, the switching may include, if the content switching command is received, transmitting synchronous signals corresponding to another content of the plurality of content so that the glasses is synchronized to the another content of the plurality of contents.

Further, the finishing may include, if a select command is received from the glasses during the sequential switching from the content corresponding to the glasses to another content of the plurality of contents, finishing the switching operation so that the content at a time point of receiving the select command is viewed through the glasses.

The switching may be performed as long as the content switching command is received from the glasses.

According to an aspect of another exemplary embodiment, there is provided a display apparatus including: a signal processor which receives a plurality of contents and which constructs image frames of the respective contents, an outputter which operates in first mode or second mode, the outputter in the first mode outputs only image frames of one content outputted from the signal processor to the display unit and the output in the second mode combines image frames of the plurality of contents outputted from the signal processor and displays the result, a video telephony processor which may include an image capturer installed on an exterior of a display unit of the display apparatus to photograph a front of the display apparatus and if a request for video telephony is received through an external network, may connect the video telephony, and a controller which controls the outputter to determine a combination of the image frames of the plurality of contents outputted through the signal processor according to an operational status of the video telephony processor.

Further, the controller may detect a change of a user viewing the display apparatus using data photographed at the image capturer and control the outputter to operate either in the first mode or in the second mode according to the change of the viewer.

Further, if detecting an addition of user in a state that the outputter operates in the first mode, the controller may control the outputter to switch to the second mode, and if detecting a disappearance of the user in a state that the outputter operates in the second mode, the controller may control the outputter to switch to the first mode.

Further, the display apparatus may additionally include a storage, and if detecting disappearance of the user in a state that the outputter operates in the second mode, the controller may control the outputter to switch to the first mode and store viewing environment information of content corresponding to the disappeared user to the storage, if detecting return of the disappeared user, the controller may control the outputter to re-construct the content corresponding to the disappeared content using the viewing environment information of the content and output a plurality of contents including the re-constructed content.

Further, if public mode is set, the controller may perform switching between the second mode and the first mode depending on the change of the user, and if private mode is set, the controller may restrict switching between the second mode and the first mode and control the outputter to operate fixedly in the second mode.

Further, the display apparatus may additionally include a storage which store viewing environment information of contents per individual users, and if detecting an addition of a new user, the controller may construct new content using the viewing environment information of the content corresponding to the new user and control the outputter to output a plurality of contents including the new content.

Further, the image capturer may photograph an IR signal outputted from a remote control device, and if receiving a user command from the remote control device in a state that the outputter operates in the second mode, the controller may detect a user adjacent to the remote control device through the photographed image of the IR signal and apply the user command to the content corresponding to the detected user.

Further, if video telephony is connected in response to the request for video telephony in a state that the outputter operates in the first mode, the controller may control the outputter to switch from the first mode to the second mode and replace image frames of one of the plurality of contents with a video telephony screen.

Further, the display apparatus may additionally include an interface which receives a command to connect video telephony, and if the command to connect the video telephony is inputted through the interface, the controller may control the video telephony processor to connect the video telephony to a correspondent node which transmits the request for video telephony.

Further, the interface may receive the command to connect video telephony from one of the plurality of glasses corresponding to the plurality of contents, and the controller may control the outputter to replace a video telephony screen with image frames of content corresponding to one of the plurality of glasses that transmits the command to connect video telephony.

Further, the video telephony processor may include an image capturer which performs photographing, a video telephony receiving unit which receives video telephony data from a correspondent node which transmits the request for video telephony, if the video telephony is connected, and a video telephony screen processor which constructs the video telephony screen using photographed data captured through the image capturer.

Further, the interface may be a motion detecting unit which detects a user's motion using the data photographed at the image capturer, and if detecting a preset user motion at the motion detecting unit, the controller may control the video telephony processor to connect video telephony to a correspondent node which transmits the request for video telephony and control the image capturer to shift a direction of photographing to a direction the user motion is detected.

Further, if the request for video telephony is received, the controller may control the outputter to display a message inquiring as to whether or not to perform video telephony.

Further, if video telephony is connected in response to the request for video telephony in a state that the outputter operates in the second mode, the controller may control so that image frames of one of the plurality of contents that is outputted at the outputter with video telephony screen.

Further, the display apparatus may additionally include a storage which stores the image frames of the content replaced by the video telephony screen.

Further, if the video telephony is finished, the controller may control the outputter to combine the image frames stored at the storage with image frames of the contents other than the image frames replaced by the video telephony screen and display the result.

Further, the display apparatus may additionally include an interface which transmits synchronous signals corresponding to one of the plurality of contents, and an audio data transmitter which transmits audio data corresponding to the one content to an external device, and if a message for requesting connection is received from the external device to transmit the synchronous signals, the controller may control the audio data transmitter to transmit audio data corresponding to the one content to the external device.

Further, if the message for requesting connection is received, the controller may transmit a response message to the external device and perform operations to connect the interface and the external device according to a communication protocol defined with respect to the external device.

If information indicating reception or non-reception of the audio data is received from the external device, the controller may control so that the received information appears on a screen of the outputter in the form of user interface (UI).

Further, the information indicating reception or non-reception of the audio data may be recorded in a reserved area within a transmission packet which is transmitted during the operations to connect the interface and the external device.

Further, the interface may include a Bluetooth communication module.

According to an aspect of another exemplary embodiment, there is provided an image processing system including: a display apparatus for processing image displayed on a display unit; at least one active glasses communicating with the display apparatus: an inputter which receives user signal; a signal processor which may construct image frames by processing a plurality of contents; an outputter which may operate in a first mode or in a second mode, the outputter in the first mode displaying only image frames of one of the plurality of contents outputted at the signal processor and the outputter in the second mode combining image frames of the plurality of contents outputted from the signal processor and displaying the result; a synchronous signal generator which generates synchronous signals to synchronize a plurality of glasses corresponding to the plurality of contents in accordance with output timings of the plurality of contents; an interface which transmits the synchronous signals to the plurality of glasses; a video telephony processor which connects video telephony if a request for video telephony is received through an external network; and a controller which controls the outputter to determine a combination of image frames of the plurality of contents outputted through the signal processor according to operational status of the video telephony processor and if the outputter operates in the second mode, to transmit information to notify initiation of the second mode through the interface.

Further, the controller may generate the synchronous signals according to a communication protocol defined with respect to the plurality of glasses and record information to notify initiation of the second mode in a reserved area within the synchronous signals.

Further, the controller may control the synchronous signal generator to switch image frames of the content synchronized to at least one of the plurality of glasses, in accordance with a user signal inputted through the inputter.

Further, if a user signal directing to switch content is inputted after inputting of a user signal to restrict content switching through the inputter, the controller may restrict the content switching.

Further, the controller may restrict the content switching from when the user signal directing to restrict the content switching is inputted through the inputter to when a release command is inputted.

Further, the controller may restrict the content switching with respect to a preset type of content, and allow the content switching with respect to the rest content.

Further, the controller may restrict the content switching if the content includes a program screen with viewing restriction, an execution screen of game program, an execution screen of a messenger program, a mail check screen or a social network service (SNS) screen.

Further, the outputter may display a setting menu to set whether or not to restrict content switching, and the controller may perform the content switching if a command to switch the content is inputted in a state that the content switching allowability is set through the setting menu, and restrict the content switching if the command to switch the content is inputted in a state that the content switching restriction is set through the setting menu.

The image processing system may additionally include an image capturer installed on an exterior of the display unit to photograph a front of the display apparatus, and a detecting unit which detects at least one from among the plurality of glasses using an image captured at the image capturer. If the user signal is inputted, the controller may control to generate and transmit synchronous signals to the at least one detected glasses.

Further, the controller may control so that, if the outputter is switched to the second mode in accordance with the user signal as inputted, image frames of the plurality of contents outputted through the signal processor are combined and displayed.

Further, among the plurality of contents, the controller may randomly select the rest contents other than the content corresponding to the generated synchronous signals.

If the operation switches into the second mode, the controller may control so that more synchronous signals are generated to synchronize glasses other than the at least one detected glasses.

The detecting unit may perceive a location of a light emitting element attached to the plurality of glasses included in the image photographed at the image capturer and detects the glasses, among the plurality of glasses, that is located in a direction where the user signal is inputted.

The image processing system may additionally include a remote control wherein the user signal is inputted through the inputter according to manipulation of the remote control.

The remote control may include a touch pad, and the user signal may be a user touch manipulation signal moving in one direction on the touch pad.

The glasses may include a communication interface which transmits a message for requesting connection to the display apparatus to receive synchronous signals corresponding to one of the plurality of contents, an audio data receiving unit which receives audio data from the display apparatus, and a controller which controls the audio data receiving unit to tune to a preset frequency band and receive audio data corresponding to the one content from among the plurality of contents, if a response message is received in response to the message for requesting connection, and controls so that information indicating reception or non-reception of the audio data is transmitted to the display apparatus via the communication interface.

According to a communication protocol defined with reference to the display apparatus, the controller of the glasses may record the information indicating reception or non-reception of the audio data in a reserved area within a transmission packet which is transmitted to connect the display apparatus and the communication interface.

The communication interface may include a Bluetooth communication module.

The glasses may additionally include a first shutter glass, a second shutter glass, and a shutter glass driving unit which turns on the first and second shutter glasses. If connection between the display apparatus and the communication interface is completed and the synchronous signals are received, the controller of the glasses may control the shutter glass driving unit to control on-timing of the first and second shutter glasses according to a display timing of the one content, based on the synchronous signals.

The glasses may additionally include an audio outputter which outputs audio data corresponding to the one content.

The glasses may additionally include an inputter which receives a switching command to initiate a switching mode. If the switching mode begins, the controller of the glasses may receive synchronous signals corresponding to another viewable contents of the plurality of contents and control so that on-timing of the first and second shutter glasses is changed sequentially.

If the switching mode begins, the controller of the glasses may control the communication interface so that a content switching command is transmitted to the display apparatus to request synchronous signals corresponding to the another content.

If a select command is inputted through the inputter in a state that the switching mode is performed, the controller of the glasses may finish the switching mode and controls on-timing of the first and second shutter glasses according to a display timing of content which is viewable at a timing of inputting the select command.

The inputter may include a switching button to receive the switching command, and the controller of the glasses performs the switching mode as long as the switching button is touched, and finishes the switching mode if the touching on the switching button is ceased, and controls the shutter glass driving unit to fix on-timing of the first and second shutter glasses according to a display timing of content which is viewable at a time point the touching is ceased.

If a content switching command is received from at least one of the plurality of glasses, the controller of the display apparatus may control so that switching operation is performed in which content corresponding to the at least one glasses is switched to another content of the plurality of contents.

If the content switching command is received, the controller of the display apparatus may control the outputter to change arrangement pattern of the image frames of the respective contents so that the image frames of another content are located at a location of the image frames of the content corresponding to the at least one glasses.

If the content switching command is received, the controller of the display apparatus may control the interface to transmit synchronous signals corresponding to another content of the plurality of contents to the at least one glasses, so that the at least one glasses is synchronized to the another content of the plurality of contents.

If the interface receives a select command from the at least one glasses while the content corresponding to the at least one glasses is sequentially switched into another content of the plurality of contents, the controller of the display apparatus may finish switching operation so that the content at a time point of receiving the select command is viewable through the at least one glasses.

The controller of the display apparatus may control so that, the switching operation is performed as long as the content switching command is received from the at least one glasses, and finished if reception of the content switching command is finished, thereby enabling viewing of the content at a time point of finishing the reception of the content switching command through the at least one glasses.

According to an aspect of another exemplary embodiment, there is provided a display method in a display apparatus which outputs image frames of only one content in a first mode and combines and outputs the respective frames of a plurality of contents in a second mode, the display method including: outputting an image in the first mode or the second mode, if receiving a request for video telephony, connecting video telephony, and if the video telephony is connected, combining image frames of at least one content of the plurality of contents with image frames of the video telephony and outputting the result.

The display method may additionally include photographing a front of the display apparatus, and detecting a change of a viewer viewing the display apparatus using the photographed data and operating in either the first mode or the second mode according to the change of the viewer.

The operating in either the first mode or the second mode may include if detecting addition of a viewer in the first mode, switching to the second mode, and if detecting disappearance of a viewer in the second mode, switching to the first mode.

The operating in either the first mode or the second mode may include if detecting disappearance of a viewer in the second mode, switching to the first mode and storing viewing environment information of content corresponding to the disappeared viewer from among the plurality of contents outputted in the second mode, and if determining return of the disappeared viewer, re-constructing content corresponding to the disappeared viewer using the viewing environment information of the content and outputting a plurality of contents including the re-constructed content.

The operating in either the first mode or the second mode may include if public mode is set, switching between the second mode and the first mode depending on the change of the viewer, and if private mode is set, blocking switching between the second mode and the first mode irrespective of whether or not the change of the viewer is detected, and operating fixedly in the second mode.

If detecting addition of a new viewer, the display method may additionally include constructing new content using viewing environment information of the content corresponding to the new viewer and outputting a plurality of contents including the new content.

The photographing may include photographing an infrared (IR) signal outputted from a remote control device, and the operating either in the first mode or in the second mode may include if a user command is received from the remote control device in a state that the outputter operates in the second mode, detecting a viewer adjacent to the remote control device based on the photographed image of the IR signal and applying the user command to content corresponding to the detected viewer.

The combining the image frames and outputting the result may include if video telephony is connected in response to the request for video telephony in the first mode, changing the first mode to the second mode, and replacing image frames of one of the plurality of contents with a video telephony screen.

The connecting the video telephony may include if the command to connect video telephony is inputted, connecting video telephony with a correspondent node transmitting the request for video telephony.

The connecting the video telephony may include if the request for video telephony is received, receiving the command to connect video telephony from one of a plurality of glasses that correspond to the plurality of contents and connecting the video telephony, and the combining the image frames and outputting the result may include replacing video telephone screen with image frames of content corresponding to one of the plurality of glasses that transmits the command to connect video telephony.

The connecting the video telephony may include if the video telephony is connected, receiving video telephony data from a correspondent node which transmits the request for video telephony, photographing a front of the display unit, and constructing the video telephony screen using video data contained in the video telephony data and the photographed data.

The connecting the video telephony may include photographing a front of the display unit, detecting a user motion using the photographed data, and if detecting a preset user motion, connecting video telephony to a correspondent node which transmits the request for video telephony and shifting a direction of photography to a direction where the user motion is detected.

The connecting the video telephony may additionally include, if the request for video telephony is received, displaying a message to inquire about whether or not to perform video telephony.

The combining the image frames and outputting the result may include if the video telephony is connected in the second mode, replacing the video telephony screen with image frames of one of the plurality of contents that is being outputted.

If the video telephony is connected in the second mode, the display method may additionally include storing image frames of the content which replace the video telephony screen.

If the video telephony finishes, the display method may additionally include combining the stored image frames with image frames of contents other than the content that replaces the video telephony screen.

The outputting in the first mode or the second mode may additionally include receiving, from an external device, a message for requesting connection to transmit synchronous signals corresponding to one of the plurality of contents, and if the message for requesting connection is received, transmitting audio data corresponding to the one content to the external device on a preset frequency band.

If the message for requesting connection is received, the transmitting may include transmitting a response message to the external device as a response to perform operations to connect the glasses according to a communication protocol defined with respect to the external device.

If information indicating reception or non-reception of the audio data is received from the external device, the display method may additionally include displaying the received information in the form of a user interface (UI).

The information indicating reception or non-reception of the audio data may be recorded in a reserved area within a transmission packet which is transmitted during the operation to connect the display apparatus and the external device.

According to an aspect of another exemplary embodiment, there is provided an image processing method including: receiving a user signal, constructing image frames by processing a plurality of contents, respectively, outputting the image in a first mode in which only the image frames of one of the plurality of contents are displayed or in a second mode in which image frames of the plurality of contents are combined and displayed, generating synchronous signals to synchronize a plurality of glasses corresponding to the plurality of contents, respectively, in accordance with output timings of the plurality of contents, respectively, if in the second mode, generating information to notify initiation of the second mode, transmitting the generated synchronous signals to the plurality of glasses, if a request for video telephony is received through an external network, connecting video telephony, and if the video telephony is connected, combining image frames of at least one of the plurality of contents with image frames of the video telephony and outputting the result.

The generating the synchronous signals may include generating the synchronous signals according to a communication protocol defined with respect to the plurality of glasses, and recording information to notify initiation of the second mode in a reserved area within the synchronous signals.

Further, the image processing method may additionally include switching image frames of the content which is synchronized to at least one of the plurality of glasses according to the inputted user signal.

Further, if a user signal to restrict content switching is inputted through the inputter and then a user signal to switch the content is inputted, the switching the image frames may include restricting the content switching.

The switching the image frames may include restricting the content switching from when the user signal to restrict content switching is inputted through the inputter to when a release command is inputted.

The switching the image frames may include restricting the content switching with respect to a preset type of contents, while allowing the content switching with respect to the rest contents.

The switching the image frames may include restricting the content switching if the content includes a program screen with viewing restriction, an execution screen of game program, an execution screen of a messenger program, a mail check screen or a social network service (SNS) screen.

The image processing method may additionally include displaying a setting menu to set whether or not to restrict content switching, and the switching the image frames may include performing the content switching if a command to switch the content is inputted in a state that the content switching allowability is set through the setting menu, and restricting the content switching if the command to switch the content is inputted in a state that the content switching restriction is set through the setting menu.

The image processing method may additionally include photographing a front of the display apparatus, and detecting at least one from among the plurality of glasses using the photographed image, and the generating the synchronous signals may include, if the at least one glasses is detected, generating synchronous signals with respect to the detected glasses, and the transmitting the generated synchronous signals may include transmitting the synchronous signals corresponding to the detected glasses to the detected glasses.

Among the plurality of contents, the rest contents other than the content corresponding to the generated synchronous signals may be randomly selected.

The detecting may include perceiving a location of a light emitting element attached to the plurality of glasses included in the image photographed at the image capturer and detecting the glasses, among the plurality of glasses, that is located in a direction where the user signal is inputted.

The user signal may be a user touch manipulation signal moving in one direction on a touch pad remote control.

In order for one of the plurality of glasses to receive synchronous signals corresponding to one of the plurality of contents, the image processing method may additionally include transmitting a message for requesting connection to the display apparatus to receive synchronous signals corresponding to one of the plurality of contents, the at least one glasses receiving audio data from the display apparatus, and tuning to a preset frequency band and receiving audio data corresponding to the one content from among the plurality of contents, if a response message is received in response to the message for requesting connection, and transmitting information indicating reception or non-reception of the audio data to the display apparatus.

The transmitting the information indicating reception or non-reception of the audio data may include, according to a communication protocol defined with reference to the display apparatus, recording the information indicating reception or non-reception of the audio data in a reserved area within a transmission packet which is transmitted to connect to the display apparatus.

If connection to the display apparatus is completed and the synchronous signals are received, the image processing method may additionally include controlling on-timing of the first and second shutter glasses according to a display timing of the one content, based on the synchronous signals.

The image processing method may additionally include, at the one glasses, outputting audio data corresponding to the one content.

The image processing method may additionally include receiving, at the one glasses, a switching command to initiate a switching mode, and if the switching mode begins, receiving synchronous signals corresponding to another viewable contents of the plurality of contents and changing on-timing of the first and second shutter glasses sequentially.

The image processing method may additionally include, if the switching mode begins, transmitting a content switching command to the display apparatus to request synchronous signals corresponding to the another content.

The image processing may additionally include, if a select command is inputted through the inputter in a state that the switching mode is performed, finishing the switching mode and fixing on-timing of the first and second shutter glasses according to a display timing of content which is viewable at a timing of inputting the select command.

The image processing method may additionally include, if a content switching command is received from at least one of the plurality of glasses, switching so that content corresponding to the at least one glasses is switched to another content of the plurality of contents sequentially.

The switching may include, if the content switching command is received, changing arrangement pattern of the image frames of the respective contents so that the image frames of another content are located at a location of the image frames of the content corresponding to the at least one glasses.

The image processing method may additionally include, if the content switching command is received, transmitting synchronous signals corresponding to another content of the plurality of contents to the at least one glasses, and processing so that the at least one glasses is synchronized to the another content of the plurality of contents.

The image processing method may additionally include, if receiving a select command from the at least one glasses while the content corresponding to the at least one glasses is sequentially switched into another content of the plurality of contents, finishing switching operation so that the content at a time point of receiving the select command is viewable through the at least one glasses.

The switching may include performing the content switching operation as long as the content switching command is received from the at least one glasses, and if reception of the content switching command is ceased, finishing the switching operation thereby enabling the at least one glasses to view the content at a time point the reception of the content switching command is ceased.

According to an aspect of another exemplary embodiment, there is provided an image processing method of an image processing apparatus, the image processing method including: outputting image frames corresponding to at least one content; and combining the image frames corresponding to the at least one content with image frames of a video telephony and outputting the combined image frames.

According to aspects of one or more exemplary embodiments, a plurality of users may be able to view different contents from each other through one single display apparatus, and also check content viewed by the other users.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will be more apparent by describing certain exemplary embodiments with reference to the accompanying drawings, in which:
FIGS. 1 and 2 illustrate a content providing system according to an exemplary embodiment;
FIGS. 3 and 4 are views provided to explain a method for transmitting synchronous signals according to various exemplary embodiments;
FIG. 5 is a block diagram of a display apparatus according to an exemplary embodiment;
FIG. 6 is a block diagram of a signal processing unit according to an exemplary embodiment;
FIG. 7 is a block diagram of glasses according to various exemplary embodiments;
FIG. 8 is a block diagram of a display apparatus according to an exemplary embodiment;
FIG. 9 is a block diagram of glasses according to an exemplary embodiment;
FIG. 10 illustrates exterior of the glasses in FIG. 9 according to an exemplary embodiment;
FIGS. 11 and 12 illustrate a method for implementing the private mode and the public mode according to an exemplary embodiment;
FIGS. 13 and 14 illustrate a user interface unit screen related to setting of the modes of FIGS. 11 and 12 according to an exemplary embodiment;
FIGS. 15 and 16 are views provided to explain a method utilizing the photographing images according to another exemplary embodiment;
FIG. 17 is a view provided to explain a method for multiview switching according to an exemplary embodiment;
FIG. 18 is a flowchart provided to explain a display method according to an exemplary embodiment;
FIG. 19 is a conceptive view of a system which provides the content to a display apparatus and also provides video telephony function according to an exemplary embodiment;
FIG. 20 is a block diagram of a display apparatus according to an exemplary embodiment;
FIG. 21 is a flowchart provided to explain a video telephony method utilizing the display apparatus of FIG. 20;
FIG. 22 is a block diagram of a display apparatus which includes an interface unit and a video telephony processing unit according to an exemplary embodiment;
FIG. 23 is a flowchart provided to explain a process of video telephony by utilizing the display apparatus of FIG. 22 according to an exemplary embodiment;
FIG. 24 is a conceptive view provided to explain image frames of content replaced by image frames of video telephony screen, according to an exemplary embodiment;
FIG. 25 is a flowchart provided to explain a process of performing video telephony including an operation of displaying message inquiring as to whether or not to perform video telephony, according to an exemplary embodiment;
FIG. 26 is a block diagram of glasses according to various exemplary embodiments;
FIG. 27 is a conceptive view provided to explain viewing through glasses having polarized lenses when image frames of the horizontally and perpendicularly polarized content are displayed alternately, according to an exemplary embodiment;
FIG. 28 is a block diagram of a display apparatus according to an exemplary embodiment;
FIG. 29 is a flowchart provided to explain a video telephony method utilizing the display apparatus of FIG. 28;
FIG. 30 is a block diagram of a display apparatus additionally having an interface unit and a video telephony processing unit, according to various exemplary embodiments;
FIG. 31 is a flowchart provided to explain a process of performing video telephony using the display apparatus of FIG. 30;
FIG. 32 is a conceptive view illustrating image frames of video telephony screen replacing the image frames of the content according to an exemplary embodiment;
FIG. 33 illustrates a situation where the previously-viewed content is no longer displayed upon completing of the video telephony;
FIG. 34 is a conceptive view of storing in the storage unit image frames of the content replaced by the video telephony screen according to an exemplary embodiment;
FIG. 35 is a flowchart provided to explain a process of performing video telephony including the step of displaying message inquiring as to whether or not to perform the video telephony;
FIG. 36 is block diagram of glasses according to an exemplary embodiment;
FIG. 37 is a view provided to explain content view switching process according to an exemplary embodiment;
FIG. 38 is a view illustrating a situation where the content view switching operation is limited, according to an exemplary embodiment;
FIG. 39 is a flowchart of a content view switching method of a display apparatus according to an exemplary embodiment;
FIG. 40 is a flowchart provided to explain a method for switching content view at a display apparatus according to an exemplary embodiment;
FIG. 41 is a schematic view of a single view mode of a display apparatus according to an exemplary embodiment;
FIG. 42 is a schematic view of a multiview mode of a display apparatus according to an exemplary embodiment;
FIG. 43 is a block diagram of a display apparatus according to an exemplary embodiment;
FIG. 44 is a flowchart provided to explain a method for multiview switching according to an exemplary embodiment;
FIG. 45 is a block diagram of a display apparatus according to an exemplary embodiment;
FIG. 46 illustrates a structure of a transmission packet created based on a Bluetooth communication method according to an exemplary embodiment;
FIG. 47 is a block diagram of glasses according to an exemplary embodiment;
FIG. 48 is a flowchart provided to explain a method for multiview display of a display apparatus according to an exemplary embodiment;
FIG. 49 is a flowchart provided to explain a control method of glasses according to an exemplary embodiment;
FIG. 50 is a detailed block diagram of a display apparatus according to an exemplary embodiment;
FIG. 51 is a block diagram of glasses according to an exemplary embodiment;
FIG. 52 is a view provided to explain a structure of a transmission packet sent from glasses to a display apparatus according to an exemplary embodiment;
FIG. 53 is a detailed block diagram of glasses according to an exemplary embodiment;
FIG. 54 is a view provided to explain a user interface unit (UI) displayed on a screen of a display apparatus according to an exemplary embodiment;
FIG. 55 is a flowchart provided to explain a communication method of glasses according to an exemplary embodiment;
FIG. 56 is a flowchart provided to explain a content providing method of a display apparatus according to an exemplary embodiment;
FIG. 57 illustrates a system which provides a plurality of contents to a plurality of users according to an exemplary embodiment;
FIG. 58 is a block diagram of a display apparatus according to an exemplary embodiment;
FIG. 59 is a block diagram of glasses according to an exemplary embodiment;
FIG. 60 is a flowchart provided to explain a content selecting method according to an exemplary embodiment; and
FIG. 61 is a flowchart provided to explain a content switching method according to an exemplary embodiment.

### DETAILED DESCRIPTION OF EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of exemplary embodiments. Accordingly, it is apparent that exemplary embodiments can be carried out without those specifically defined matters. Also, well-known functions or constructions are not described in detail since they would obscure exemplary embodiments with unnecessary detail.

### Constitution of Display Apparatus 100

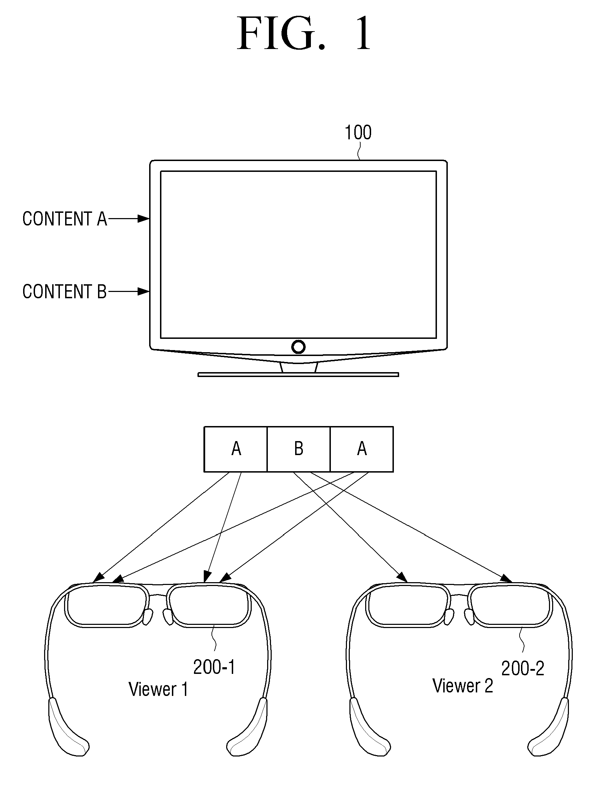

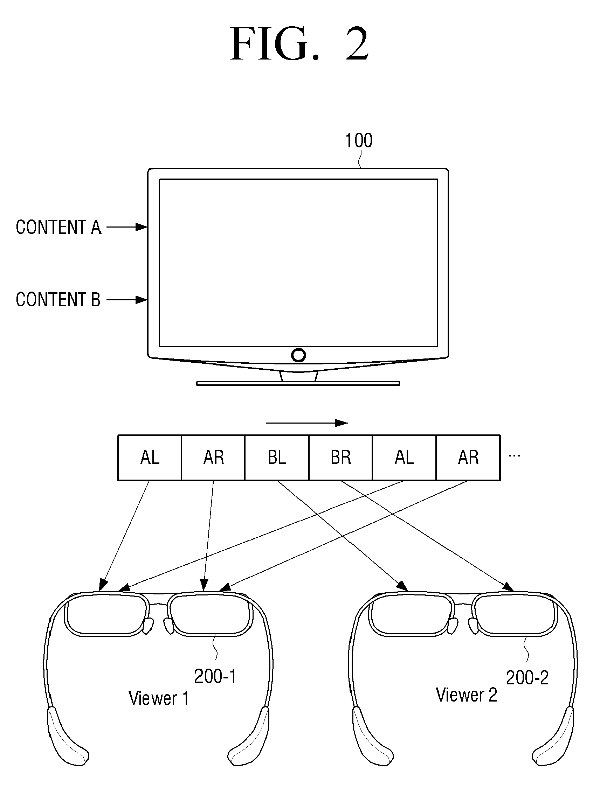

FIGS. 1 and 2 illustrate a content providing system according to an exemplary embodiment. Referring to FIGS. 1 and 2, the content providing system may include a display apparatus 100 and glasses 200.

The display apparatus 100 may combine and display a plurality of different contents, and each of a plurality of glasses 200-1, 200-2 may pass one of the content images that the display apparatus 100 may display. As used herein, 'combining and displaying the contents' refers to mixing the contents into image frames and displaying the image frames or displaying the contents alternately. As used herein, 'alternately displaying a plurality of contents' refers to displaying frames containing image information about different contents in an alternate order, by displaying the frame including image information of one content first and then displaying the frame including image information of another content, and so on.

FIG. 1 is a view provided to explain a method for providing a plurality of two dimensional (2D) contents according to an exemplary embodiment.

The display apparatus 100 may display a plurality of 2D contents (e.g., content A and content B) alternately, generate synchronous signals corresponding to glasses 1 200-1 and glasses 2 200-2 corresponding to content A and content B, respectively, and transmit the synchronous signals to glasses 1 200-1 and glasses 2 200-2.

If content A is displayed in accordance with the synchronous signals, the glasses 1 200-1 may turn on both the left-eye shutter glass and the right-eye shutter glass. If content B is displayed, the glasses 1 200-1 may turn off both the left-eye shutter glass and the right-eye shutter glass. Accordingly, viewer 1 wearing glasses 1 200-1 may watch content A synchronized with glasses 1 200-1 among the plurality of alternately-displayed contents A, B. Likewise, viewer 2 wearing glasses 2 200-2 may watch content B. Since alternately-displaying image frames of different contents may be performed at a high speed, and since the retina may keep the afterimage effect while closing the lens, the viewers see the natural movement in the images.

FIG. 2 is a view provided to explain a method for providing a plurality of three dimensional (3D) contents according to an exemplary embodiment.

Referring to FIG. 2, if the plurality of 3D contents include contents A, B, the display apparatus 100 may alternately display a plurality of 3D contents A, B, and also alternately display the left-eye image and the right-eye image of each 3D content.

By way of example, the display apparatus may display left-eye image AL and right-eye image AR of the 3D content A, and may alternately display left-eye image BL and right-eye image BR of the 3D content B. The glasses 1 200-1 may turn on the left-eye and the right-eye glasses respectively at a time point of displaying left-eye image AL and right-eye image AR of content A, and the glasses 2 200-2 may turn off the left-eye and the right-eye glasses at a time point of displaying left-eye image BL and right-eye image BR of content B.

The display apparatus 100 according to various exemplary embodiments may be implemented as various devices equipped with display units, such as TVs, mobile phones, PDAs, laptop computers, monitors, tablet PCs, electronic books, electronic frames, kiosks, etc. Furthermore, one or more exemplary embodiments may be applicable to an image processing apparatus (e.g., a set-top box, an optical storage media reproducing apparatus, a storage device, etc.) which outputs content image signals to an external display device or panel.

Viewer 1 wearing glasses 1 200-1 may watch only the 3D content A from among the plurality of 3D contents A, B and viewer 2 wearing glasses 2 200-2 may watch only the 3D content B from among the plurality of 3D contents A, B.

The above description applies when the shutter glass method is implemented. Accordingly, for the polarization method, one of ordinary skill in the art may clearly understand that multiview mode is supported by implementing the glasses 1, 2 with directions of polarization aligned with those of a plurality of contents.

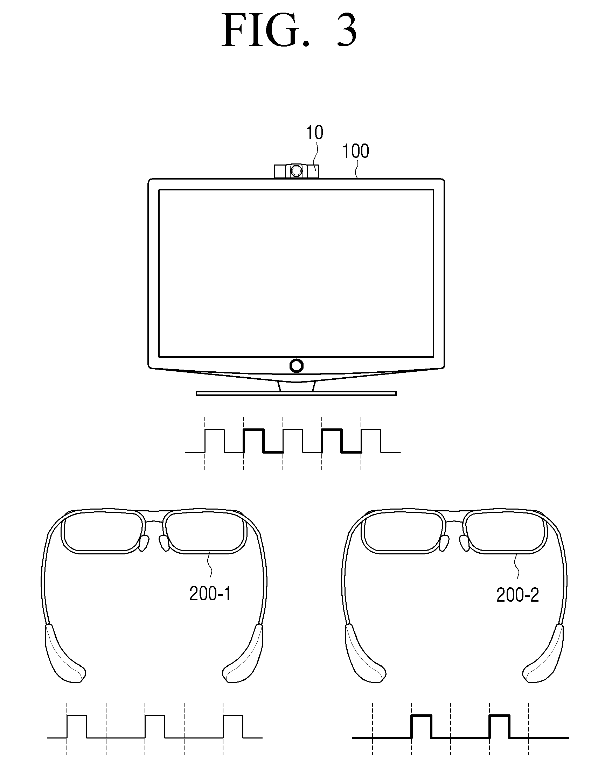

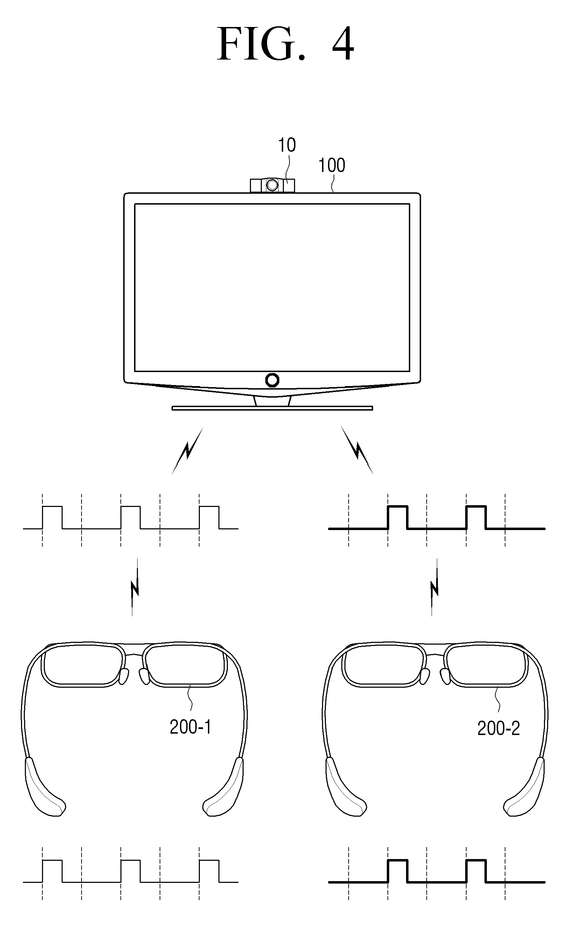

FIGS. 3 and 4 are views provided to explain a method for transmitting synchronous signal according to various exemplary embodiments.

Referring to FIG. 3, the display apparatus 100 may broadcast or multicast one signal generated by MUXing synchronous signals corresponding to glasses 1 200-1 and glasses 2 200-2. The glasses 200-1, 200-2 may operate to turn on or off the shutter glasses in synchronization with the synchronous signal corresponding to a user command (e.g., channel change command) from among the corresponding signals. The display apparatus 100 may further include a camera 10.

However, it is understood that one or more other exemplary embodiments are not limited to the above description. For example, referring to FIG. 4, the display apparatus 100 may unicast the synchronous signals corresponding to glasses 1 200-1 and glasses 2 200-2 to each of the glasses 200-1, 200-2 and the corresponding glasses 200-1, 200-2 may receive the corresponding synchronous signals.

Meanwhile, the synchronous signals may be radio frequency (RF) signals, infrared (IR) signals, etc., which will be described in detail below.

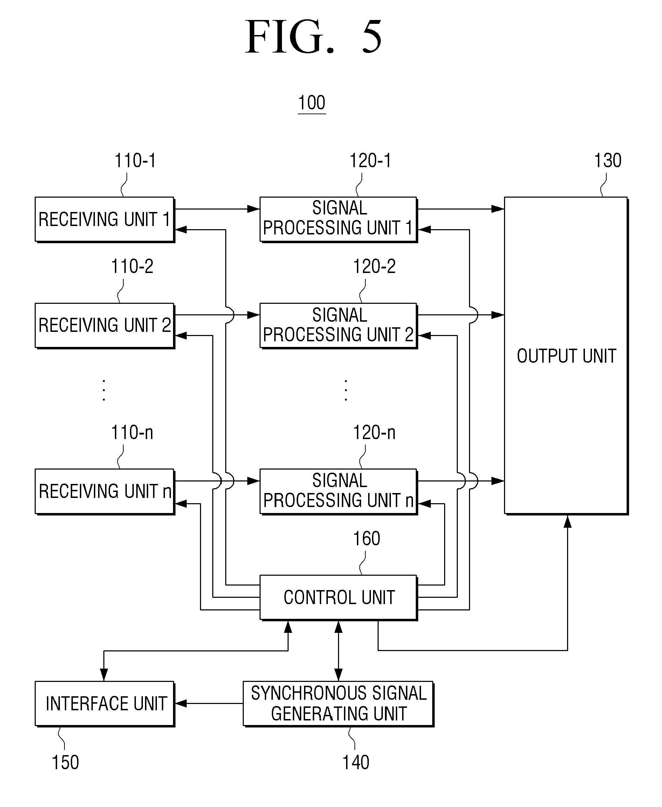

FIG. 5 is a block diagram of a display apparatus 100 according to various exemplary embodiments.

Referring to FIG. 5, the display apparatus 100 may include a plurality of receivers 110-1, 110-1, ... , 110-n, a plurality of signal processing units 120-1, 120-2, ... , 120-n (e.g., plurality of signal processors), an output unit 130 (e.g., outputter), a synchronous signal generating unit 140 (e.g., synchronous signal generator), an interface unit 150 (e.g., interface), and a control unit 160 (e.g., controller).

The plurality of receivers 110-1, 110-1, ... , 110-n may receive different contents. To be specific, the plurality of receivers 110-1, 110-1, ... , 110-n may receive the contents from a broadcasting station which transmits broadcast program content using a broadcast station, or from a web server which transmits content files using the Internet. Further, the plurality of receivers 110-1, 110-1, ... , 110-n may receive the contents from various recording medium playback apparatuses installed within the display apparatus 100 or connected to the display apparatus 100. The recording medium playback apparatus may play back the contents stored in various types of recording media such as a compact disc (CD), a digital versatile disc (DVD), a hard disk, a Blu-ray disk, a memory card, a universal serial bus (USB) memory, etc.

In an example where the contents are received from the broadcasting station, the plurality of receivers 110-1, 110-1, ... , 110-n may include a tuner, a demodulator, and an equalizer. Meanwhile, in an example where the contents are received from sources such as the web server, a plurality of receivers 110-1, 110-1, ... , 110-n may be implemented in the form of a network interface unit card. Further, in an example where the contents are received from various recording medium playback apparatuses, a plurality of receivers 110-1, 110-1, ... , 110-n may include an interface unit (e.g., interface) connected to the recording medium playback apparatus. By way of example, the interface unit may be an audio/video (AV) terminal, a COMP terminal, an HDMI terminal, etc.

Accordingly, the plurality of receivers 110-1, 110-1, ... , 110-n may be implemented in various forms.

Further, the plurality of receivers 110-1, 110-1, ... , 110-n may not necessarily receive the contents from only the same types of the sources, but from different types of sources.

The plurality of signal processing units 120-1, 120-2, ... , 120-n may perform various signal processing with respect to the contents received at the plurality of receivers 110-1, 110-1, ... , 110-n.

For example, the plurality of signal processing units 120-1, 120-2, ... , 120-n may process each content into an image frame format, and adjust the brightness of the processed contents.

Meanwhile, according to an exemplary embodiment, the display apparatus 100 may additionally include a multiplexer (MUX) which multiplexes image frames. The MUX may multiplex and output the image frames so that at least one of the image frames of the first content, the second content, ... , the n content is placed alternately.

The output unit 130 may display a plurality of contents according to the data outputted from the MUX. Accordingly, the output unit 130 may display the image frames of the contents so that at least one of the image frames of the contents can be arranged alternately.

The output unit 130 may output one content view in the single view mode (first mode) and may combine and output a plurality of content views in the multiview mode (second mode).

The output unit 130 may be a liquid crystal display panel, a plasma display panel, an Organic Light Emitting Diodes (OLED), a Vacuum Fluorescent Display (VFD), a Field Emission Display (FED), an Electro Luminescence Display (ELD), etc.

Alternately placing the image frames of the respective contents and displaying the combined image frames may be referred to as a 'multiview mode' ('second mode' or 'dual view mode'). In a normal mode ('single view mode' or 'first mode'), the display apparatus 100 may activate one of the plurality of receivers 110-1, 110-1, ... , 110-n and process the content. While operating in the normal mode, if the viewer selects the multiview mode (second mode), the display apparatus 100 may activate the other receivers and process the data in the above-explained manner.

Meanwhile, the content may be two-dimensional (2D) or three-dimensional (3D). The 3D content may refer to the content providing a feeling of depth by using multiview images which represent the same object from different points of view.

If a plurality of 3D contents are utilized, the output unit 130 may multiplex the left-eye and the right-eye images included in the 3D contents provided from a plurality of frame rate switchers 122-1, 122-2, ... , 122-n in a predetermined arrangement, and alternately arrange the images with the image frames of the other contents.

Accordingly, the left-eye image of the first content, the right-eye image of the first content, the left-eye image of the second content, the right-eye image of the second content, .. , the left-eye image of the n content, and the right-eye image of the n content may be placed consecutively. As a result, the viewer may watch the left-eye and the right-eye images of one content through the glasses 200.

Meanwhile, the display apparatus 100 may additionally include elements for providing audio data of each content to each viewer during operation in the multiview mode (second mode). Accordingly, the display apparatus 100 may include a demultiplexer for separating the video data and the audio data from the contents received from the receivers 110-1, 110-1, ... , 110-n, an audio decoder for decoding the separated audio data, a modulator for modulating the decoded audio data to different frequency signals, and an output unit (e.g., outputter) for transmitting the modulated audio data to the glasses. The audio data outputted from the output unit 130 may be provided to the viewer through output units such as an earphone equipped in the glasses. Since these units are not directly relevant to some aspects of the present exemplary embodiment, a detailed description thereof is omitted for the sake of brevity.

Meanwhile, if the contents include additional information such as an Electronic Program Guide (EPG) or subtitles, the demultiplexer may additionally separate the additional data from the content. The display apparatus 100 may add the processed subtitle or the like, which is processed at the additional data processing unit (e.g., additional data processor) to a displayable form, to the corresponding image frames.

The synchronous signal generating unit 140 may generate synchronous signals for synchronizing the glasses according to the respective display timing of the contents. That is, the synchronous signal generating unit 140 may generate synchronous signals for synchronizing the glasses according to display timings of the image frames of the respective contents in the multiview mode (second mode).

The interface unit 150 may transmit the synchronous signals to the glasses. The interface unit 150 may transmit the signals to the glasses in various manners.

By way of example, the interface unit 150 may be provided with a RF communication module for communicating with the glasses. The RF communication module may be, for example, a Bluetooth communication module. Accordingly, the interface unit 150 may generate a transport stream including the synchronous signals according to the Bluetooth communication standard, and transmit the streams to the glasses.

The transport stream may include time information to turn on and off the shutter glasses of the glasses in synchronization with the display timing of each content. To be specific, based on a reference time point set for each content, the transport stream may include an offset time to turn on the left-eye shutter glass of the glasses, an offset time to turn off the left-eye shutter glass, an offset time to turn on the right-eye shutter glass, and an offset time to turn off the right-eye shutter glass. As used herein, the term 'reference time point' may refer to the time when perpendicular synchronous signals are generated in the image frames of each content, and the transport stream may also include the time information about the time point at which the perpendicular synchronous signals are generated.

To communicate on a Bluetooth communication mode, the interface unit 150 may perform pairing with the respective glasses. When the pairing finishes, the interface unit 150 may be registered with glasses information including, by way of example, a device ID (or address). The interface unit 150 may match the display timing of the content to the glasses information, and generate one transport stream according to the Bluetooth communication standard. By way of example, the interface unit 150 may match the image frames of the respective contents to glasses information of different glasses according to an order how the image frames of the contents are arranged. Accordingly, if two contents are provided alternately in the multiview mode (second mode), the interface unit 150 may match the image frames arranged in the first, the third, ... , the (n)th order to the information of the first glasses, while matching the image frames arranged in the second, the fourth, ... , (n+1)th order to the information of the second glasses (herein, n = odd number). Accordingly, upon receiving the synchronous signals, the glasses may find the display timing corresponding to the glasses information, and turn on or off the shutter glass according to the display timing. It is understood that one or more other exemplary embodiments are not limited to the above-described matching of a display timing to glasses information. For example, according to another exemplary embodiment, a user may manually select a display timing of a multicast or broadcast synchronous signal for a particular pair of glasses.

Although the interface unit 150 may communicate with the glasses according to the Bluetooth communication standard, it is understood that one or more other exemplary embodiments are not limited thereto. In addition to the Bluetooth communication, other communication methods such as the infrared communication or the Zigbee may be utilized, or various wireless communication methods that generate communication channel within short distance and transmitting and receiving the signals may be also utilized.

Meanwhile, the interface unit 150 may provide the glasses with infrared (IR) synchronous signals with different frequencies. In this example, the glasses may receive synchronous signal of a specific frequency and turn on or off the shutter glass according to a corresponding content display timing.

Based on the synchronization information, the interface unit 150 may transmit infrared signals repeating between first period of high level and second period of low level at predetermined time intervals to the glasses. The glasses may turn on a corresponding shutter glass in the first period of high level, and may turn off the corresponding shutter glass in the second period of low level. The synchronous signals may be generated in other various ways.

The control unit 160 may control the overall operation of the display apparatus 100. To be specific, the control unit 160 may control the plurality of receivers 110-1, 110-2, ... , 110-n, the plurality of signal processing units 120-1, 120-2, ... , 120-n, the MUX, the output unit 130, the synchronous signal generating unit 140, and the interface unit 150 to perform corresponding operations, respectively. Since the operations of the components of the display apparatus 100 are described above, repetitious explanation thereof will be omitted for the sake of brevity.

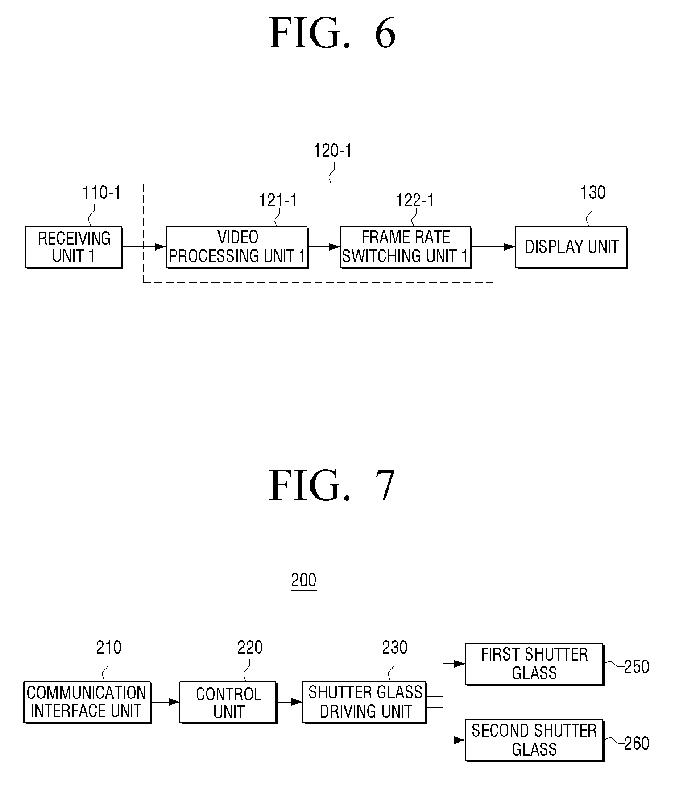

FIG. 6 is a block diagram of the signal processing unit 120 according to an exemplary embodiment.

Referring to FIG. 6, a certain signal processing unit 120-1 may include a video processing unit 121-1 (e.g., video processor) and a frame rate converting unit 122-1 (e.g., frame rate converter).

The video processing unit 121-1 may process the signals of the video data included in the received contents. To be specific, the video processing unit 121-1 may include a decoder for decoding the video data, and a scaler for scaling up or down the video data to the screen size of the output unit 130.

The video processing unit 121-1 may also convert the video data to the data format corresponding to the frame rate converting unit 122-1. By way of example, the video processing unit 121-1 may convert to the side-by-side format by connecting the image frames of the respective contents in a horizontal direction.

The frame rate converting unit 122-1 may convert the content frame rate provided from the video processing unit 121-1 to suit the multi-content display rate based on the output rate of the display apparatus 100. To be specific, if the display apparatus 100 operates at 60 Hz, the frame rate converting unit 122-1 may switch the content frame rate to n x 60 Hz.

### Constitution of the glasses

FIG. 7 is a block diagram of the glasses 200 according to various exemplary embodiments.

Referring to FIG. 7, the glasses 200 may interoperate with the display apparatus 100 which alternately displays a plurality of contents on an image frame basis, and may include a communication interface unit 210 (e.g., communication interface), a control unit 220 (e.g., controller), a shutter glass driving unit 230 (e.g., shutter glass driver), a first shutter glass 250, and a second shutter glass 260.

The communication interface unit 210 may receive the synchronous signals from the display apparatus 100.

By way of example, if the communication interface unit 210 is the Bluetooth communication module, the display apparatus 100 may communicate with the display apparatus 100 according to the Bluetooth communication standard, and receive a transport stream including the synchronous signals. The transport stream may include time information to turn on or off the first shutter glass 250 and the second shutter glass 260 of the glasses 200 in synchronization with the respective display timings. The glasses 200 may turn on or off the shutter glass according to the display timing corresponding to the glasses 200.

Alternatively, the communication interface unit 210 may be an IR receiving module which may receive the synchronous signals in the form of infrared rays having a specific frequency. In this example, the communication interface unit 210 may include the time information for turning on or off the first shutter glass 250 and the second shutter glass 260 of the glasses 200 in synchronization with the display timing of one content from among the plurality of contents. It is understood that one or more other exemplary embodiments are not limited to a Bluetooth or IR communication, and may receive the synchronous signals using any other wireless communication method.

Meanwhile, the communication interface unit 210 may receive information about the image frame rate and the image frame cycle of the contents from the display apparatus 100.

The control unit 220 may control the overall operation of the glasses 200. To be specific, the control unit 220 may transmit the synchronized signals received from the interface unit 210 to the shutter glass driving unit 230 to control the shutter glass driving unit 230. That is, the control unit 220 may control the shutter glass driving unit 230 to generate driving signals so as to drive the first shutter glass 250 and the second shutter glass 260 based on the synchronous signals.

The shutter glass driving unit 230 may generate the driving signals based on the synchronous signals received from the control unit 220. To be specific, based on the synchronous signals, the shutter glass driving unit 230 may turn on the first shutter glass 250 and the second shutter glass 260 according to the display timing of one of a plurality of contents displayed on the display apparatus 100.

The first shutter glass 250 and the second shutter glass 260 may turn on or off according to the driving signals received from the shutter glass driving unit 230. To be specific, the first shutter glass 250 and the second shutter glass 260 may be simultaneously turned on when one of a plurality of contents is displayed, and may be simultaneously turned off when another content is displayed. Accordingly, the viewer wearing the glasses 200 may view one content.

Meanwhile, regarding the 3D contents, the first shutter glass 250 and the second shutter glass 260 may turn on or off alternately. According to the driving signals, the first shutter glass 250 may be turned on at a timing of displaying a left-eye image of one 3D content, and the second shutter glass 260 may be turned on at a timing of displaying a right-eye image.

### Switching the content view mode according to a change of viewer

A system and the method for switching a view mode in response to a change of a viewer viewing the display apparatus 100 according to various exemplary embodiments will be explained below.

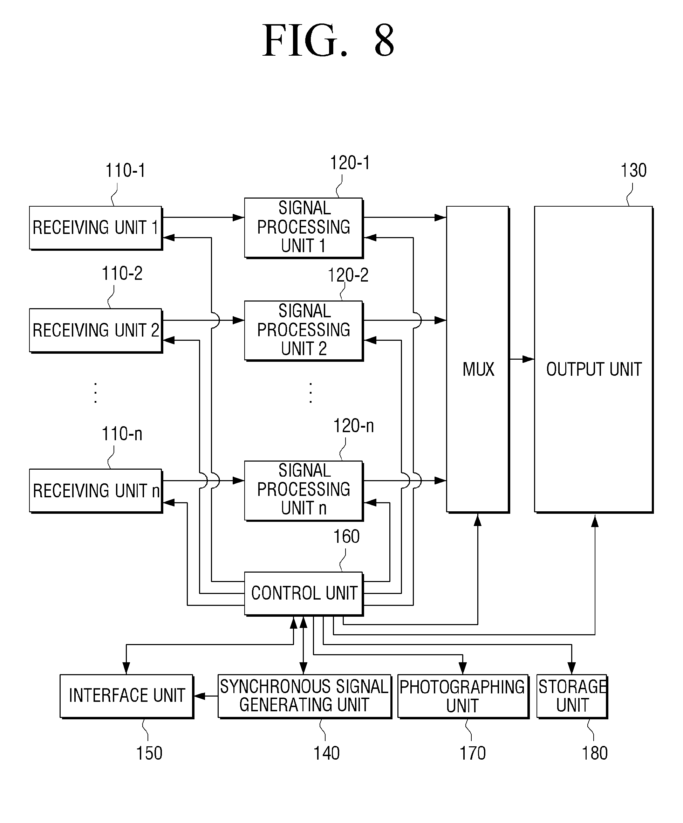

FIG. 8 is a block diagram of the display apparatus 100 according to an exemplary embodiment.

Referring to FIG. 8, the display apparatus 100 may include a receiving unit 110 (e.g., receiver), a signal processing unit 120 (e.g., signal processor), a multiplexer (MUX), an output unit 130 (e.g., outputter), a control unit 160 (e.g., controller), an interface unit 150 (e.g., interface), a synchronous signal generating unit 140 (e.g., synchronous signal generator), a photographing unit 170 (e.g., photographer or image capturer), and a storage unit 180 (e.g., storage).

Since the receiving unit 110, the signal processing unit 120, the MUX, the output unit 130, the control unit 160, the interface unit 150, and the synchronous signal generating unit 140 are explained above, repetitious explanation thereof will be omitted for the sake of brevity. Hereinbelow, the photographing unit 170, the storage unit 180, and the control unit 160 will be described.

The photographing unit 170 may capture images.

The photographing unit 170 may be a general camera, and may, although not necessarily, be implemented to include at least one of a depth camera and a color camera. As used herein, the depth camera may perceive a user, the distance to the remote control device, or the user motion, and the color camera may perceive the face and the hand motion of the user. Meanwhile, the depth camera may be implemented to adjust the photographing image by the depth, in other words, to adjust the photographing image based on the distance from the camera. The adjustment may be made in the form of enlarging and reducing the image and the changing the resolution.

Meanwhile, while the photographing unit 170 may be an internal camera installed within the display apparatus 100, it is understood that one or more other exemplary embodiments are not limited thereto. Accordingly, the photographing unit 170 may be a photographing device 10 (e.g., an external camera) equipped outside the display apparatus 100 (see FIG. 1).

For the convenience of this description, it will be assumed that the photographing device 10 is equipped separately outside the display apparatus 100.

The control unit 160 may detect a change of the viewer viewing the display apparatus 100 by utilizing photographed data captured at the photographing unit 170, and control the output unit 130 to operate in the single view mode (first mode) or in the multiview mode (second mode) to respond to the change of the viewer.

To be specific, the control unit 160 may analyze the data photographed at the photographing unit 170, and determine if the viewer moves in or out of the photographed area, or if the viewer moving into the photographed area is the one who has previously moved out.

Accordingly, if the viewer moves in while the output unit 130 operates in the single view mode (first mode), the control unit 160 may control the output unit 130 to switch to the multiview mode (second mode).

Further, if the viewer moves out while the output unit 130 operates in the multiview mode (second mode), the control unit 160 may control the output unit 130 to switch to the single view mode (first mode).

The storage unit 180 may be a recording medium storing therein programs used to operate the display apparatus 100, and may be a memory, a hard disk drive (HDD), etc. By way of example, the storage unit 180 may store a program to implement the control unit 160, and may temporarily store data generated as the control unit 160 operates, or other reference data.

Meanwhile, if the control unit 160 determines that the viewer moves out while the output unit 130 operates in the multiview mode (second mode), the control unit 160 may control the output unit 130 to switch to the single view mode (first mode) and store the corresponding content view environment information in the storage unit 180.

Further, if the control unit 160 determines that the previous viewer moves back in, the control unit 160 may reconstruct the content view according to the viewer by utilizing the content view viewing environment information stored in the storage unit 180, and control the output unit 130 to output a plurality of content views including the reconstructed content view. The control unit 160 may determine whether the viewer moving in is the one who has previously moved out referring to the image photographed at the photographing unit 170.

To determine if the previous viewer comes back in, face recognition technology may be applied to the photographed image. The face recognition technology involves constructing a database of previous face photos, and determining whether an image captured through the camera is identical to a previous face photo by comparing the captured image with the database. The face recognition technology may be implemented mainly in two steps of detecting a face and perceiving the face. Detecting the face may utilize knowledge-based methods, feature-based methods, or template-matching methods. Perceiving the face may utilize 2D algorithms or 3D algorithms.

Meanwhile, the content view viewing environment information may include contents type (channel numbers), volume, screen mode, backlight, brightness, sharpness, black tone, contrast, color, tint, location and size of subtitle, etc.

However, the environment information of the 2D image contents and the environment information of the 3D image contents may include different information from each other. By way of example, the environment information of the 2D image may include backlight, brightness, sharpness, contrast, color, and tint. The environment information of the 3D image may additionally include depth or viewpoint. Additionally, the environment information may include equalizer information (balances, amplifying level per frequency band), SRS TruSurround HD, or volume.

Meanwhile, the storage unit 180 may store the viewing environment information of the content view set by the individual viewers.

If the control unit 160 detects an addition of a new viewer based on the image captured at the photographing unit 170, the control unit 160 may arrange a new content view by utilizing the content view viewing environment information corresponding to the new viewer among the viewing environment information stored in the storage unit 180, and control the output unit 130 to output a plurality of content views including the new content view.

Further, the control unit 160 may set the display mode as the public mode or the private mode in response to the user command transmitted from the glasses. However, it is understood that one or more exemplary embodiments are not limited thereto. For example, the user command may be transmitted by a remote controlling device such as a remote control unit (e.g., remote controller).

To be specific, if the public mode is set, the control unit 160 may switch the mode between the multiview mode (second mode) and the single view mode (first mode) in response to the change of the viewer. In the public mode, the content view may be switched freely without restriction.

Further, if the private mode is set, the control unit 160 may restrict the mode switching between the multiview mode (second mode) and the single view mode (first mode) irrespective of whether there is a change of viewer, and control so that the operation is performed fixedly in the multiview mode (second mode). By way of example, in the private mode, even if a new viewer moves in in the single view mode (first mode), the mode may be maintained in the single view mode (first mode) so that new viewer may not view the contents.

Meanwhile, while the private mode and the public mode are explained above with reference to the multiview mode (second mode) and the single view mode (first mode) which are implemented in response to the change of the viewer, according to another exemplary embodiment, the private mode and the public mode may be implemented separately from the multiview mode (second mode) and the single view mode (first mode).

In another exemplary embodiment, if the specific content view is set to be in the private mode, even when another viewer's glasses connect to the display apparatus 100, synchronous signals of the content view set in the private mode at corresponding glasses may be blocked from the other viewer's glasses. This will be further described below.

Meanwhile, the photographing unit 170 may capture IR signals outputted from the remote controlling device.

In the above example, if the control unit 160 receives a user command from the remote controlling device while operating in the multiview mode (second mode), the control unit 160 may detect the viewer near the remote controlling device from the photographing image of the IR signals, and apply the user command directing to the content view corresponding to the detected viewer.

By way of example, if one remote control unit is utilized in the multiview mode and if the command directing to synchronize the contents is not inputted to the remote control unit, in one scenario, the display apparatus 100 may determine the viewer from among a plurality of viewers that inputs the command (i.e., signals of the remote control unit), and apply the user command directing to the content view corresponding to the determined viewer. It is possible to detect the user who inputs user command by analyzing the remote controlling device (not illustrated) and the photographed image of the user.

Although the private mode may be set through the glasses, one or more other exemplary embodiments are not limited thereto. For example, according to another exemplary embodiment, the private mode may be preset for certain content types. By way of example, a broadcast program screen having an age rating, a game program executing screen, a messenger program executing screen, a mail screen, or a Social Network Service (SNS) screen may be preset in the private mode. The information of contents set in the private mode may be registered in a memory within the display apparatus 100 or may be provided from exterior sources.

Further, if a new viewer is added in the single view mode so that the mode is switched to the multiview mode (second mode), the control unit 160 may synchronize the different contents to the left-eye glass and the right-eye glass of glasses of the new viewer so that the new viewer may select the desired content view.

Further, the control unit 160 may detect the change of the viewer from the image photographed at the photographing unit 170 and control a plurality of content views in accordance with the detected change of the viewer.

By way of example, the control unit 160 may detect the left hand or the right hand from the photographed image, and control the different content views in accordance with the control motion of the left hand or the right hand. By way of example, if the control motion of the left hand is detected, the first content view may be controlled, and if the control motion of the right hand is detected, the second content view may be controlled.

Further, if the viewer of the content view moves his or her hand from left to right (or from right to left), the control unit 160 may switch the contents, in which recognizing hand shape may be implemented.

The glasses 200 for switching the view mode in accordance with the change of the viewer according to an exemplary embodiment will be described below.

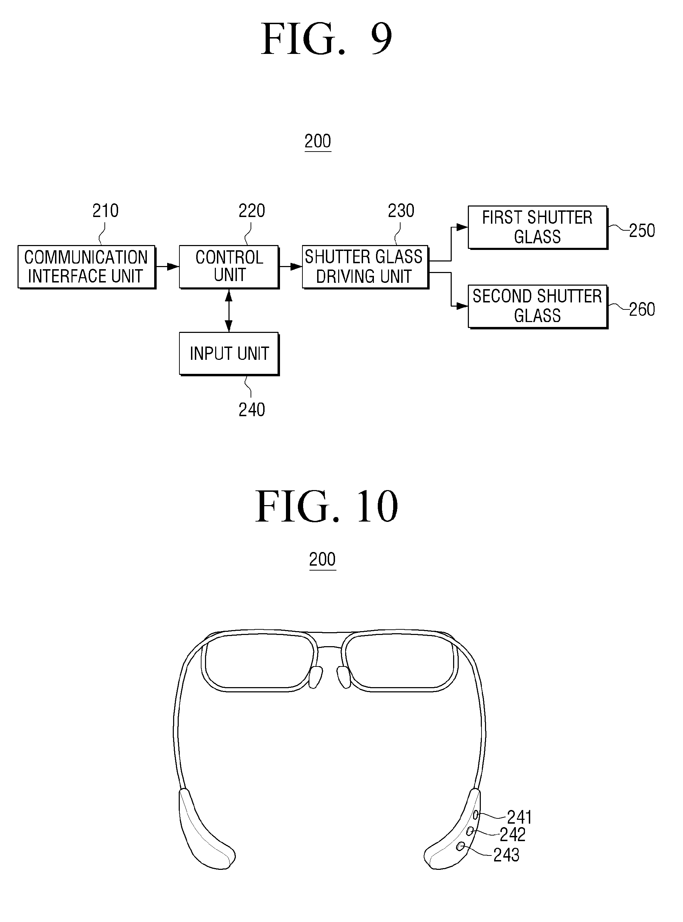

FIG. 9 is a block diagram of glasses 200 according to an exemplary embodiment.

The glasses 200 according to an exemplary embodiment may include a communication interface unit 210 (e.g., communication interface), a control unit 220 (e.g., controller), a shutter glass driving unit 230 (e.g., shutter glass driver), a first shutter glass 250, a second shutter glass 260, and an input unit 240 (e.g., inputter).

Since the communication interface unit 210, the shutter glass driving unit 230, the first shutter glass 250, and the second shutter glass 260 are explained above, only the input unit 240 and the control unit 220 will be described below for convenience of description.

The input unit 240 may receive various user commands.

To be specific, the input unit 240 may receive a pairing command directing to perform pairing with the display apparatus 100, a content view switching command, a mode setting command directing to set the private mode or the public mode, a 3D mode setting command, a dual view mode setting command, etc.

By way of example, the input unit 240 may be implemented as at least one of a touch sensor, a control button, a slide switch, etc.

If the content view switching command is inputted, the control unit 220 may control the shutter glass driving unit 230 to turn on and off the first shutter glass 250 and the second shutter glass 260 consecutively in accordance with the synchronous signals received from the display apparatus 100.

Further, if the private mode or the public mode is selected, the control unit 220 may control so that the user command related to the selected mode is transmitted to the display apparatus 100. The transport stream may include the information of the private mode or the public mode in accordance with the user command. Further, the transport stream may include the information of the 3D mode or the dual view mode in accordance with the user command.

FIG. 10 is a view provided to explain the exterior of the glasses 200 of FIG. 9 according to an exemplary embodiment.

Referring to FIG. 10, the glasses 200 according to an exemplary embodiment may include a plurality of input buttons 241, 242, 243.

The plurality of input buttons 241, 242, 243 may receive different user commands.

By way of example, the plurality of input buttons 241, 242, 243 may receive the pairing command directing to perform pairing with the display apparatus 100, the content view switching command, or the mode setting command directing to set the private mode or the public mode.

The input buttons are provided merely as an example and accordingly, in another embodiment, touch sensor or slide switch may be implemented. Further, the display apparatus 100 may provide the menu to receive the commands.

The private mode and the public mode according to an exemplary embodiment will be described below.

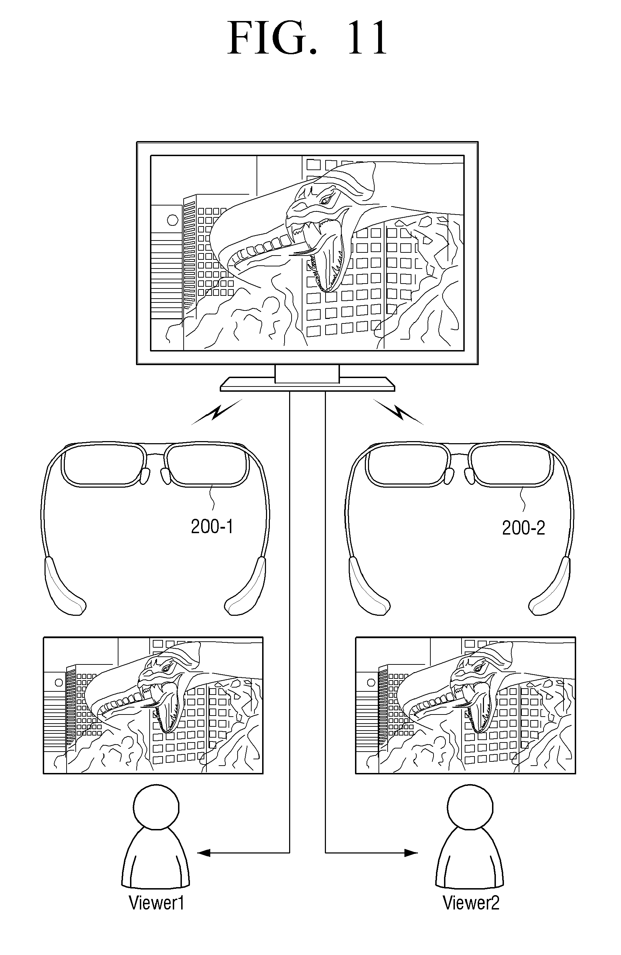

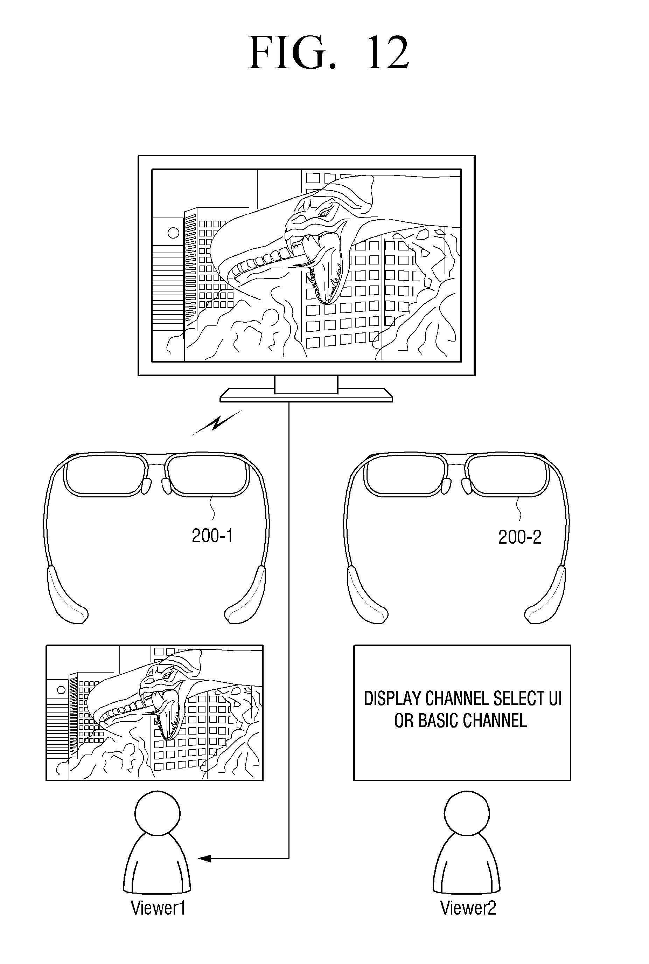

FIGS. 11 and 12 are views provided to explain the method of implementing the private mode and the public mode according to an exemplary embodiment.

Referring to FIG. 11, if the content is set as the public mode, the content is viewable to another viewer (viewer 2). The synchronous signals of the content may be transmitted to the glasses 200-1 that viewer 1 is wearing and to the glasses 200-2 that viewer 2 is wearing.

However, referring to FIG. 12, if the content is set as the private mode, another viewer (viewer 2) may not watch the content. For example, basic channels or a user interface (UI) to select new channels may be provided to viewer 2. In this example, the synchronous signals of the content may be blocked from transmission to the glasses 200-2 that another viewer (viewer 2) is wearing.

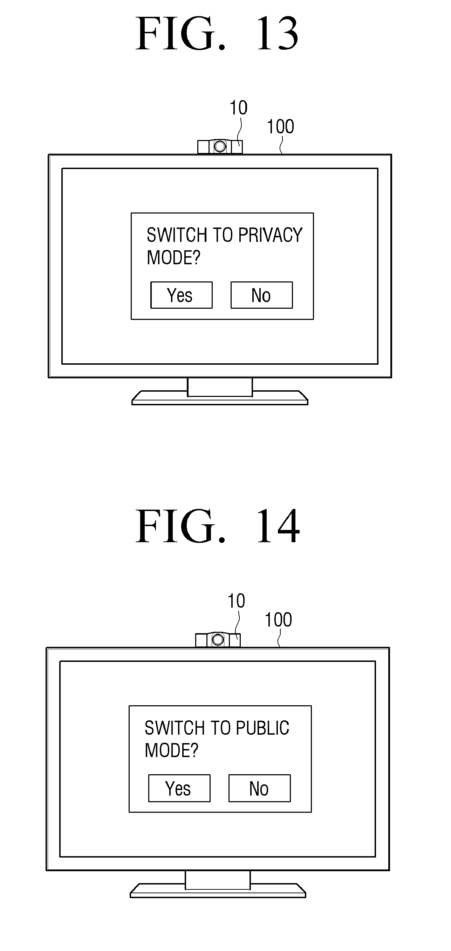

FIGS. 13 and 14 are views of the user interface unit relating to the setting of the modes of FIGS. 11 and 12.

If the mode setting command is inputted to the glasses 200-1 of viewer 1 who is viewing specific content, the UI screen requesting to confirm an intention to switch modes may appear on the screen (display unit) of the display apparatus 100 as illustrated in FIGS. 13 and 14. However, it is understood that one or more other exemplary embodiments are not limited thereto. For example, according to another exemplary embodiment, the mode may be switched in response to the mode setting command directly, i.e., without displaying a UI.

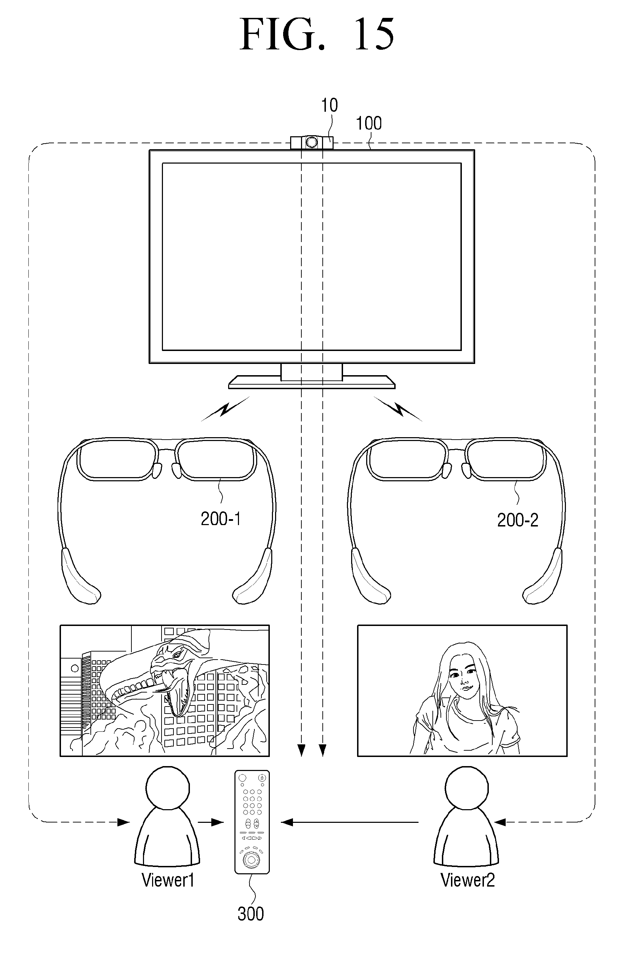

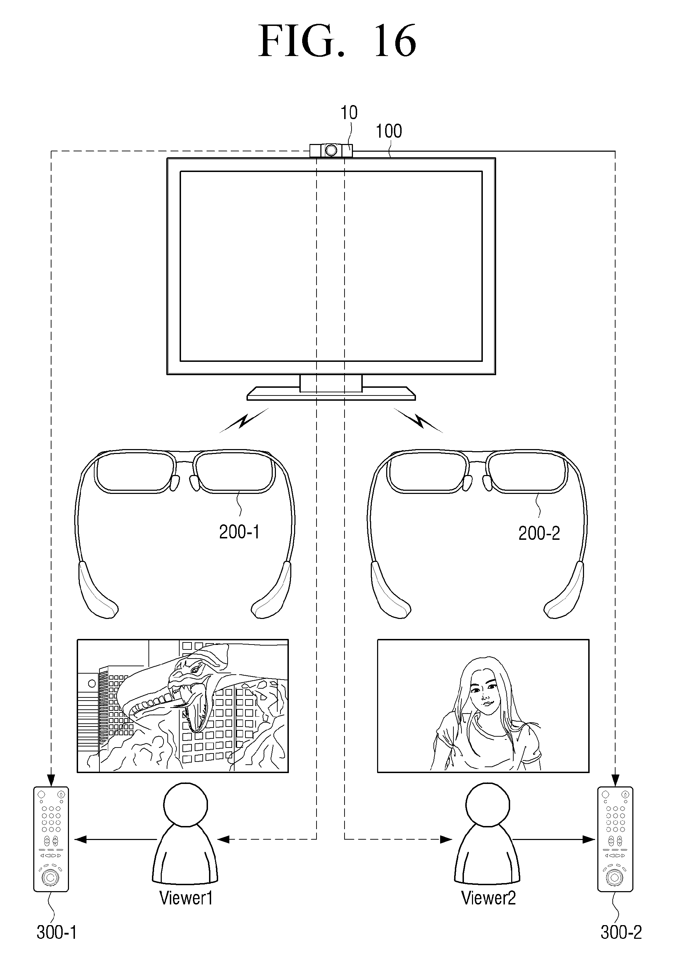

FIGS. 15 and 16 are views provided to explain a method for utilizing photographing images according to an exemplary embodiment.

Referring to FIG. 15, if a plurality of viewers (viewer 1, viewer 2) utilizes one remote controlling device 300 in the multiview mode (second mode), the viewer who inputs the remote control signals from the remote controlling device 300 may be determined based on the image photographed at the camera 10.

Alternatively, by detecting IR signals outputted from the remote controlling device 300 from the image photographed by the camera 10, the viewer sending the remote controlling signals may be determined. If RF communication is utilized, the remote controlling device 300 may transmit a part of the remote controlling signals such as ID signals with the RF signals.

Referring to FIG. 16, in the multiview mode (second mode), if a plurality of viewers each use individual remote controlling devices 300-1, 300-2, and if the remote controlling devices 300-1, 300-2 are not paired with the contents, the viewer sending the transmitted remote controlling signals may not be determined. Accordingly, by utilizing the method in FIG. 15, the viewer sending the remote controlling signals may be determined.

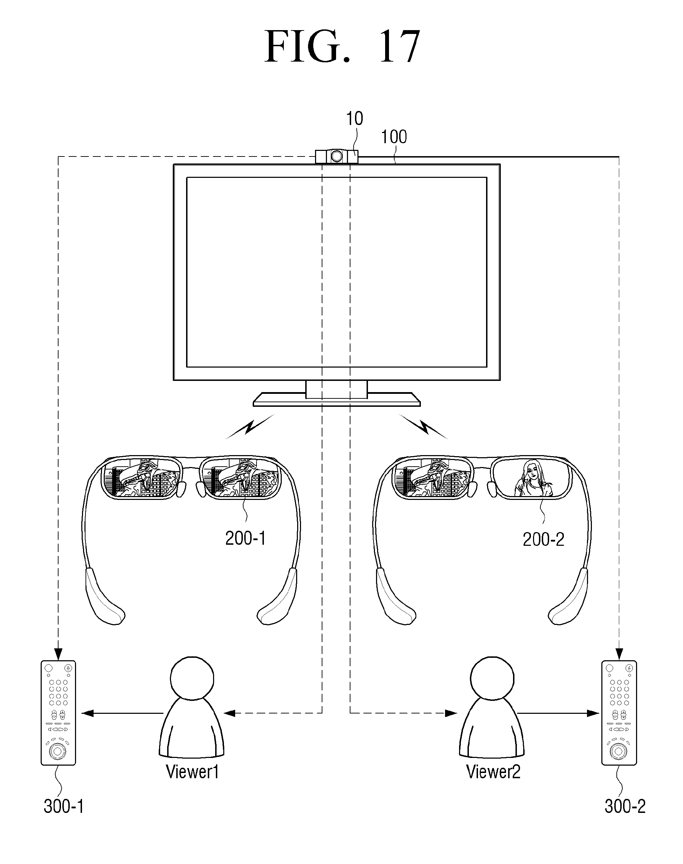

FIG. 17 is a view provided to explain a method for switching a multiview according to an exemplary embodiment.

Referring to FIG. 17, if a new viewer is added in the single view mode (first mode), the mode may be switched to the multiview mode (second mode) and the new viewer may be provided with at least two content views that he or she can watch. Accordingly, the new viewer may select the content. By way of example, the left-eye glass and the right-eye glass of the new viewer may be provided with different content views and the new viewer may select the desired content view from among the provided content views.

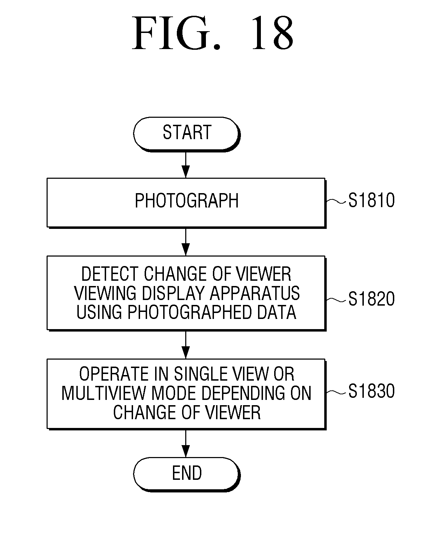

FIG. 18 is a flowchart provided to explain a display method according to an exemplary embodiment

Referring to FIG. 18, a display method is provided in a display apparatus which may output one content view in the single view mode (first mode), and combine and output a plurality of content views in the multiview mode (second mode). At operation S1810, the image capturing (e.g., photographing) is performed.

At operation S1820, a change of a viewer watching the display apparatus is detected by utilizing the photographing image.

At operation S1830, according to the detected change of the viewer, the display apparatus is operated in either the single view mode (first mode) or the multiview mode (second mode).

At operation S1830 in which the display apparatus is operated in either the single view mode (first mode) or the multiview mode (second mode), if a new viewer is detected in the single view mode (first mode), the mode may be switched to the multiview mode (second mode). If the viewer moves out in the multiview mode (second mode), the mode may be switched to the single view mode (first mode).

Further, if the viewer moves out in the multiview mode, the mode may be switched to the single view mode (first mode), and the viewing environment information of the content view corresponding to the viewer may be stored.

Further, if the viewer that previously moved out is detected again, the content view corresponding to the viewer may be reconstructed by utilizing the viewing environment information of the content view, and a plurality of content views including the reconstructed content view may be output.

Meanwhile, if the public mode is set, the switching between the multiview mode (second mode) and the single view mode (first mode) by the change of the viewer may be implemented. If the private mode is set, the switching between the multiview mode (second mode) and the single view mode (first mode) by the change of the viewer may not be implemented and the multiview mode (second mode) may be implemented without switching.

Further, the display apparatus may previously store the viewing environment information of the content view for each viewer.

At operation S1830 in which the display apparatus is operated in either the single view mode (first mode) or the multiview mode (second mode), if the new viewer is detected, a new content view may be constructed by utilizing the viewing environment information of the content view corresponding to the new viewer, and a plurality of content views including the new content view may be output.

Further, if IR signals output from a remote controlling device are photographed, and if a user command is received from the remote controlling device in the multiview mode (second mode), the viewer closest to the remote controlling device may be determined from the photographing image of the IR signals. The user command may be applied to the content view corresponding to the determined viewer.

Meanwhile, programs for implementing the above method may be stored and utilized in various types of the recording media.

To be specific, a code for implementing the method may be stored in various types of a terminal-readable recording medium such as Random Access Memory (RAM), flash memory, Read Only Memory (ROM), Erasable Programmable ROM (EPROM), Electronically Erasable and Programmable ROM (EEPROM), a register, a hard disk, a removable disk, a memory card, a USB memory, and an optical storage medium (e.g., CD-ROM, DVD, Blu-ray, etc).

### Video Telephony of the Display Apparatus 100

The system and the method for replacing the image frames of one content with the video telephony screen in a display apparatus 100 which outputs a plurality of contents will be described below.

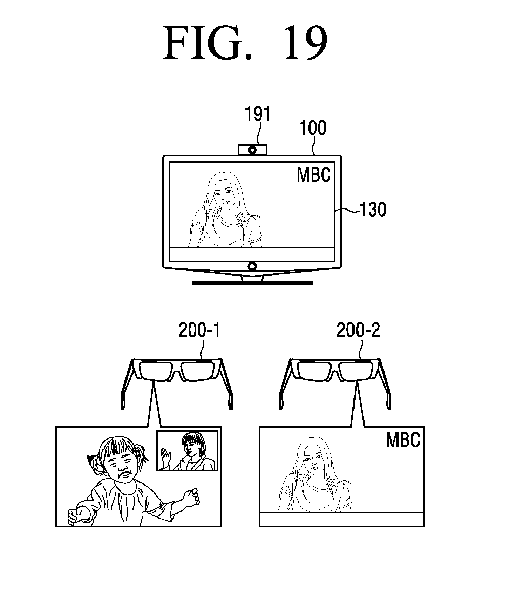

FIG. 19 is a conceptive view of a system which provides content to a display apparatus 100 and also provides a video telephony function according to an exemplary embodiment

Referring to FIG. 19, the image frames of one content may be replaced by a video telephony screen for implementation of the video telephony. To describe the exemplary embodiment of FIG. 19, units and implementations of the display apparatus 100 and the glasses 200 will be described below in detail.

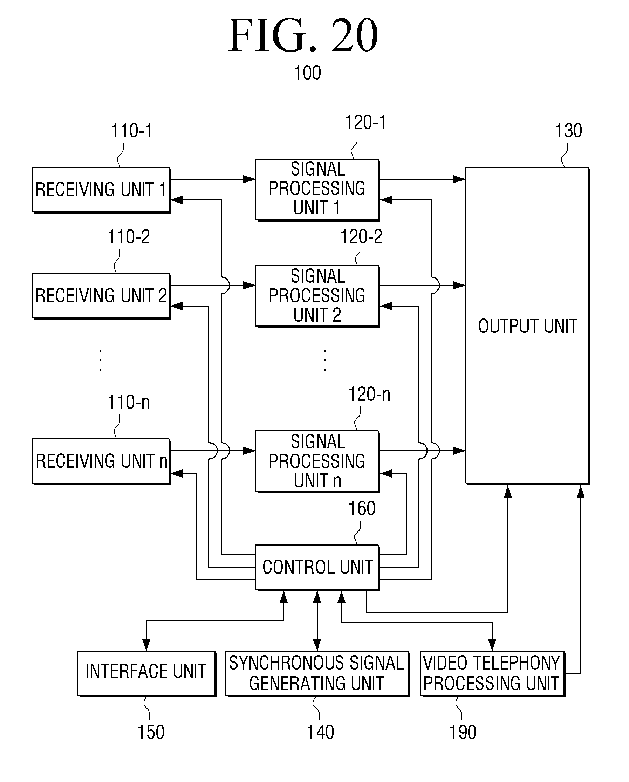

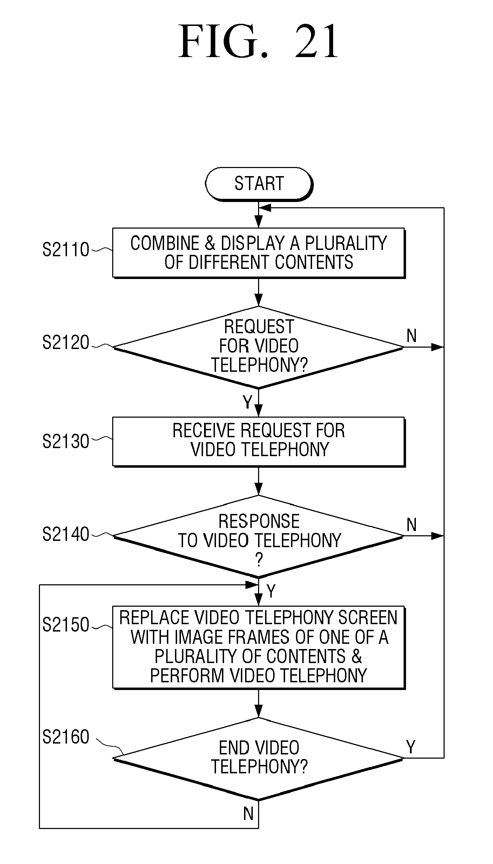

FIG. 20 is a block diagram of a display apparatus 100 according to an exemplary embodiment, and FIG. 21 is a flowchart provided to explain a video telephony method utilizing the display apparatus of FIG. 20.

Referring to FIGS. 20 and 21, the display apparatus 100 may include a receiving unit 110 (e.g., receiver), a signal processing unit 120 (e.g., signal processor), an output unit 130 (e.g., outputter), an interface unit 150 (e.g., interface), a synchronous signal generating unit 140 (e.g., synchronous signal generator), a video telephony processing unit 190 (e.g., video telephony processor), and a control unit 160 (e.g., controller).

The receiving unit 110, the signal processing unit 120, the output unit 130, the interface unit 150, and the synchronous signal generating unit 140 are described above. As such, repetitive descriptions thereof are omitted herein for convenience of description.

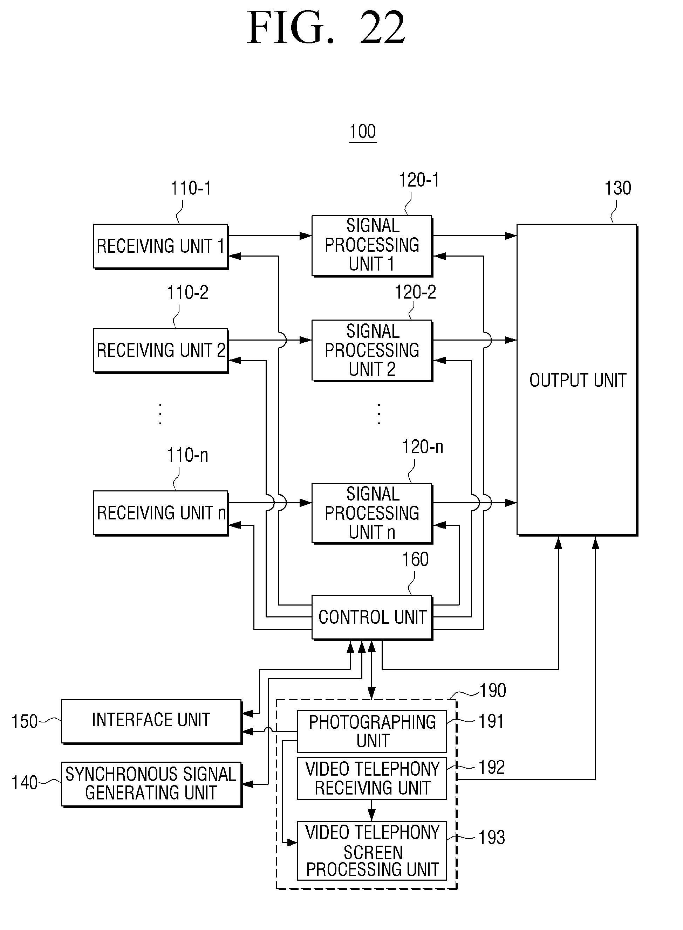

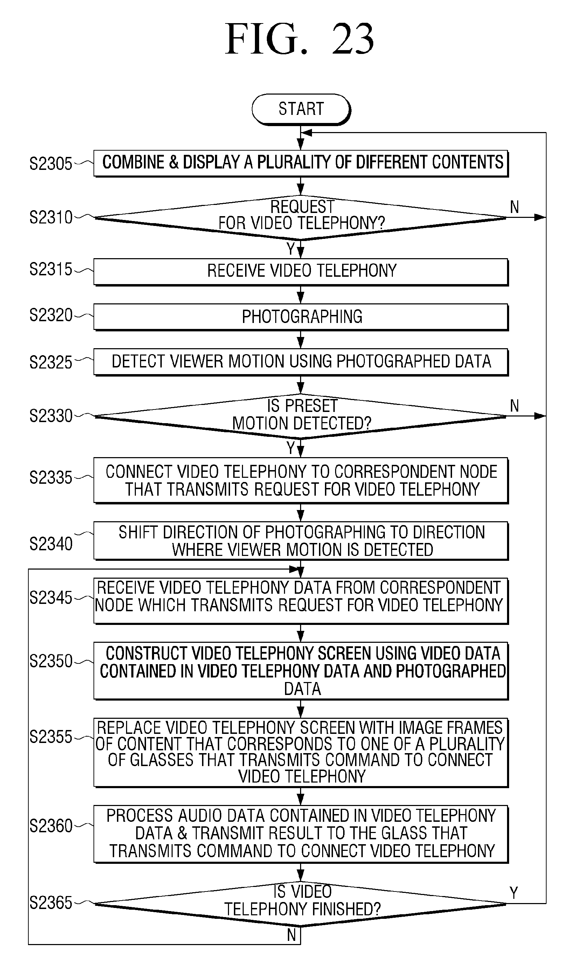

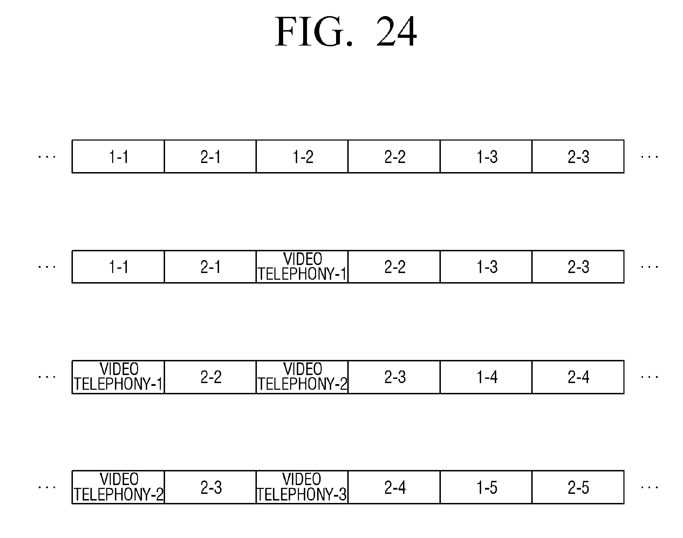

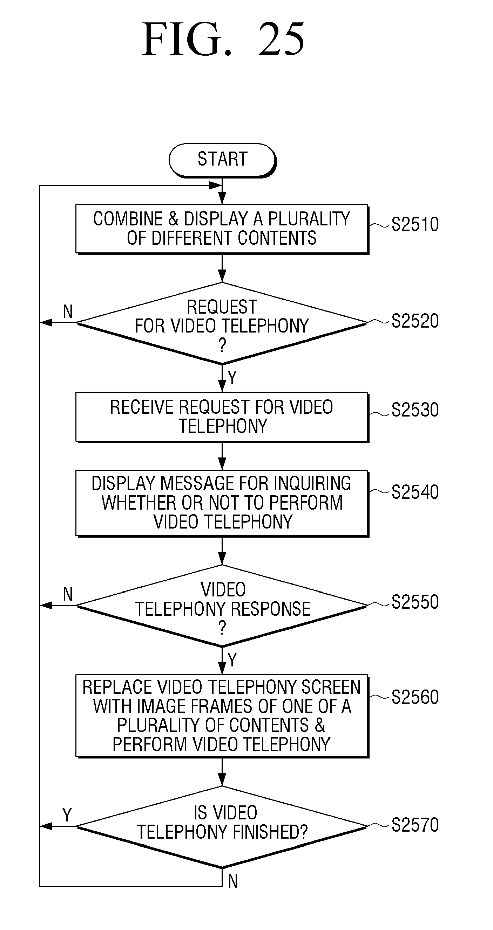

FIG. 22 is a block diagram of a display apparatus 100 which includes an interface unit and a video telephony processing unit according to another exemplary embodiment, FIG. 23 is a flowchart provided to explain a process of video telephony by utilizing the display apparatus 100 of FIG. 22 according to an exemplary embodiment, FIG. 24 is a conceptive view provided to explain image frames of content replaced by image frames of a video telephony screen, according to an exemplary embodiment, and FIG. 25 is a flowchart provided to explain a process of performing video telephony including an operation of displaying a message inquiring as to whether or not to perform video telephony, according to an exemplary embodiment.

Referring to FIGS. 22 and 23, the video telephony processing unit 190 may receive a request for video telephony and connect the video telephony. The 'video telephony' may refer to a method of telephone communication carried out by watching a counterpart on a display, and mainly categorized into circuit switch method utilizing the switch or the packet switch method. Regarding the packet switch method, voices may be transmitted through the IP network by utilizing the VolP technology. Also, other various protocols may be implemented.

The video telephony processing unit 190 may receive a video telephony connecting command, and may include a photographing unit 191 (e.g., photographer), a video telephony receiving unit 192 (e.g., video telephony receiver) which receives video telephony data, and a video telephony screen processing unit 193 (e.g., video telephony screen processor) which constructs a video telephony screen by utilizing screen data and photographed data.

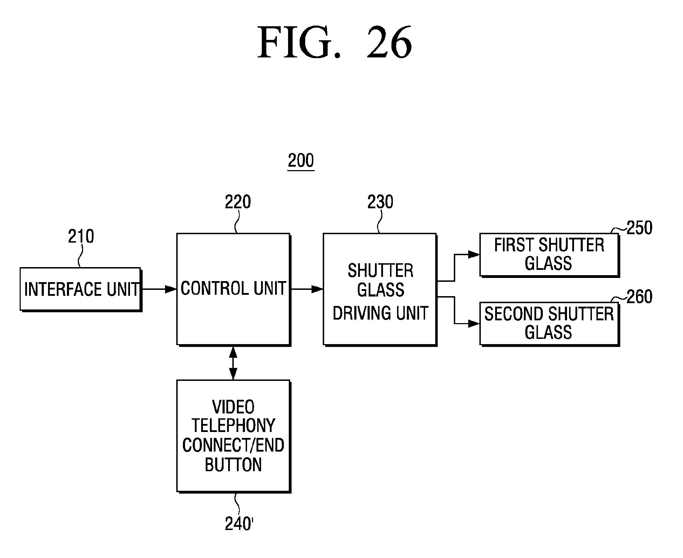

The interface unit 150 may receive the command directing to connect the video telephony. If the video telephony receiving unit 192 (to be explained below) requests the video telephony, the interface unit 150 may receive the command directing to connect the video telephony from one of a plurality of glasses 200 corresponding to a plurality of contents. The control unit 160 may control the video telephony processing unit 190 to connect the video telephony with a correspondent node requesting the video telephony. The interface unit 150 may be implemented as the button or the touch screen, or any types of technical means that can input the command directing to connect the video telephony to the display apparatus 100. Further, the interface unit 150 may be installed anywhere on the devices related to the display apparatus 100 such as the exterior casing of the display apparatus 100, the glasses 200, the remote control unit (not illustrated), etc. By way of example, the glasses 200 may be installed with a video telephony connect/disconnect button 240' (FIG. 26) on the glasses frames to connect or disconnect the video telephony. In case of a video telephony call, that is, if the request for video telephony is received at the display apparatus 100, the viewer may push the video telephony connect/disconnect button 240' on the glasses 200 and input the command directing to connect the video telephony to the display apparatus 100. Further, to disconnect the video telephony, the viewer may push the video telephony connect/disconnect button 240' again.

The interface unit 150 may include a motion detecting unit which detects viewer motion by utilizing the data photographed at the photographing unit 191. The photographing unit 191 may be the same as the photographing unit 170 according to an embodiment. If the video telephony receiving unit 192 receives the request for video telephony, the photographing unit 191 may photograph and the motion detecting unit may detect the viewer motion by utilizing the photographed data.

The motion detecting unit may perceive the motion of an object placed outside of the display apparatus 100. To be specific, the motion detecting unit may sense the movement of the viewer who intends to utilize the display apparatus 100 and determine the viewer motion. To this purpose, the motion detecting unit may photograph the object such as the viewer within the photographing scope and analyze the photographed image data. In other words, the motion detecting unit may compare a first photographed image data with subsequent image data photographed for a predetermined time and trace the changes in the pixel values. By way of example, if the request for the video telephony is received and if the photographing unit 191 photographs for the predetermined time, the motion detecting unit may begin comparing the image data in each shot. If there is no changes in the pixel values of the photographed image data or if there are minimal changes within an error range, the motion detection may be determined as a failure. Meanwhile, if there is change in the pixel values of the photographed image data and the changes are greater than a critical point, it is considered that the motion is detected. The motion detecting unit may determine the direction, range, or location that the change is made to determine the viewer motion actually made by the viewer. If the determined motion is the same as a preset motion, the motion detecting unit may determine that a command corresponding to the motion is input, and the control unit 160 may cause the display apparatus 100 to operate appropriately according to the command.

The command corresponding to the motion may be the command directing to connect the video telephony. The control unit 160 may control the video telephony processing unit 190 to connect the video telephony with a correspondent node requesting the video telephony, and control the photographing unit 191 to shift the photographing direction toward the direction that the motion is detected.

The photographing unit 191 is provided to photograph images. For example, the photographing unit 191 may be installed on the display apparatus 100 to photograph the viewer wearing the glasses 200 and transmit the data to the motion detecting unit or to the video telephony screen processing unit 193. The photographing unit 191 may include any type of photographing device that can photograph a video or a still image. For example, the photographing unit 191 may encompass a digital camera, an infrared camera, a line camera, etc. Further, the photographing unit 191 may be provided as a part of, or as a separate unit from, the photographing unit 170.

The photographing unit 191 may transmit the photographed data for detecting the motion to the motion detecting unit. The photographed data may be the image data constituting the consecutive frames. The motion detecting unit may analyze the photographed data, trace the changes, and detect the viewer motion. If the motion is detected, the control unit 160 may control the video telephony processing unit 190 to connect the video telephony with the node transmitting the request for video telephony, and control the photographing unit 191 to shift the photographing direction to the direction the motion is detected. The video telephony processing unit 190 will be further described below. The principle of the photographing unit 191 shifting the photographing direction will be explained first. However, this is merely one of exemplary embodiments provided to assist in an understanding of exemplary embodiments, and it is understood that various technological methods for controlling the photographing of a photographing unit 191 are applicable in exemplary embodiments. The photographing unit 191 may be placed on the upper center of the display apparatus 100. Referring to FIG. 19, the photographing unit 191 may have a predetermined resolution and a photographing angle, and may photograph any object that comes within the photographing angle. If the motion detecting unit detects the video telephony connecting motion of the viewer, the control unit 160 may calculate the horizontal and perpendicular rotating angle and the distance to the viewer based on the detected position information in the photographing image. The control unit 160 may move and rotate the photographing unit 191 to the center point of the photographed image in the photographing unit 191, and push or pull the zoom to satisfactorily frame the viewer in the photographing screen, thereby ensuring image conditions suitable for the video telephony. By way of example, if the video telephony connecting motion is made at 15° to the right and 17° above the center point, the control unit 160 may cause the photographing unit 191 to move the motion point to be aligned with the center point of the photographed image in the photographing unit 191, and may pull the zoom of the photographing unit 191 to move the upper body of the viewer to be within the photographing screen of the photographing unit 191.

Further, the photographing unit 191 may transmit the photographed data to the video telephony processing unit 193 to construct the video telephony screen. The video telephony screen processing unit 193 may receive the photographed data from the photographing unit 191 and construct the video telephony screen. The video telephony screen processing unit 193 will be described below. Meanwhile, the photographed data of the photographing unit 191 may be transmitted to the video telephony device of another party on the video telephony connection through the display apparatus 100 by a transmitting unit (e.g., transmitter) of the display apparatus 100.

The video telephony receiving unit 192 may receive the video telephony data from the correspondent node requesting the video telephony, if the video telephony connects. The video telephony data may include any type of transmission and reception data for video telephony. Accordingly, voice data and image data may be transmitted in the form of a circuit signal or a packet signal. The video telephony data received from the video telephony receiving unit 192 may be transmitted to the video telephony screen processing unit 193 and utilized to construct the video telephony screen.

The video telephony screen processing unit 193 may utilize the video telephony data and the photographed data, and construct the video telephony screen. Accordingly, by utilizing the video telephony data received at the video telephony receiving unit 192 and the photographed data of the photographing unit 191, the video telephony screen may be constructed on the output unit 130. The control unit 160 may control the output unit 130 to display the video telephony screen on the output unit 130, which will be further described below. By way of example, in the video telephony screen, the talker on the video telephony may be displayed in a larger shape on the output unit 130 as illustrated in FIG. 19 and the viewer inputting the command directing to connect the video telephony may be displayed in a smaller size on the output unit 130.

The control unit 160 according to an exemplary embodiment will be described below.

First, if the command directing to connect the video telephony is input through the interface unit 150, the control unit 160 may control the video telephony processing unit 190 to connect to the correspondent node transmitting the request for the video telephony. The video telephony processing unit 190 may receive the request for video telephony from the correspondent node and begin the video telephony upon input of the video telephony connecting command. The control unit 160 may signal-process the video telephony data transmitted from the talker and transmit the processed data to the output unit 130. The control unit 160 may decode and modulate the audio data, and transmit the result to the display apparatus 100. The signal processing of the video telephony data may be implemented according to rules of reception of the signal processing unit 120 and output by using the signal processing unit 120 of the display apparatus 100, or processed at another separate signal processing unit (e.g., signal processor) and displayed.

Second, if the video telephony connects, the control unit 160 may control the output unit 130 to replace the image frames of the content corresponding to the glasses 200 transmitting the video telephony connecting command with the video telephony screen. If one of a plurality of viewers watching different contents from each other through the glasses 200 initiates video telephony with the talker, the output unit 130 may replace the image frames of the content that the viewer is watching with the image frames of the video telephony screen. By way of example, referring to FIG. 24, one viewer is watching the content having the image frame 1-1, the image frame 1-2, and the image frame 1-3, and another viewer is watching the content having the image frame 2-1, the image frame 2-2, and the image frame 2-3. The image frames of the contents that the viewer initiating the video telephony is watching may be replaced with the frames of the video telephony screen (video telephony image - 1, video telephony image - 2, video telephony image - 3). If the viewers are watching different contents from each other, the video telephony may be implemented just by swapping the image frame without changing the frame rate. However, a plurality of viewers wearing the glasses may be watching the same content. If the video telephony connects, the viewers can utilize the video telephony without affecting the viewing of the other viewers according to an exemplary embodiment. Specifically, the frame rate converting unit 122 may amplify or double the frame rate of the contents provided from the video processing unit 121. The output unit 130 may alternately place the image frame of the displayed contents and the image frame of the video telephony screen. Since the image frames of the video telephony screen may have the lower screen size and resolution than those provided from the display apparatus 100, additional adjusting and up-scaling may be implemented.

Third, if the motion detecting unit analyzes the photographed data and detects the predetermined viewer motion, the control unit 160 may control the video telephony processing unit 190 to connect the video telephony to the correspondent node transmitting the request for video telephony. The control unit 160 may control the photographing unit 191 to shift the photographing direction to the viewer motion. The implementation of the motion detecting unit, the video telephony processing unit 190 and the photographing unit 191 may be the same as above.

Fourth, if the request for video telephony arrives, the control unit 160 may control the output unit 130 to display a message asking as to whether or not to implement the video telephony. The motion detecting unit may detect the viewer motion and connect the video telephony. Also, the implementation or non-implementation of the video telephony may be inquired through the output unit 130. The viewer may connect the video telephony with the interface unit 150. According to an exemplary embodiment, the video telephony connect/disconnect button 240' may be installed on the glasses frame, as shown in FIG. 26. The inquiry about whether or not to implement the video telephony may be performed using various visual methods. However, other recognition methods may be utilized in other exemplary embodiments.

Referring to FIGS. 21, 23 and 25, the video telephony method according to an exemplary embodiment will be described below. The overall process will be explained rather than detailed operations of the specific components which are already explained above.

When a plurality of viewers are watching different contents from each other through the glasses 200 (operations S2110, S2305, S2510), if the video telephony is requested at operations S2120-Y, S2310-Y, and S2520-Y, the request may be received at operations S2310, S2315, and S2530. The viewer watching the content through the glasses 200 may answer the request for video telephony, and the display apparatus 100 may display the message asking as to the video telephony implementation or non-implementation at operation S2540. The answer of the viewer may be inputted as the command directing to connect the video telephony through the interface unit 150 at operation S2320-Y, the method for detecting the motion by utilizing the photographing image of the viewer may be utilized at operation S2330. If the command directing to connect the video telephony is input through the interface unit 150 or the corresponding motion is detected at operation S2335-Y, the video telephony may begin at operation S2335. When the video telephony begins, the image frame of one content of a plurality of contents may be replaced with the video telephony screen at operations S2150, S2355, and S2560. Accordingly, the other viewers watching the different contents may keep watching the contents without a problem. However, if a plurality of viewers are watching one common content, the content and the video telephony screen may be alternately placed and displayed by adjusting the frame rate. Meanwhile, if the video telephony begins by detecting the viewer motion, the photographing unit 191 may shift the photographing direction to a direction the motion is detected, and appropriate video telephony screen is constructed at operation S2340. If the video telephony begins, the video telephony screen may be constructed by utilizing the video telephony data transmitted from the correspondent node and the photographed data of the photographing unit 191 at operations S2345 and S2350. Further, the voice data included in the video telephony data may be processed and transmitted to the glasses 200 sending the command directing to connect the video telephony at operation S2360. If the video telephony is completed, the previous content may be displayed again at operations S2160-Y, S2365-Y, and S2570-Y.

The glasses 200 according to an exemplary embodiment will be described below.

FIG. 26 is a block diagram provided to explain the glasses 200 according to an exemplary embodiment. To be specific, the glasses 200 of FIG. 26 may interoperate with the display apparatus 100 alternately displaying a plurality of contents on the image frame basis, and include the video telephony connect/disconnect button 240'.

The video telephony connect/disconnect button 240' (or buttons) may connect or disconnect the video telephony. If the video telephony call is made, in other words, if the display apparatus 100 receives the request for video telephony, the viewer may push the video telephony connect/disconnect button 240' on the glasses 200 and input the command directing to connect the video telephony to the display apparatus 100. Further, to disconnect the video telephony, the viewer may push the video telephony connect/disconnect button 240' again.

Based on the synchronous signals, the control unit 220 (e.g., controller) may control the shutter glass driving unit 230 (e.g., shutter glass driver) to generate the driving signals to drive the first shutter glass 250 and the second shutter glass 260. If the video telephony connects while a plurality of viewers are watching different contents, another driving process may not be necessary, since the different contents are already combined and displayed on the display apparatus 100. However, if the video telephony connects while the display apparatus 100 is in a mode other than the multiview mode, i.e., if the video telephony connects while the viewers are watching the same content, the display apparatus 100 may switch the mode to the multiview mode and the synchronizing the display apparatus 100 may be performed. The control unit 220 may drive the first shutter glass 250 and the second shutter glass 260 according to the synchronous signals transmitted from the display apparatus 100. However, if the video telephony disconnects and the viewers watch the same content again, the control unit 220 may stop the first shutter glass 250 and the second shutter glass 260.

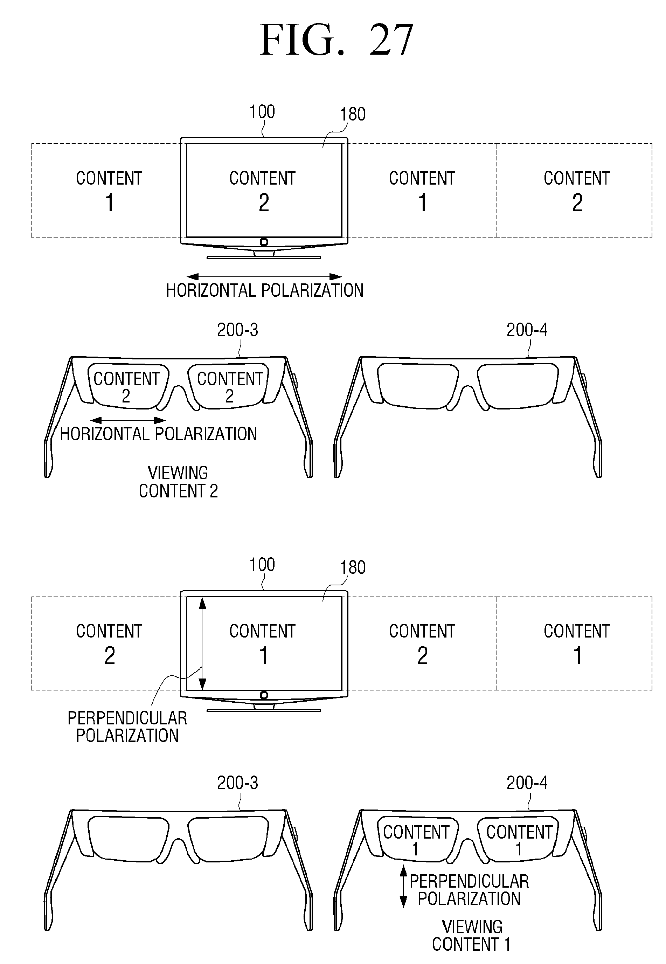

Referring to FIG. 27, a polarized method when alternately displaying the contents or combining and displaying the contents will be described below.

The display apparatus 100 may additionally include a polarization member 180. The polarization member 180 may include a liquid crystal layer (not illustrated) to polarize the image. The display apparatus 100 may control the liquid crystal layer according to horizontal or perpendicular lines by utilizing the driving voltage at different levels and polarize the image of the content sent from the display apparatus 100 to a predetermined direction. The polarized content image may be alternately placed and displayed. By way of example, one content may be polarized horizontally and displayed, another content may be polarized perpendicularly and displayed, and the polarized processing may be repeated. The viewer may watch the image through the glasses 200-3 having the horizontal polarized lens and the glasses 200-4 having the perpendicular polarized lens. According to another exemplary embodiment, the different content image information may be included in the different areas of one image frame. The areas may be polarized to the different directions and displayed. The viewer may watch the content through the glasses 200-3, 200-4 having the same directional polarized lenses.

The glasses 200-3, 200-4 utilized to watch the display apparatus 100 may include the polarized lens having the polarized direction of the content. Since the glasses may pass the polarized image, the viewer may watch the desired content. Since the glasses 200-3, 200-4 may not need another synchronizing of the display apparatus 100, the cost may be saved and the flickering in the synchronizing process may decreased. FIG. 27 illustrates that the viewers may watch the image through the glasses 200-3, 200-4 including the proper polarized lens when the display apparatus 100 alternately displays the image frame of the content polarized horizontally and perpendicularly.

If the system is utilized in the video telephony, one of a plurality of polarized images may be replaced with the video telephony screen. The display apparatus 100 may receive the video telephony data and polarize the data to the specific direction while alternately displaying, or polarize the image of the area corresponding to the video telephony screen in the display screen while combining and displaying.

Accordingly, a plurality of viewers may watch the different contents with one display apparatus 100 and utilize the video telephony without affecting the viewing of the other viewers.

### Storing the image frame replaced with the video telephony

A system and the method for storing the image frames replaced with the video telephony, in other words, storing the image content before the video telephony and displaying the stored image frames after the video telephony, will be described below.

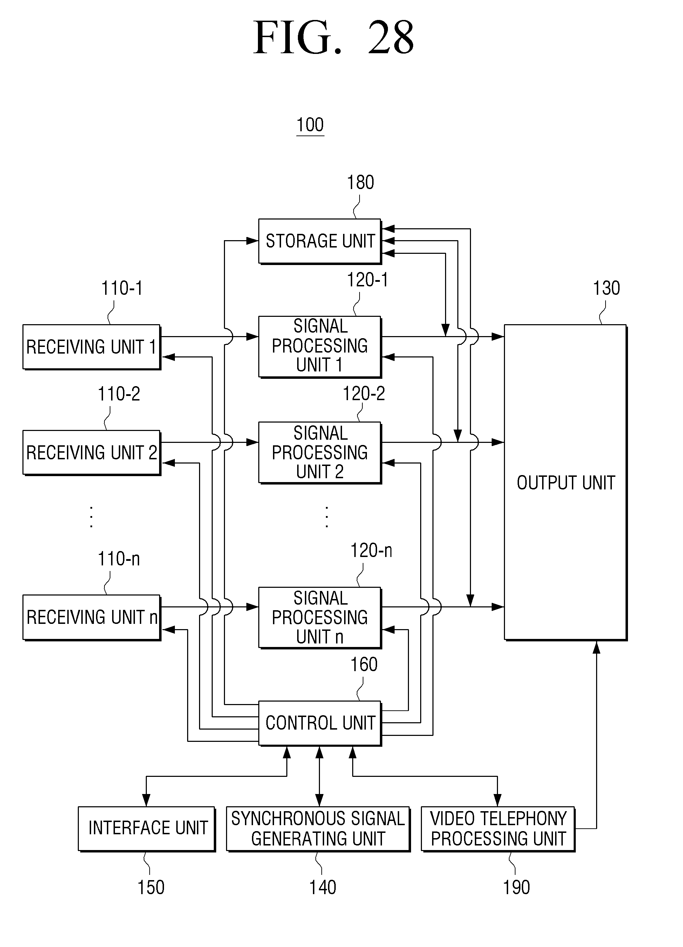

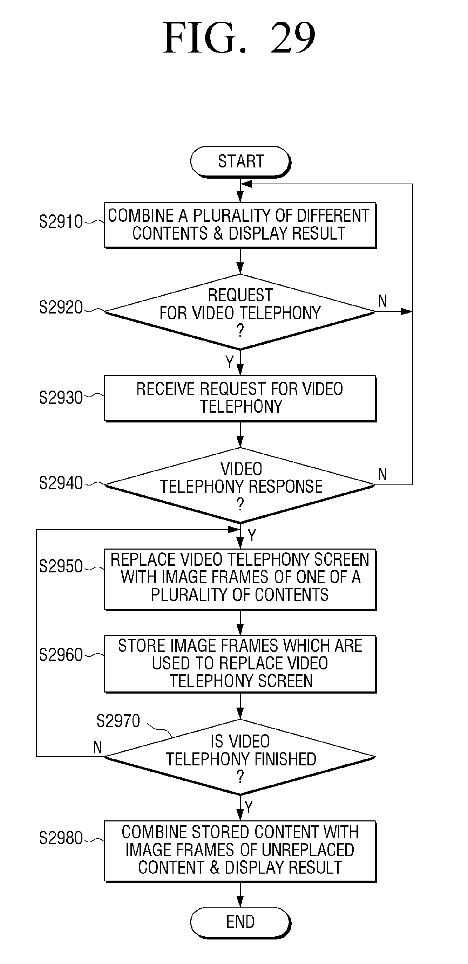

FIG. 28 is a block diagram of a display apparatus 100 according to an exemplary embodiment, and FIG. 29 is a flowchart of video telephony utilizing the display apparatus 100.

Referring to FIG. 28, the display apparatus 100 according to an exemplary embodiment may include a receiving unit 110 (e.g., receiver) for receiving the contents, a signal processing unit 120 (e.g., signal processor) for signal-processing the received contents, an output unit 130 (e.g., outputter) for displaying the signal-processed contents, a synchronous signal generating unit 140 (e.g., synchronous signal generator) for generating the synchronous signals, a video telephony processing unit 190 (e.g., video telephony processor) for processing the request for video telephony, a storage unit 180 (e.g., storage) for storing the image frame of the content, a control unit 160 (e.g., controller) for controlling the display apparatus 100, and an interface unit 150 (e.g., interface) for communicating through the glasses 200.

The receiving unit 110, the signal processing unit 120, the output unit 130, the synchronous signal generating unit 140, the interface unit 150, and the video telephony processing unit 190 are described above, and thus will not be explained further for the sake of brevity.

The storage unit 180 and the method for storing the image frame of the contents replaced with the video telephony in the storage unit 180 will be described below.

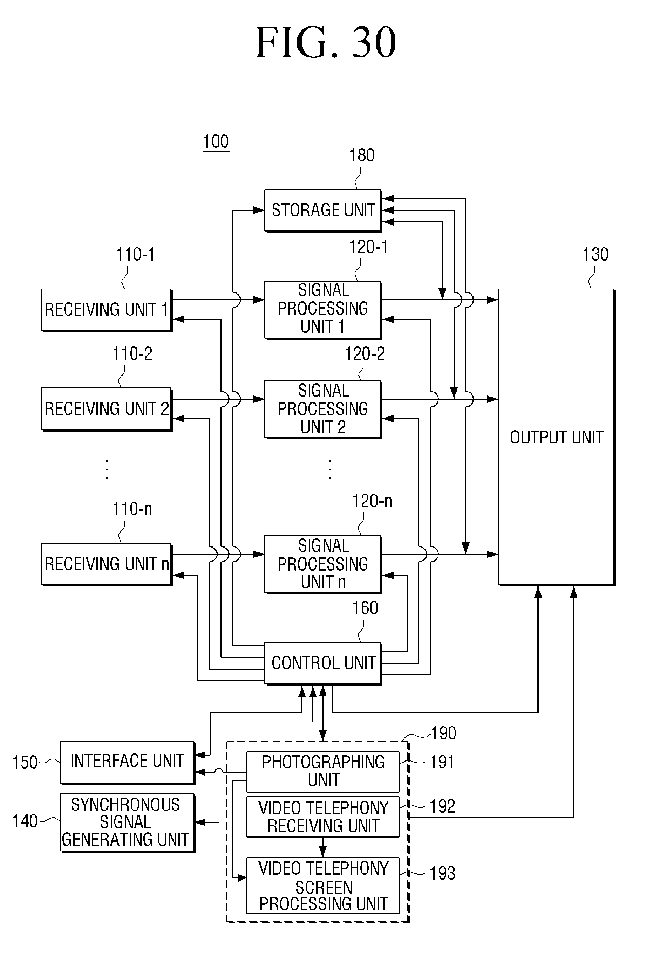

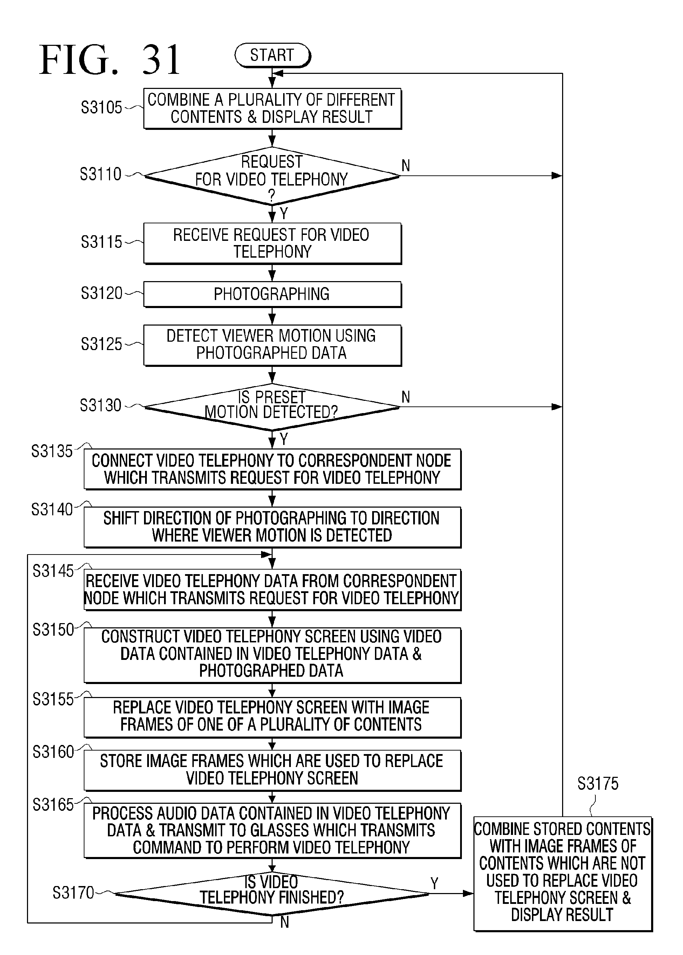

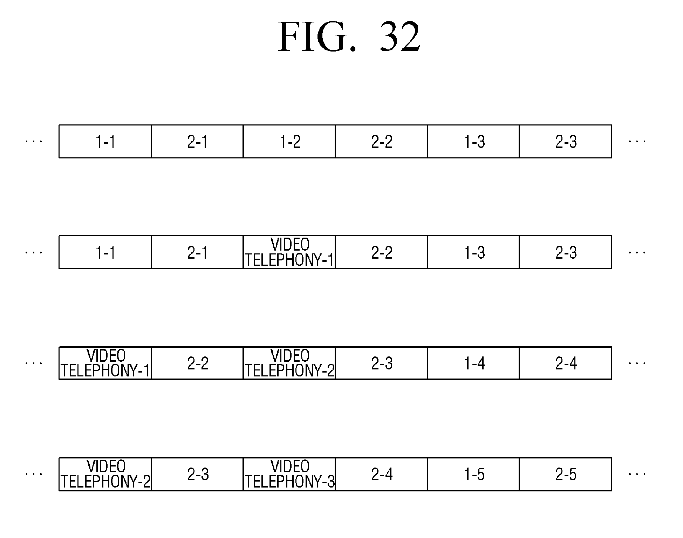

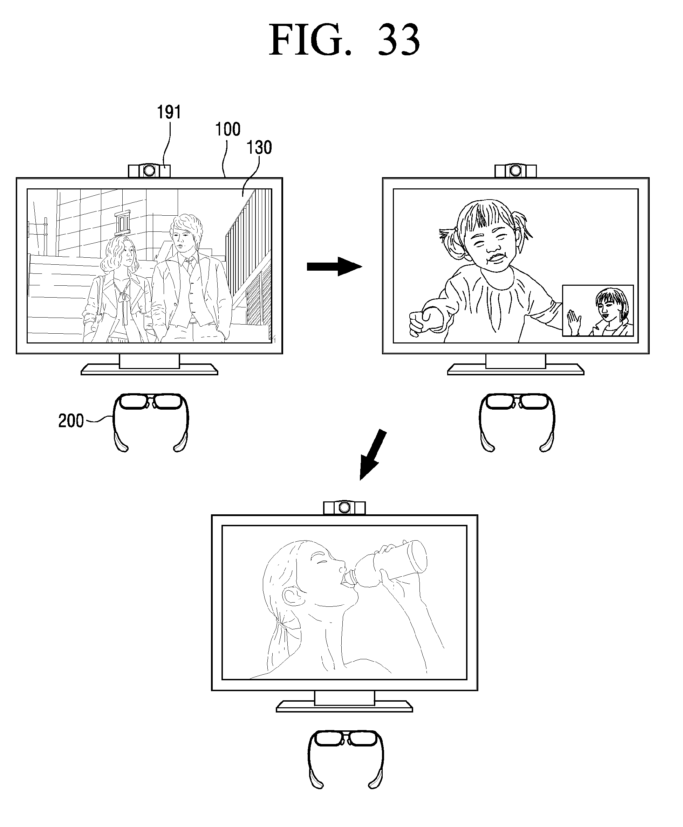

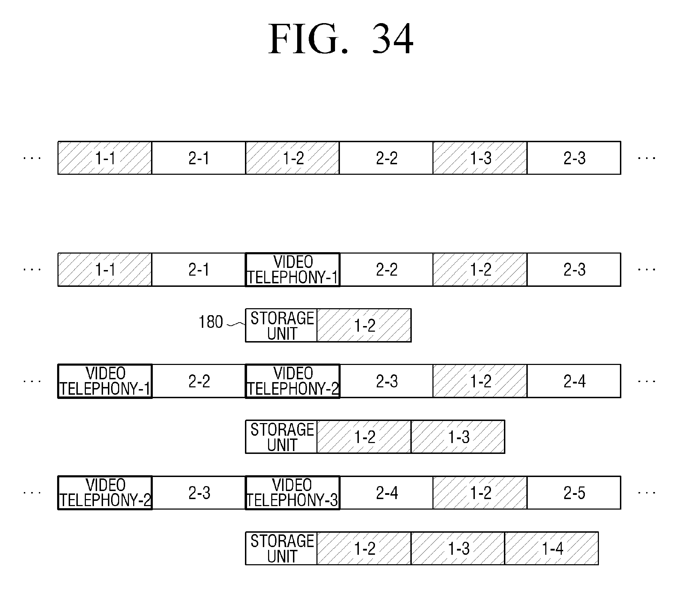

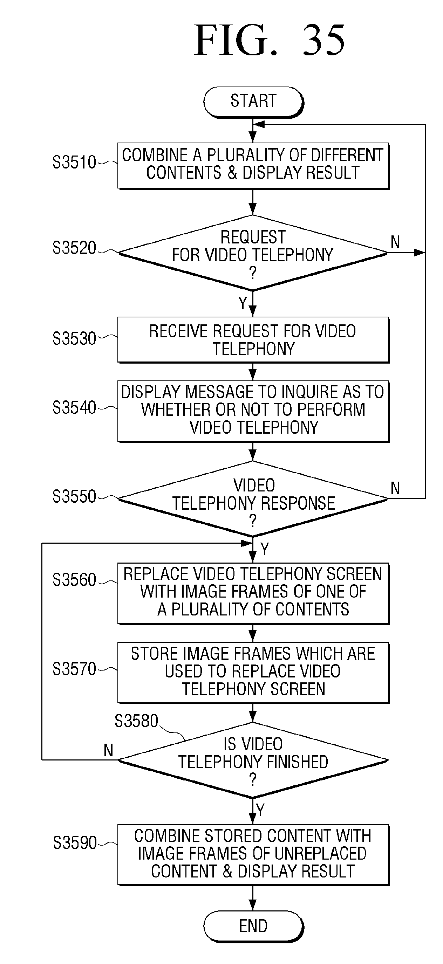

FIG. 30 is a block diagram of the display apparatus 100 including the interface unit 150 and the video telephony processing unit 190. FIG. 31 is a flowchart of processing the video telephony utilizing the display apparatus 100. FIG. 32 is a conceptive view illustrating replacing of the image frame of the content with the image frame of the video telephony screen. FIG. 33 illustrates that the viewer may not watch the contents since the displaying the contents is finished after the video telephony. FIG. 34 is a conceptive view illustrating storing of the content image frame replaced with the video telephony screen in the storage unit 180. FIG. 35 is a flowchart provided to explain processing of the video telephony including the step of displaying the message asking the video telephony implementation.

The storage unit 180 may store the content image frame. To be specific, if the video telephony begins, the content image frames which have been viewed by the viewer may not be viewable anymore as these are replaced with the video telephony screen. If the display apparatus 100 receives and displays the contents stored in the display apparatus 100 or from the device playing the various recording medium connected to the display apparatus 100, the display apparatus 100 may receive and display the stored contents in the display apparatus 100 or in the device playing the recording medium again to watch the previous content after the video telephony. However, the contents may be received from the broadcasting network or the Internet, and the receiving and displaying the contents may be limited in the matter of time and money. Further, even if there is no time or physical limitation, the consecutive content such as the movie should be watched from the time point of beginning the video telephony. By way of example, referring to FIG. 33, the viewer may have to talk with his or her nephew on the video telephony, and this time may overlap with the time point of interesting scenes of a soap drama being displayed or the soap drama itself may be finished so that an advertisement is on the screen when the viewer finishes video telephony. If the soap drama time is limited, the viewer may watch the drama for some time or may pay the additional cost to watch the drama again using a video-on-demand (VOD) service. However, although the viewer may receive and view the soap drama on VOD, the viewer has to pay the additional time to search the drama scene he or she missed for the video telephony. According to an exemplary embodiment, when the video telephony begins, the content image frames replaced with the video telephony screen which are not viewed for the video telephony, may be stored in the storage unit 180. After the video telephony is completed, the control unit 160 may control the output unit 130 to combine and display the stored image frames and the content image frames that are not replaced with the video telephony screen. Accordingly, if the viewer uses the video telephony while watching the contents, he or she may store the content in the storage unit 180 and watch the content again after the video telephony. The storage unit 180 may be installed within the display apparatus 100 or a recording medium playback device connected to the display apparatus 100. The recording medium playback device may include any device that can play back the contents stored in any of various types of recording media such as a CD, a DVD, a hard disk, a Blu-ray disk, a memory card, a USB memory, etc.

The control unit 160 according to an exemplary embodiment will be described below. Other than the below-described characteristics, the control unit 160 may have the same or similar characteristics according to exemplary embodiments explained above.

If the video telephony connects in response to the request for video telephony, the control unit 160 may control the storage unit 180 to store the content image frames replaced with the video telephony screen, and to combine and display the stored image frames and the content image frames that are not replaced with the video telephony screen after the video telephony. According to an exemplary embodiment, FIG. 32 illustrates an example when one viewer watches the content having the image frame 1-1, the image frame 1-2, and the image frame 1-3 and another viewer watches different content having the image frame 2-1, the image frame 2-2, and the image frame 2-3. As described above, the content image frame at a time when the viewer begins to connect the video telephony may be replaced with the frames of the video telephony screen (video telephony screen - 1, video telephony screen - 2, video telephony screen - 3). Referring to FIG. 34, the control unit may control the storage unit 180 to store the content image frames 1-2, 1-3, 1-4, ... replaced with the frame of the video telephony screen (video telephony screen - 1, video telephony screen - 2, video telephony screen - 3). When the video telephony disconnects, the control unit 160 may control the output unit 130 to combine the content image frames 1-2, 1-3, 1-4, ... stored in the storage unit 180 with the other content image frames 2-n, 2-(n+1), ... and display the combined frames. Exemplary implementations of the storage unit 180 and the output unit 130 are described above.

Referring to FIGS. 29, 31, and 34, the method of the video telephony according to an exemplary embodiment will be described. Since exemplary implementation of device elements are described above, the processing method will be explained below.

At operations S2910, S3105, and S3510 in which a plurality of viewers wear the glasses 200 and watch different contents, if there is a request for video telephony at operation S2920-Y, S3110-Y, S1120-Y, the request may be received at operations S2930, S3115, and S3530. The viewers wearing the glasses 200 and watching the contents may answer the request for video telephony and the display apparatus 100 may display the message asking about implementation or non-implementation of the video telephony at operation S3540. The answer may be input as the command directing to connect the video telephony through the interface unit 150, and the motion detecting method utilizing the photographing image of the viewers may be implemented in one or more exemplary embodiments at operations S3120 and S3125. If the command directing to connect the video telephony through the interface unit 150 or if the motion corresponding to the command is requested at operation S3130-Y, the video telephony may begin at operation S3135. When the video telephony connects, image frames of one content in a plurality of contents may be replaced with the video telephony screen at operations S2950, S3155, and S3560. Accordingly, the viewers watching the different contents may keep watching without a problem. However, if a plurality of viewers are watching one common content, the content and the video telephony screen may be alternately placed and displayed by adjusting the frame rate. Meanwhile, if the video telephony begins by detecting the viewer motion, the photographing unit 191 may shift the photographing direction to the direction the motion is detected and the video telephony screen is constructed at operation S3140. If the video telephony connects, the video telephony data transmitted from the correspondent node and the photographed data by the photographing unit 191 may be utilized to construct the video telephony screen at operations S3145 and S3150. Further, the content image frames replaced with the video telephony screen may be stored in the storage unit at operations S2960, S3160, and S3570. The voice data included in the video telephony data may be processed and transmitted to the glasses 200 sending the command directing to connect the video telephony at operation S3165. When the video telephony disconnects at operations S2970-Y, S3170-Y, and S3580-Y, the stored image frames and the content image frames that may not be replaced with the video telephony screen may be combined and displayed at operations S2980, S3175, and S3590.

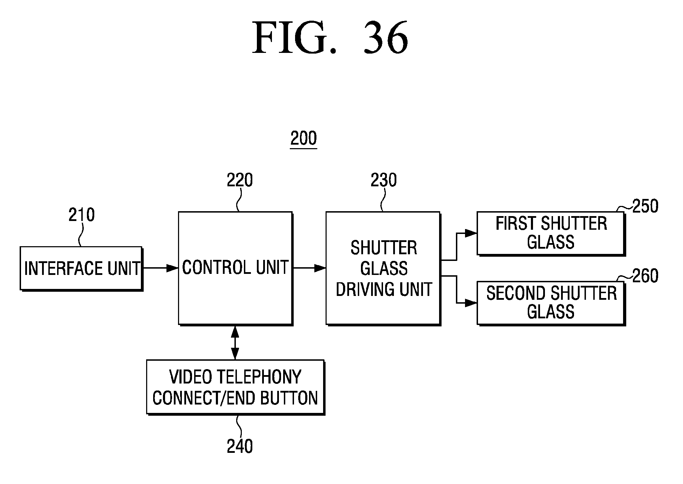

FIG. 36 is a block diagram of glasses 200 according to an exemplary embodiment. To be specific, the glasses 200 of FIG. 36 may interoperate with the display apparatus 100 alternately displaying a plurality of contents on the image frame basis, and may include an input unit 240 (e.g., inputter), a control unit 220 (e.g., controller), a shutter glass driving unit 230 (e.g., shutter glass driver), a communication interface unit 210 (e.g., communication interface), a first shutter glass 250, and a second shutter glass 260.

Since the shutter glass driving unit 230, the communication interface unit 210, the first shutter glass 250, the second shutter glass 260, and the control unit 220 are described above, these will not be explained in further detail below for the sake of brevity.

The input unit 240 (e.g., video telephony connect/end button) may connect or disconnect the video telephony. If there is a video telephony call, in other words, if the display apparatus 100 receives the request for video telephony, the viewer may input the command directing to connect the video telephony with the inputting unit 240 on the glasses 200 to the display apparatus 100. Further, if the viewer wants to disconnect the video telephony, he or she may finish the video telephony with the inputting unit 240. The inputting unit 240 may be the video telephony connect/disconnect button 240' of FIG. 26 as described above.

Exemplary units and the implementations of the glasses 200 are described above.

If the viewer utilizes the video telephony while watching the content, he or she may store the content in the storage unit 180 and watch the content again after the video telephony disconnects.

### The display apparatus restricting the content view switching

The system and the method for restricting a content view switching of the display apparatus 100 according to an exemplary embodiment will be described below.

The display apparatus 100 according to an exemplary embodiment may include a plurality of receiving units 110-1, 110-2, ... , 110-n, a plurality of signal processing units 120-1, 120-2, ... , 120-n, an output unit 130, a synchronous signal generating unit 140, an interface unit 150, and a control unit 160.

Since the plurality of receiving units 110-1, 110-2, ... , 110-n, the plurality of signal processing units 120-1, 120-2, ... , 120-n, the output unit 130, the synchronous signal generating unit 140, and the interface unit 150 are exemplarily described above, an implementation of the control unit 160 will be explained below.

The control unit 160 may switch the function mode of the display apparatus 100 according to the viewer. The viewer may select one of various function modes such as the single view mode (first mode) for watching one content and the multiview mode (second mode) for watching a plurality of contents.

In the single view mode (first mode), one content, such as the 2D content or the 3D content, may be output. In the multiview mode (second mode), a plurality of contents may be combined and provided as a plurality of content views, as described above. In the multiview mode (second mode), the content view is maintained, even if the playing of one content view finishes and is followed by the next content.

If two contents are combined and outputted in the multiview mode (second mode), this may be particularly referred to as the 'dual view mode'. If the viewer inputs the command directing to switch the mode while operating in the single view mode (first mode), the control unit 160 may control the output unit 130 to combine and output a plurality of contents. If the mode switches to the multiview mode (second mode), the control unit 160 may control the synchronous signal generating unit 120 and the interface unit 130 to transmit the synchronous signals to the glasses 200 mapping to the contents.

Meanwhile, in the multiview mode (second mode), the viewer watching one content of a plurality of contents may input the command directing to switch the content view to implement the content view switching. The content view switching may indicate that a plurality of viewers watching a plurality of contents may switch the content view.

By way of example, if the content view switching is implemented while combining and outputting the content view allocated the broadcasting channel transmitting the news program and the content view allocated the channel transmitting the sports program, viewer 1 watching the news program may watch the sports program and viewer 2 watching the sports program may watch the news program by switching the content view.

The content view switching may be implemented so that the viewer inputting the command directing to switch the content view can switch to another content view. If viewer 1 inputs the command directing to switch the content view, the contents of viewer 1 may be switched to the sports program and viewer 2 can watch the sports program without switching.

The command directing to switch the content view may be received from the glasses 200 or the remote control unit 300 of the viewer, or may be inputted by a key button installed on the display apparatus 100.

If the command directing to switch the content view is input, the control unit 160 may implement the content view switching by the contents type and the viewer setting.

To be specific, the control unit 160 may restrict the content view switching to a content view displaying a predetermined type of contents, while allowing the content view switching to a content view displaying other contents. The predetermined contents having a restriction with respect to switching the content view may include a broadcast program with an age rating, a game program screen, a messenger program screen, a mail screen, an SNS screen, etc. Since the messenger program screen, the mail screen, and the SNS screen may have privacy considerations, the content view switching may be prohibited even if the command directing to switch the content view is inputted. Further, if a plurality of viewers utilize the game while implementing the game program and if the game screen is combined and displayed by the display apparatus 100, the content view switching may disclose the game strategy of other viewers. Accordingly, the content view switching may be prohibited. Regarding the broadcast program with the age rating, the content view switching may be prohibited to stop an under age viewer from watching the program. The types of contents having a limitation in the content view switching may be registered in the memory of the display apparatus 100 or provided from an exterior source.

Meanwhile, according to an exemplary embodiment, the control unit 160 may determine the implementation or the restriction of the content view switching by viewer settings. The control unit 160 may control the output unit 130 to display the setting menu including the dual view mode display, the content output in the dual view mode, the setting command input in the dual view mode, or others. The output unit 130 may display the setting menu to set the limitation of the content view switching by controlling of the control unit 160.

If the viewer allows the content view switching on the setting menu and if the command directing to switch the content view is received, the control unit 160 may implement the content view switching. Meanwhile, if the viewer restricts the content view switching on the setting menu, the control unit 160 may limit the content view switching even if the command directing to switch the content view is inputted.

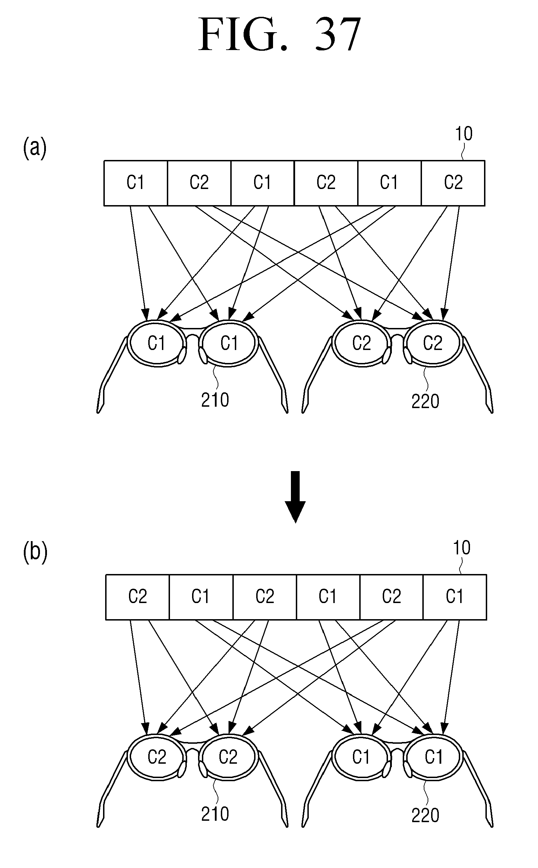

FIG. 37 is a view provided to explain the content view switching process. Referring to FIG. 37, when the multiview mode (second mode) begins, the display apparatus 100 may display the multi contents frame data 10 including a plurality of contents alternately arranged. The glasses 210, 220 corresponding to the contents may be synchronized and driven according to the display timing of the contents. Accordingly, the viewer wearing the first glasses 210 may watch the first content (C1) and the viewer wearing the second glasses 220 may watch the second content (C2).

If the command directing to switch the content view is inputted from the inputting device such as the first glasses 210, the second glasses 220, or the remote control unit, the display apparatus 100 may reverse the arrangement series of contents C1, C2 and switch the contents that the first glasses 210 and the second glasses 220 can watch.

Although FIG. 37 illustrates the method for switching the contents that the glasses 210, 220 can watch by reversing the arrangement order of the contents, the display apparatus 100 may implement a content view switching that changes the synchronous signals according to another exemplary embodiment. The control unit 160 may control the synchronous signal generating unit 140 to change the synchronous signals corresponding to the first glasses 210 and the second glasses 220 while maintaining the contents arrangement order. Accordingly, the first glasses 210 may be synchronized with the time of displaying C2, and the second glasses 220 may be synchronized with the time of displaying C1.

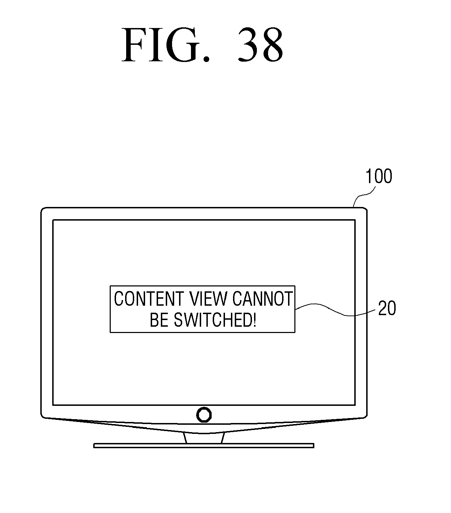

Meanwhile, the content view switching may be limited as occasions arise. FIG. 38 illustrates an example where the content view switching is restricted.

Referring to FIG. 38, if the contents are restricted depending on the contents type or the viewer setting, the control unit 160 may not implement the content view switching even if the command directing to switch the content view is inputted.

If the content view switching is restricted, the control unit 160 may control the output unit 130 to display an error message 20 informing the limitation.

A display apparatus 100 which performs a content view switching according to an exemplary embodiment will now be described. The display apparatus 100 according to the present exemplary embodiment may have a configuration similar to the display apparatus 100 illustrated in FIG. 5. The display apparatus 100 may include an output unit 130 (e.g., outputter), a synchronous signal generating unit 140 (e.g., synchronous signal generator), an interface unit 150 (e.g., interface), and a control unit 160 (e.g., controller).

The interface unit 150 may receive a command directing to restrict the content view switching. The user command may be inputted through a button installed on the display apparatus 100 or the remote control unit 300.

When the command directing to restrict the content view switching is inputted while the multiview mode (second mode) begins and a plurality of contents are displayed in the output unit 130, the control unit 160 may restrict the switching of the displayed contents even if the command directing to switch the content view is input.

Further, the interface unit 150 may receive the command directing to lift the limitations.

The control unit 160 may still restrict the content view switching from the time point of inputting the command directing to limit the switching to the time point of inputting the command directing to lift the restriction if the command directing to switch the content view is input.

The glasses 200 according to various exemplary embodiment will be described below. The glasses 200 may have a similar configuration as the one illustrated in FIG. 9.

The glasses 200 may interoperate with the display apparatus 100 alternately displaying a plurality of contents on the image frame basis. The glasses 200 may include a communication interface unit 210 (e.g., communication interface), a control unit 220 (e.g., controller), a shutter glass driving unit 230 (e.g., shutter glass driver), a first shutter glass 250, a second shutter glass 260, and an input unit 240 (e.g., inputter).

Since the communication interface unit 210, the shutter glass driving unit 230, the first shutter glass 250, and the second shutter glass 260 are described above, the control unit 220 and the input unit 240 will be described below.

The input unit 240 may receive the command directing to switch the content view. The input unit 240 may include a button for receiving the content view switching, and the button may be a touch sensor or a manipulation button.

The control unit 220 may control the interface unit 210 to transmit the content view switching command inputted from the inputting unit 240 to the display apparatus 100. The display apparatus 100 may implement the content view switching if the content view is allowed to be switched, and restrict the switching if the content view is prohibited from being switched.

A method for switching the content view of a display apparatus 100 according to an exemplary embodiment will be described below.

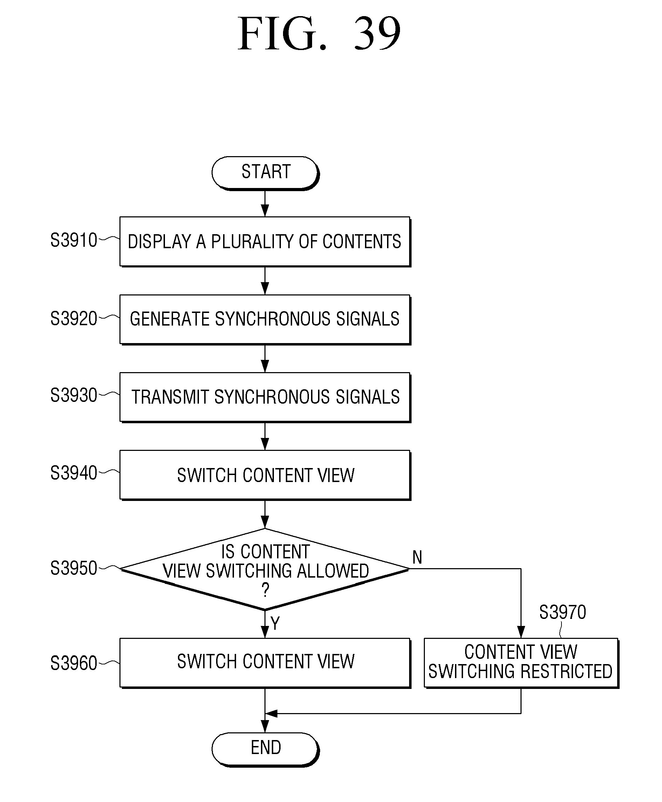

FIG. 39 is a flowchart of the content view switching method of a display apparatus 100 according to an exemplary embodiment.

Referring to FIG. 39, when the multiview mode (second mode) begins, a plurality of contents may be received and processed, and the image frames of the contents may be displayed to be a plurality of content views at operation S3910.

At operation S3920, the synchronous signals for synchronizing the glasses 200 corresponding to the content view may be generated, and transmitted to the glasses 200 at operation S3930.

If the command directing to switch the content view is received from the glasses 200 at operation S3940, the content view switching may be determined to be allowed or restricted at operation S3950. The display apparatus 100 may determine the allowance of the content view switching by considering the contents type corresponding to the contents or the viewer setting type. By way of example, a broadcast program with an age rating, a game program screen, a messenger program screen, a mail screen, or a SNS screen may be prohibited with respect to the content view switching. The contents that the viewer may set the limitation of the switching may also be prohibited.

If the switching restriction is set by the viewer, the method may additionally include displaying a setting menu for setting the restriction of the content view switching. The method according to an exemplary embodiment may additionally include allowing the content view switching if the command directing to switch the content view is inputted in a state that the content view switching is set to be allowed through the setting menu, and restricting the content view switching if the command directing to switch the content view is inputted in a state that restricting the content view switching is set through the setting menu,.

The display apparatus 100 may implement the content view switching if the switching is determined to be allowed at operation S3960, or may limit the content view switching if the switching is determined to be prohibited at operation S3970. The display apparatus 100 may not provide feedback regarding the command directing to switch the content view, or may provide an audio or visual error message regarding the restriction of the switching.

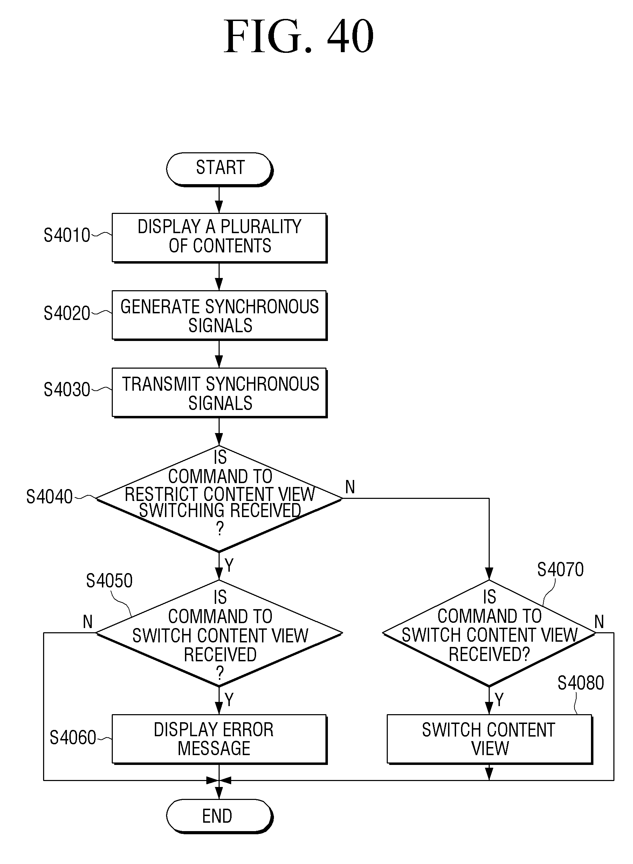

FIG. 40 is a flowchart of a method for switching the content view of a display apparatus 100 according to an exemplary embodiment.

Referring to FIG. 40, when the multiview mode (second mode) begins, a plurality of contents may be received and processed, and the image frames of the contents may be displayed as a plurality of content views at operation S4010.

The synchronous signals for synchronizing the glasses corresponding to the content view may be generated at operation S4020 and transmitted to the glasses 200 at operation S4030.

If the command directing to restrict the content view switching is received at operation S4040, an error message may be displayed when the command directing to switch the content view is inputted at operation S4060, and the content view switching may not be implemented. Meanwhile, if the command directing to restrict the content view switching is not received, when the command directing to switch the content view is inputted at operation S4070, the content view may be switched at operation S4080. If the command directing to lift the restriction is inputted, the command directing to restrict the switching may be lifted, and the content view may be switched without a restriction. The content view switching may be restricted from the time point of inputting the command directing to restrict the content view switching to the time point of inputting the command directing to lift the restriction.

The display apparatus 100 may provide the content view switching so that the viewer may switch and watch the content views at his convenience, or restrict the content view switching according to the viewer request.

Meanwhile, the program implementing the method according to an exemplary embodiment may be recorded and utilized in various types of recording media.

To be specific, the program may be stored and provided in a terminal-readable recording medium such as RAM, flash memory, ROM, EPROM, EEPROM, a register, a hard disk, a removable disk, a memory card, a USB memory, and an optical storage medium (e.g., CD-ROM, DVD, Blu-ray, etc).

### Pairing the glasses according to the orientation of the user signal

A system and a method for pairing glasses 200 according to the orientation of the user signal according to an exemplary embodiment will be described below.

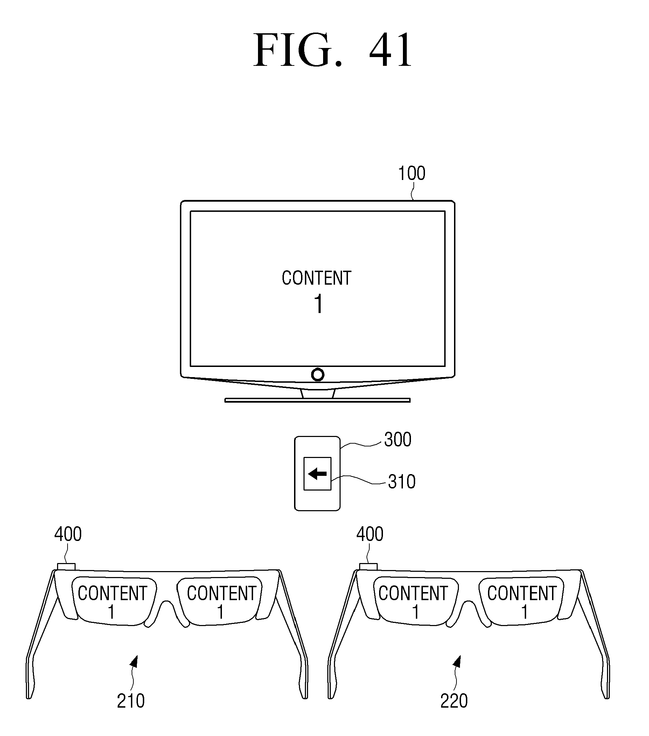

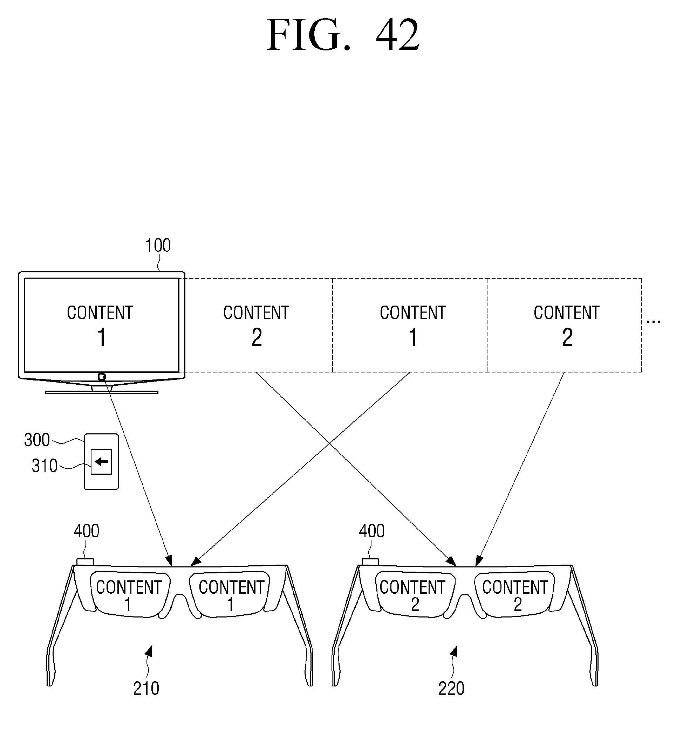

FIG. 41 is a view provided to explain a single view mode (first mode) of a display apparatus 100 according to an exemplary embodiment. FIG. 42 is a view provided to explain a multiview mode (second mode) of a display apparatus 100 according to an exemplary embodiment.

The display apparatus 100 may operate in the single view mode (first mode) for displaying one content and in the multiview mode (second mode) for alternately displaying a plurality of contents.

Referring to FIG. 41, a plurality of viewers may watch content 1 through the glasses 210, 220. In the single view mode (first mode), the viewer may watch content 1 without having to wear the glasses.

Referring to FIG. 42, a plurality of viewers may watch content 1 and content 2 in the multiview mode (second mode) through the glasses 210, 220.

A remote control unit 300 may include a touch pad 310 corresponding to the viewer touch.

The glasses 210, 220 may include a light emitting element 400 so that the display apparatus 100 can sense the locations of the glasses 210, 220. Although the present exemplary embodiment utilizes the light emitting element 400, it is understood that one or more other exemplary embodiments are not limited thereto, and any device may be implemented for the display apparatus 100 to sense the position of the glasses 210, 220.

The light emitting element 400 may be an IR LED.

The display apparatus 100 may switch the mode if a user signal having an orientation (e.g., a signal indicating a direction or an orientation) is received from the remote control unit 300. To be specific, if the user signal is received while operating in the single view mode (first mode), the mode may be switched to the multiview mode (second mode) combining and displaying current contents and other contents so that the viewer inputting the user signal can watch the currently displayed contents, and other viewers can watch the other contents.

By way of example, if the left viewer wants to watch content 1 in the multiview mode (second mode), the left viewer may touch the touch pad 310 of the remote control unit 300 and drag or flip to the left direction. The remote control unit 300 may generate the remote control unit signal informing the dragging or flipping direction and transmit the signal to the display apparatus 100.

If the display apparatus 100 detects the remote control unit signal, the display apparatus 100 may determine which viewer manipulates the remote control unit 300 based on the orientation included in the remote control unit signal. The display apparatus 100 may compare the touch direction included in the remote control unit signal to the glasses positions, and determine the glasses 210, 220 of the viewer that manipulates the remote control unit 300. By way of example, as described above, if the glasses 210, 220 include the light emitting elements 400 such as the IR LED and if the colors of the light emitting elements 400 are different from each other, the display apparatus 100 may determine the glasses positions by utilizing the light emitting element colors displayed on the photographing image of the front area from the display apparatus 100.

If the display apparatus 100 perceives the glasses 210 of the left viewer, the display apparatus 100 may control the glasses 210 to watch the currently displayed contents (i.e., content 1) and control the other glasses to watch the other contents (i.e., content 2) or to process the contents to a non-viewable state. Content 2 may be randomly set such as a broadcast program transmitted from the channel next to content 1.

The display apparatus 100 may switch the single view mode (first mode) to the multiview mode (second mode) according to the viewer manipulation of the remote control unit 300. If the viewer wants to watch the content by himself, he or she may switch the mode to the multiview mode (second mode) by simple touch manipulation and prohibit the disclosing of the content to the other viewers.

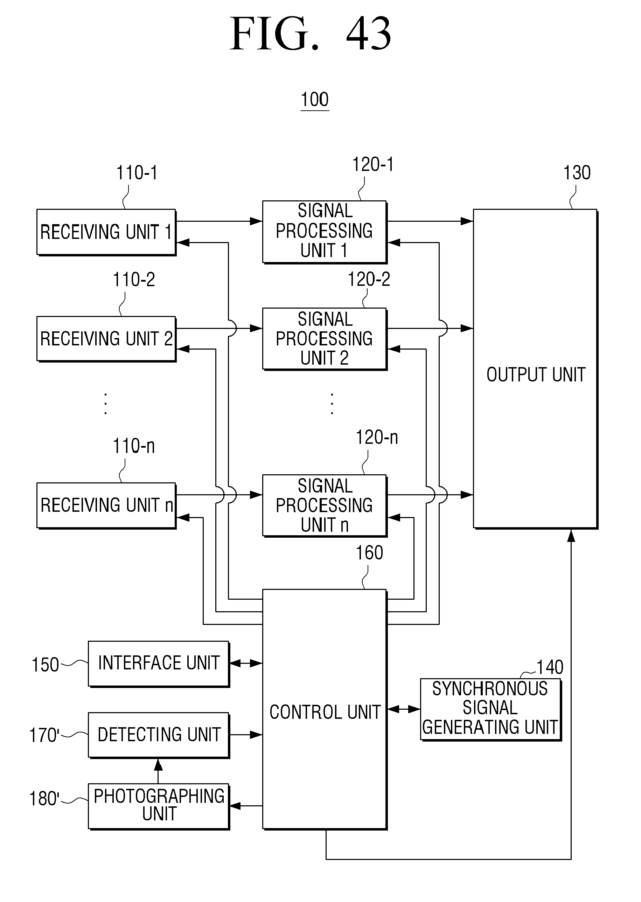

FIG. 43 is a block diagram of a display apparatus 100 according to an exemplary embodiment. Referring to FIG. 43, the display apparatus 100 may include a plurality of receiving units 110-1, 110-2, ... , 110-n (e.g., receivers), a plurality of signal processing units 120-1, 120-2, ... , 120-n (e.g., signal processors), an output unit 130 (e.g., outputter), a photographing unit 180' (e.g., photographer), a detecting unit 170' (e.g., detector), a control unit 160 (e.g., controller), an interface unit 150 (e.g., interface), and a synchronous signal generating unit 140 (e.g., synchronous signal generator).

Since the receiving unit 110, the signal processing unit 120, the output unit 130, the control unit 160, the interface unit 150, the synchronous signal generating unit 140, and the photographing unit 180' are explained above, these will not be further described below for the sake of brevity.

The interface unit 150 may receive the user signals having the orientation from the remote control unit 300.

The photographing unit 180' may implement the photographing of the viewers through the glasses 210, 220. The photographing unit 180' may be installed on one side of the display apparatus 100 and photograph the front area from the display apparatus 100. Accordingly, the photographed image of the photographing unit 180' may show the glasses of all viewers watching the display apparatus 100. The photographing unit 180' may be included in the photographing unit described above or implement the same or similar functions of the above photographing unit.

The detecting unit 170' may detect the glasses 210, 220 corresponding to the orientation by utilizing the photographed image of the photographing unit 180'.

By way of example, the detecting unit 170' may determine the colors of the light emitting elements 400 installed on a plurality of glasses 210, 220 in the photographed image of the photographing unit 180', and detect which of the glasses 210, 220 corresponds to the touch manipulation direction.

By way of another example, if the light emitting element 400 is not installed on the glasses 210, 220, the detecting unit 170' may detect the glasses by determining the shape of the glasses 210, 220, the colors, or the specific mark attached to the glasses 210, 220.

The detecting unit 170' may provide the detected result to the control unit 160.

If the user signal is input, the control unit 160 may control the detecting unit 170' to detect the glasses of the viewer inputting the user signal. Accordingly, if one glasses is detected, the control unit 160 may switch the mode to the multiview mode (second mode) so that the detected glasses 210, 220 can watch the specific contents (e.g., current contents).

To be specific, the control unit 160 may control the other receiving units to receive the other contents. The control unit 160 may control the signal processing units 120-1, 120-2, ... , 120-n to signal-process the contents received from a plurality of receiving units 110-1, 110-2, ... , 110-n and the output unit 130 to display a plurality of content views. The control unit 160 may control the interface unit 150 to generate the synchronous signals synchronizing the current content view that may be displayed and the glasses of the detected viewer inputting the user signals and transmit the synchronous signals to the glasses. Regarding the other content view, the control unit 160 may control the synchronous signal generating unit 140 and the interface unit 150 to generate the synchronous signals synchronizing the other glasses and to transmit the signals to the other glasses. The contents may be voluntarily selected to be in the other content view.

If the mode is switched to the multiview mode (second mode), the synchronous signal generating unit 140 may synchronize the glasses 210, 220 detected by the time of outputting the content of a plurality of contents, and output the synchronous signals synchronizing the glasses 210, 220 to the time of outputting the other contents of the plurality of contents.

Meanwhile, the above describes that the display apparatus 100 may generate the synchronous signals corresponding to the time of displaying the contents and transmit the signals to the glasses 210, 220. However, this is merely one exemplary embodiment, and it is understood that one or more other exemplary embodiments are not limited thereto.

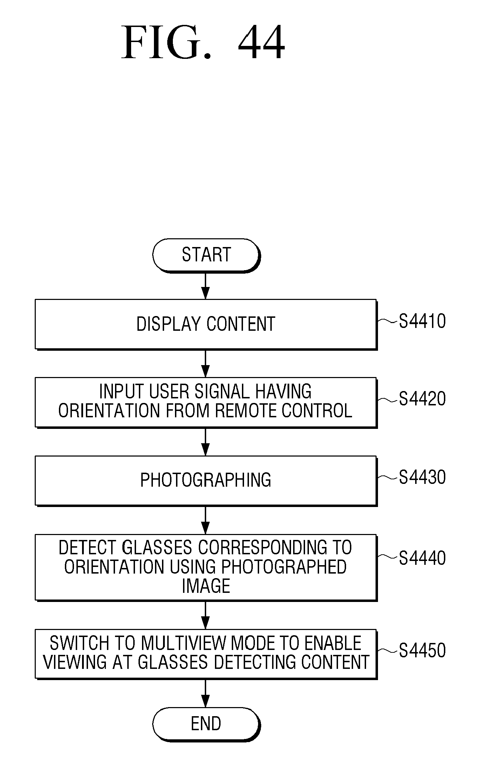

FIG. 44 is a flowchart of a method for switching a mode to a multiview according to an exemplary embodiment.

First, the contents may be displayed at operation S4410. By way of example, the single view mode (first mode) displaying one current content (Content 1) may be displayed.

At operation S4420, the user signal having the orientation may be inputted from the remote control unit 300. The remote control unit 300 may include the touch pad 310, and the user signal may be the touch manipulation signal in a specific direction on the touch pad 310. By way of example, the viewer moving to the left direction on the touch pad will be described below.

If the user signal is inputted, the photographing may be implemented at operation S4430. The photographing may be implemented in the front area from the display apparatus 100 by the camera installed on the display apparatus 100.

After the photographing, the glasses 210 corresponding to the direction among a plurality of glasses 210, 220 is determined in the photographing image at operation S4440. In FIGS. 41 and 42, the detected glasses 210 may correspond to the direction of the left glasses 210. In the step of detecting the glasses 210, the positions of the light emitting elements 400 of the plurality of glasses 210, 220 in the photographed image may be found, and the glasses 210 corresponding to the direction in the glasses 210, 220 may be detected.

At operation S4450, the mode may be switched to the multiview mode (second mode) in which the detected glasses 210 can be used to watch the current content (Content 1). The switching to the multiview mode (second mode) may be implemented by utilizing at least one receiving unit other than the receiving unit receiving the current content (Content 1), combining Content 1 and Content 2, and displaying the combined images. The switching to the multiview mode (second mode) may include synchronizing the detected glasses 210 with the time of outputting Content 1 of a plurality of contents and generating the synchronous signals to synchronize the other glasses 220 with the time of outputting Content 2 of the plurality of contents.

Meanwhile, while watching in the multiview mode (second mode), if the viewer inputs a predetermined pattern to the touch pad 310 of the remote control unit 300, the remote control unit 300 may finish the multiview mode (second mode) and transmit the remote control unit signal switching to the single view mode (first mode) to the display apparatus 100. The predetermined pattern may be the same pattern as the pattern for the multiview mode (second mode), a pattern to the opposite direction, or another specific pattern.

The viewer may implement the switching between the single view mode (first mode) and the multiview mode (second mode) by utilizing the touch pad 310 of the remote control unit 300 conveniently.

Meanwhile, the program implementing the method according to an exemplary embodiment may be stored and utilized in the various types of recording media.

To be specific, the code implementing the method may be stored in various types of recording media that the terminal can read such as RAM, flash memory, ROM, EPROM, EEPROM, a register, a hard disk, a removable disk, a memory card, a USB memory, and an optical storage medium (e.g., CD-ROM, DVD, Blu-ray, etc).

### Recording multiview mode (second mode) information in the synchronous signals and transmitting the same

A system and a method for recording multiview mode (second mode) information in synchronous signals and transmitting the signals including the information according to an exemplary embodiment will be described below.

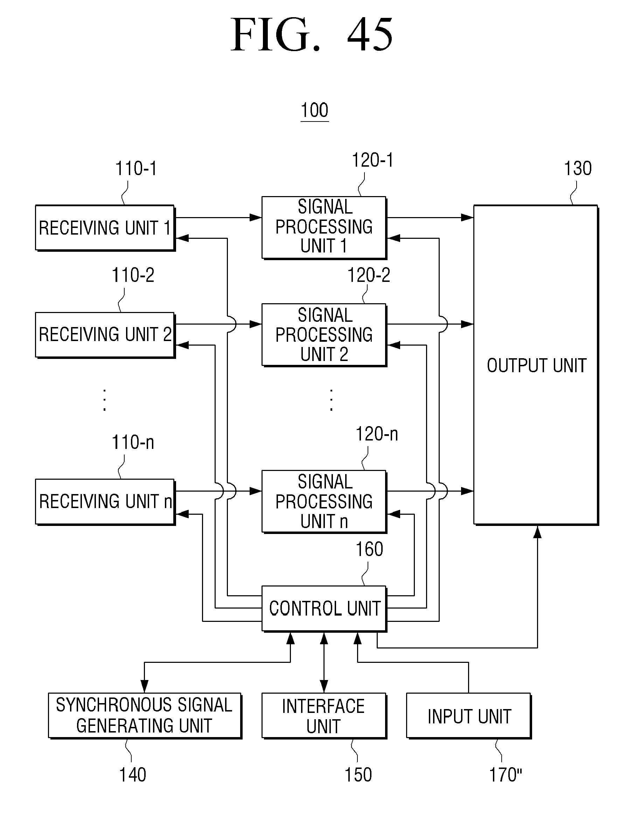

FIG. 45 is a block diagram of a display apparatus 100 according to an exemplary embodiment. Referring to FIG. 45, the display apparatus 100 may include a plurality of receiving units 110-1, 110-2, ... , 110-n (e.g., plurality of receivers), a plurality of signal processing units 120-1, 120-2, ... , 120-n (e.g., plurality of signal processors), an output unit 130 (e.g., outputter), a synchronous signal generating unit 140 (e.g., synchronous signal generator), an interface unit 150 (e.g., interface), a control unit 160 (e.g., controller), and an input unit 170" (e.g., inputter).

The plurality of receiving units 110-1, 110-2, ... , 110-n, the plurality of signal processing units 120-1, 120-2, ... , 120-n, the output unit 130, the synchronous signal generating unit 140, the interface unit 150, and the control unit 160 may perform the operations explained above, and also operations to be explained below.

The input unit 170" may receive a multiview viewing command. The 'multiview viewing command' refers to a user command directing the display apparatus 100 to alternately display a plurality of contents in the unit of image frames to thereby provide different contents to a plurality of users.

To this purpose, the input unit 170" may be implemented as a touch pad, a key button, a keypad, etc., or may receive a user command input from a remote controlling device (not illustrated) such as a remote control. Further, the input unit 170" may receive various user commands in addition to the multiview viewing command such as a channel tuning command, a volume adjusting command, or the like to control the display apparatus 100.

The control unit 160 may control the interface unit 150 to record multiview mode (second mode) information in the synchronous signals and transmit the synchronous signals in response to multiview viewing command. The multiview mode (second mode) information includes information to notify the initiation of the multiview mode (second mode). The glasses 200 may determine whether the display apparatus 100 operates in the multiview mode (second mode) or not in accordance with the presence or absence of the multiview mode (second mode) information in the received synchronous signals, and control on or off of the shutter glasses.

The control unit 160 may generate synchronous signals in accordance with a communication protocol defined between at least one pair of glasses 200, and record the multiview mode (second mode) information in the reserve region within the synchronous signals. That is, the control unit 160 may control the interface unit 150 to generate the synchronous signals in which the multiview mode (second mode) information is recorded according to the wireless communication method implemented in the interface unit 150 and transmit the synchronous signals to the glasses 200.

The interface unit 150 may transmit the synchronous signals to at least one pair of glasses 200 operating in association with the display apparatus 100. In this example, the interface unit 150 may process the synchronous signals to the glasses 200 in accordance with various wireless communication methods and transmit the same.

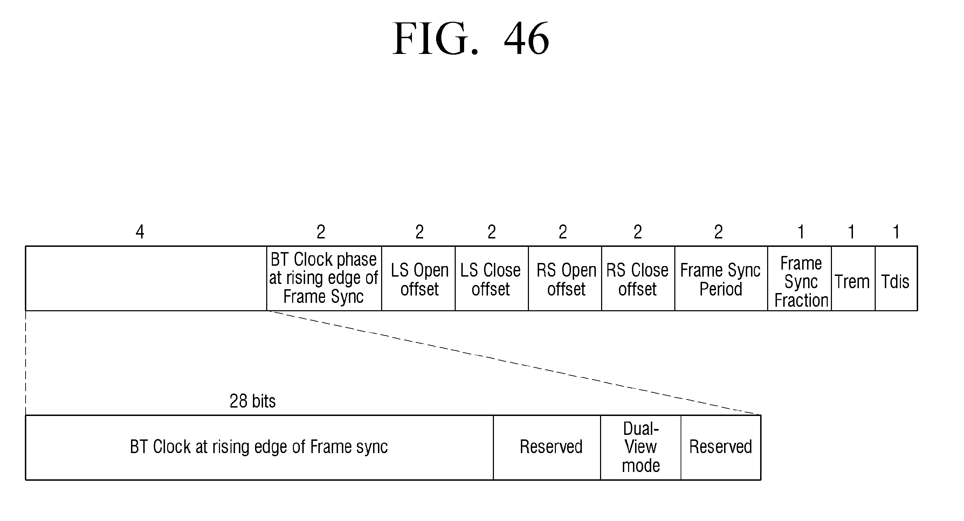

By way of example, if the interface unit 150 has a Bluetooth communication module and communicates with the glasses 200 according to the Bluetooth communication method, the control unit 160 may control the interface unit 150 to generate the transmission packet in accordance with the Bluetooth communication method and transmit the same to the glasses 200. The transmission packet generated in accordance with the Bluetooth communication method will be explained below with reference to FIG. 46.

FIG. 46 is a view illustrating a structure of a transmission packet generated in accordance with the Bluetooth communication method according to an exemplary embodiment.

Referring to FIG. 46, the transmission packet may include time information to turn on and off the shutter glasses of the glasses 200 in synchronization with the display timing of the content. To be specific, the time information may include a left shutter open offset to open the left-eye shutter glass, a left shutter close offset to close the left-eye shutter glass, a right shutter open offset to open the right-eye shutter glass, and a right shutter close offset to close the right-eye shutter glass, each of which is a two-byte packet.

The time information refers to time information to open/close the shutter glasses of the glasses 200 in accordance with the display timing of one of the plurality of contents in the multiview mode (second mode). In the general mode, the time information may refer to time information to open/close the shutter glasses of the glasses 200 in accordance with the display timings of the left-eye and right-eye image frames of 3D content.

Meanwhile, the offset time refers to delay information spanning between a preset reference time point and a time point at which the shutter glasses are open/closed. That is, the glasses 200 may open/close the left-eye and right-eye shutter glasses when the offset time from the reference time point elapses. By way of example, the reference time point may refer to a time point at which perpendicular synchronous signals (i.e., frame sync) are generated in the image frames. Information about the reference time point may be included in the transmission packet. Further, information regarding clock signals used in the display apparatus 100 may also be included in the transmission packet.

Accordingly, referring to FIG. 46, the information regarding the reference time point and the clock signals may be included in the four-byte Bluetooth (BT) clock packet (e.g., information) and a two-byte BT clock phase packet within the transmission packet. Accordingly, when receiving the transmission packet, the glasses 200 may synchronize its own output signal to the clock signal of the display apparatus 100 by using the BT clock packet and the BT clock phase packet, determine whether time has elapsed until the offset time from the time point at which the perpendicular synchronous signals are generated, and open/close the shutter glasses.

Meanwhile, the BT clock including the reference time point information and the clock signal information within a four-byte BT clock packet (e.g., information) consists of 24 bits, and the remaining four bits may serve as reserved area. The control unit 160 may record the multiview mode (second mode) information in the reserve region of the BT clock packet. By way of example, if the display apparatus 100 provides one 3D content, the control unit 160 may record '0' in the reserve region. If a plurality of contents are alternately displayed, '1' may be recorded in the reserve region as the multiview mode (second mode) information. The glasses 200 may determine the information recorded in the reserve region, determine the operation mode of the display apparatus 100, and perform the operations corresponding to the respective modes. To be specific, if'1' is recorded in the reserve region, the glasses 200 may open/close the left- and right-eye shutter glasses based on the time information, while if '0' is recorded in the reserve region, the glasses 200 may open/close the left- and right-eye shutter glasses alternately based on the time information.

The transmission packet may additionally include a 2-byte packet (frame sync period) containing information about frame sync period, a 1-byte packet (frame sync fraction) to mark decimal point when the frame sync period has a decimal point, a 1-byte packet (Trem) containing information about the remaining playback time of the currently-viewed 3D content, and a 1-byte packet (Tdis) containing information about degree of opening of the glasses.

Meanwhile, the interface unit 150 may transmit or receive a Bluetooth device address and pin code to or from the glasses 200 to perform pairing according to the Bluetooth communication method. When pairing is completed, the interface unit 150 may transmit synchronous signals corresponding to one of the plurality of contents based on the information acquired from the pairing.

Further, when pairing with a plurality of glasses 200 is completed, the interface unit 150 may transmit identical or different synchronous signals to the different glasses based on the information acquired from the pairing. Further, the interface unit 150 may transmit identical synchronous signals to some of the glasses. By way of example, the interface unit 150 may transmit synchronous signals corresponding to content 1 to glasses 1, transmit synchronous signals corresponding to content 2 to glasses 2, and transmit synchronous signals corresponding to content 1 to glasses 3.

However, while the interface unit 150 and the glasses 200 may perform communication according to the Bluetooth communication method in the present exemplary embodiment explained above, it is understood that one or more other exemplary embodiments are not limited thereto, and different communication methods such as infrared communication, Zigbee communication, etc., may be utilized, or various wireless communication methods to form communication channels in short distance and transmit and receive the signals may be implemented.

Further, while the display apparatus 100 and the glasses may communicate with each other according to various wireless communication methods to form communication channels in short distances and transmit and receive the signals, it is understood that one or more other exemplary embodiments are not limited thereto. For example, according to another exemplary embodiment, the display apparatus 100 may provide infrared (IR) synchronous signals with different frequencies to the glasses 200, and the glasses 200 in receipt of synchronous signals with a specific frequency may turn on or off the shutter glasses according to corresponding content display timing.

Meanwhile, while the display apparatus 100 may generate synchronous signals corresponding to the display timings of the respective contents and transmit the same to the glasses 200, it is understood that one or more other exemplary embodiments are not limited thereto.

That is, the control unit 160 may control the interface unit 150 to generate synchronous signals corresponding to the display timings of the respective contents into one transmission packet according to Bluetooth communication standard. According to this example, the interface unit 150 may generate one packet including all of: the time information to turn on/off the shutter glasses of the glasses 200 in synchronization with the display timing of content 1; the time information to turn on/off the shutter glasses of the glasses 200 in synchronization with the display timing of content 2; ...; the time information to turn on/off the shutter glasses of the glasses 200 in synchronization with the display timing of the content (n).

In the above-mentioned example, the interface unit 150 may match information about the glasses 200 to the display timings of the respective contents to generate transmission packet. By way of example, the interface unit 150 may match the information about different glasses to each content, in accordance with the order the image frames of the content are arranged. That is, if two contents are provided in the multivew mode (second mode), the image frames of the content arranged in the first, third, ..., (n)th order may be matched with the information regarding glasses 1, while the image frames of the content arranged in the second, fourth, ..., (n+1)th order may be matched with the information regarding glasses 2 (n = odd number). The interface unit 150 may transmit the transmission packet, which is generated to include the synchronous signals regarding the plurality of contents, to the glasses 200. Among the synchronous signals related to the plurality of contents, the glasses 200 may turn on/off the shutter glasses using the synchronous signals containing information about glasses that corresponds thereto.

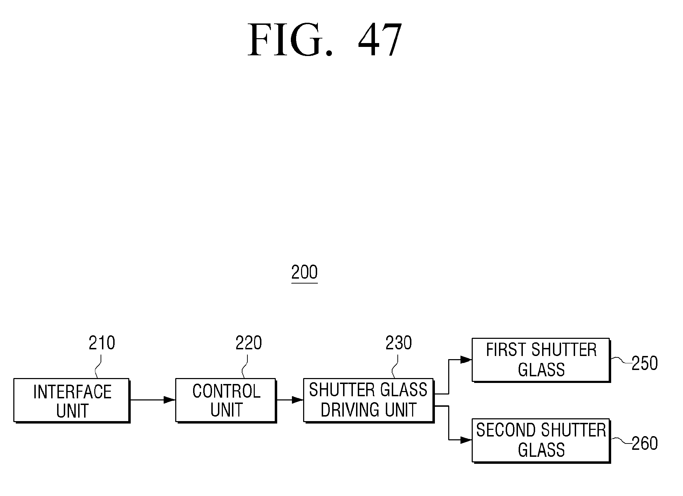

FIG. 47 is a block diagram provided to explain a structure of glasses 200 according to an exemplary embodiment. Referring to FIG. 47, the glasses 200 may include a communication interface unit 210 (e.g., communication interface), a control unit 220 (e.g., controller), a shutter glass driving unit 230 (e.g., shutter glass driver), a first shutter glass 250, and a second shutter glass 260.

The respective components may perform operations explained above and operations to be explained below. The operations already explained above will not be redundantly explained below for the sake of brevity.

The communication interface unit 210 may receive synchronous signals from the display apparatus 100. To be specific, the communication interface unit 210 may perform communication with the display apparatus 100 according to various wireless communication methods and receive synchronous signals. By way of example, the communication interface unit 210 may be provided with the Bluetooth communication module to perform communication with the display apparatus 100 according to the Bluetooth communication method.

As explained above, the synchronous signals may be received in the form of a transmission packet according to the Bluetooth communication method, and may include time information to turn on/off the first and second shutter glasses 250, 260 of the glasses 200 in synchronization with the display timings of the contents. Since the information contained in the transmission packet is explained above with reference to FIG. 46, the information will not be explained again for the sake of brevity.

The control unit 220 may control the overall operations of the glasses 200. To be specific, the control unit 220 may transmit the synchronous signals received at the communication interface unit 210 to the shutter glass driving unit 230 and control the operation of the shutter glass driving unit 230.

More particularly, if the synchronous signals include multivew mode (second mode) information therein, the control unit 220 may control the shutter glass driving unit 230 to adjust on-timing of the first and second shutter glasses 250, 260 according to the multiview mode (second mode).

By way of example, if synchronous signals are received in the form of a transmission packet according to the Bluetooth communication method, the control unit 220 may determine if the transmission packet contains multiview mode (second mode) information in the reserve region of the transmission packet, and control the shutter glass driving unit 230 to generate driving signals to drive the first and second shutter glasses 250, 260 depending on the inclusion or exclusion of the multiview mode (second mode) information.

To be specific, if the display apparatus displays 3D content, the control unit 220 may alternately turn on the first and second shutter glasses 250, 260, while if synchronous signals containing multiview mode (second mode) information are received, may turn on the first and second shutter glasses 250, 260 according to the display timing of one of the plurality of displayed contents that corresponds to the glasses 200.

That is, if determining that the synchronous signals do not include multivew mode (second mode) information therein, the control unit 220 may control the shutter glass driving unit 230 to generate a driving signal to alternately turn on/off the first and second shutter glasses 250, 260 based on the time information included in the synchronous signals. Accordingly, the first and second shutter glasses 250, 260 may be turned on/off in synchronization with the display timing of the left- and right-eye image frames of the 3D content.

If determining that the synchronous signals include the multiview mode (second mode) information therein, the control unit 220 may control the shutter glass driving unit 230 to generate a driving signal to turn on/off both the first and second shutter glasses 250, 260 based on the time information included in the synchronous signals. Accordingly, the first and second shutter glasses 250, 260 may be turned on when the image frames regarding one of the plurality of contents are displayed.

While the display apparatus 100 may generate synchronous signals corresponding respectively to the display timings of the contents and transmit the same to the glasses 200, one or more other exemplary embodiments are not limited thereto. For example, according to another exemplary embodiment, the display apparatus 100 may generate the synchronous signals corresponding to the display timings of the respective contents into one transmission packet according to Bluetooth communication standard and transmit the same to the glasses.

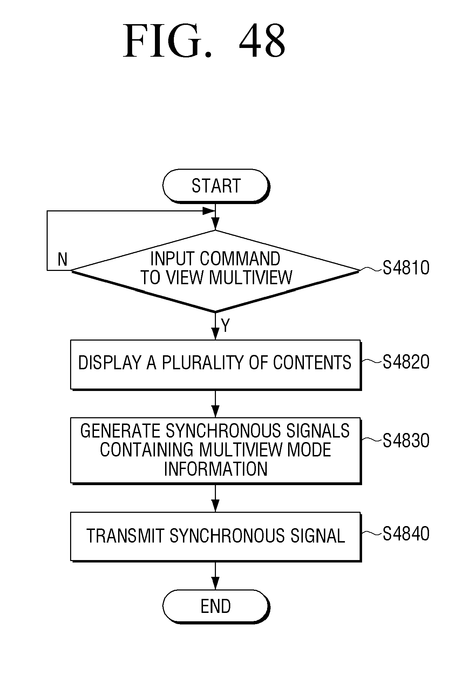

FIG. 48 is a flowchart provided to explain a multiview display method of a display apparatus 100 according to an exemplary embodiment.

First, at operation S4810, a muliview viewing command is inputted. As used herein, the 'multiview viewing command' may refer to a user command directing the display apparatus 100 to alternately display a plurality of contents on a basis of image frames to thus provide different contents to a plurality of users.

At operation S4810-Y, if a multiview viewing command is inputted, at operation S4820, a plurality of contents is displayed. To be specific, in response to the multiview viewing command, a plurality of different contents are received to construct image frames of the plurality of contents, respectively, and the image frames of the plurality of contents are arranged alternately and displayed.

At operation S4830, synchronous signals containing multiview mode (second mode) information are generated. The 'multiview mode (second mode) information' may refer to information to notify the input of the multiview viewing command and may include information to notify the initiation of the multiview mode (second mode).

The multiview mode (second mode) information may be recorded in the reserved area of synchronous signals generated according to the communication protocol defined between at least one pair of glasses 200. By way of example, if the synchronous signals are generated in the form of a transmission packet according to the Bluetooth communication method, the multiview mode (second mode) information may be recorded in the reserved area within the BT packet. This is explained above with reference to FIG. 46.

At operation S4840, the synchronous signals are transmitted. To be specific, the synchronous signals are transmitted to at least one pair of glasses 200 operating in association with the display apparatus 100. By way of example, under Bluetooth communication, information such as a device ID obtained during paring may be matched with the transmission packet that contains time information corresponding to the display timings of the respective contents. The transmission packet may then be transmitted to the glasses 200 based on the information obtained as a result of paring.

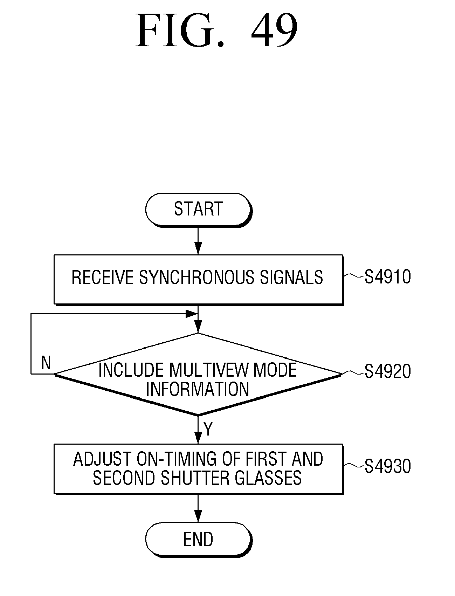

FIG. 49 is a flowchart provided to explain a control method of glasses 200 according to an exemplary embodiment. To be specific, a control method of the glasses 200 which interoperate with the display apparatus 100 and which turn on the first and second shutter glasses according to display timing of the content displayed on the display apparatus 100 will be explained below.

First, at operation S4910, the synchronous signals are received from the display apparatus 100. To this end, communication with the display apparatus 100 may be performed according to various communication methods.

At operation S4920, it is determined whether or not the multiview mode (second mode) information is included. By way of example, if a transmission packet generated according to the Bluetooth communication method is received, it is determined whether or not the multiview mode (second mode) information is included in the reserved area of the transmission packet.

At operation S4920-Y, if the multiview mode (second mode) information is included in the synchronous signals, at operation S4930, the opening timing of the first and second shutter glasses is adjusted according to the multiview mode (second mode) information.

To be specific, if the display apparatus displays 3D content, the first and second shutter glasses may be turned on alternately, while if the synchronous signals containing multiview mode (second mode) information are received, the first and second shutter glasses may be turned on in accordance with the display timing of one of the plurality of contents displayed on the display apparatus 100 that corresponds to the glasses 200. Accordingly, the viewer may view 3D content in the normal mode, and view one of the plurality of contents in the multiview mode (second mode).

Meanwhile, a program to execute methods according to various exemplary embodiments may be stored in various types of recording media and used.

To be specific, codes for executing the above-explained methods may be stored in various types of terminal readable recording media such as random access memory (RAM), flash memory, read only memory (ROM), erasable programmable ROM (EPROM), electronically erasable and programmable ROM (EEPROM), a register, a hard disk, a removable disk, a memory card, a USB memory, and an optical storage medium (e.g., a CD-ROM, a DVD, a Blu-ray, etc.).

### Glasses providing information about whether the glasses operate normally or not

The glasses 200 may provide information about whether the glasses 200 operate normally or not while content is provided, and this will be explained in accordance with various exemplary embodiments below.

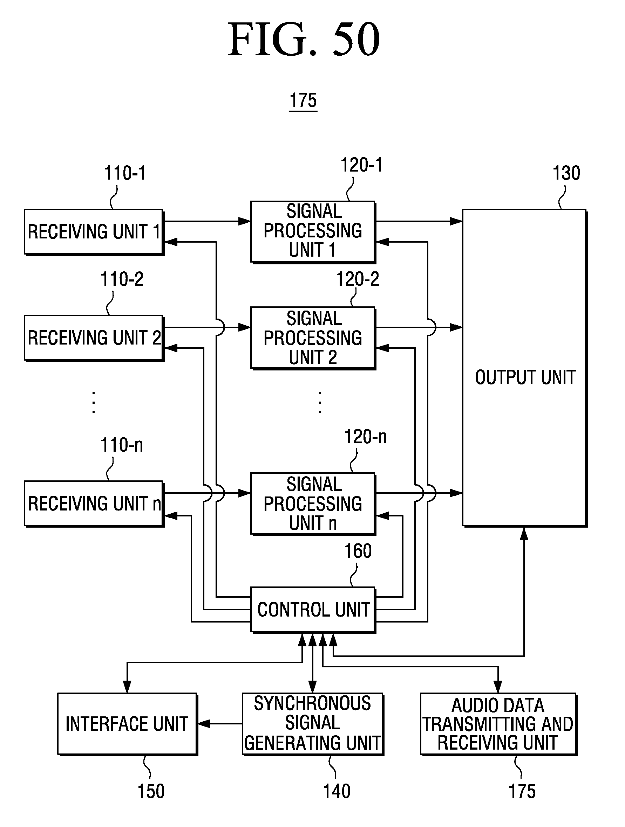

FIG. 50 is a block diagram of a display apparatus 100 according to an exemplary embodiment.

Referring to FIG. 50, the display apparatus 100 according to an exemplary embodiment may include a plurality of receiving units 110-1, 110-2,..., 110-n (e.g., plurality of receivers), a plurality of signal processing unit 120-1, 120-2,..., 120-n (plurality of signal processors), an output unit 130 (e.g., outputter), a synchronous signal generating unit 140 (e.g., synchronous signal generator), an interface unit 150 (e.g., interface), a control unit 160 (e.g., controller), and an audio data transmitting unit 175 (e.g., audio data transmitter). The components perform operations as explained above and also operations to be explained above. The operations already explained above will not be explained redundantly below for the sake of brevity.

If a message requesting connection to transmit synchronous signals is received from the glasses 200, the control unit 160 may control the audio data transmitting unit 175 to transmit audio data corresponding to one content to the glasses 200.

If the message requesting connection is received, the control unit 160 may transmit a response message to the glasses 200, and perform connection between the interface unit 150 and the glasses 200 according to a communication protocol defined with the glasses 200.

For convenience of explanation, it is assumed that the interface unit 150 includes a Bluetooth communication module, and performs a connection according to the Bluetooth communication protocol with a Bluetooth communication module provided in the glasses 200.

To be specific, the glasses 200 may broadcast an inquiry message to perform pairing and search for display apparatuses 200 within a Bluetooth communication range. The control unit 160 in receipt of the inquiry message may control the interface unit 150 to transmit a response message (e.g., extended inquiry response; EIR) to the glasses 200 in response. The response message may include a Bluetooth device address, a device name, a class of device (COD), clock information, etc.

Meanwhile, the glasses 200 in receipt of the response message may transmit a transmission packet containing a Bluetooth address, a device type or the like to the display apparatus 100. If a corresponding transmission packet is received via the interface unit 150, the control unit 160 may control the interface unit 150 to transmit and receive a PIN code to and from the glasses 200, and perform pairing with the glasses 200. The viewer may not input the PIN code and the control unit 160 may automatically input the PIN code to register the display apparatus 100 so that pairing is performed. However, it is understood that one or more other exemplary embodiments are not limited thereto. For example, according to another exemplary embodiment, pairing may also be processed in response to a direct input of the PIN code of the display apparatus 100 by the viewer.

As explained above, in response to the inquiry message received from the glasses 200, the control unit 160 may perform a connection between the interface unit 150 and the glasses 200 to enable communication therebetween by transmitting a response message. If the inquiry message is received from the glasses 200, the control unit 160 may control the audio data transmitting unit 175 to transmit audio data (e.g., RF-modulated audio data) to the glasses 200.

Meanwhile, if information indicating reception or non-reception of the audio data at the glasses 200 is received, the control unit 160 may control so that the received information appears in the form of a user interface (UI) on the screen (display unit) of the output unit 130. The information indicating reception or non-reception of audio data may be recorded within the reserved area in the transmission packet which is transmitted during a connection operation between the interface unit 150 and the glasses 200. As explained above, the glasses 200 in receipt of the response message may transmit a transmission packet containing a Bluetooth address, a device type or the like to the display apparatus 100. That is, the glasses 200 may record information indicating reception or non-reception of the audio data in the reserved area of a corresponding transmission packet and transmit the same to the display apparatus 100.

Accordingly, the control unit 160 may determine whether or not the audio data is received at the glasses 200, referring to the information recorded in the reserved area of the transmission packet. By way of example, if bit value '1' is read out from the reserved area, the control unit 160 may determine that the audio data is received at the glasses 200. If bit value '0' is read out from the reserved area, the control unit 160 may determine that the audio data is not received at the glasses 200.

However, it is understood that one or more other exemplary embodiments are not limited to the foregoing example. For example, the information indicating reception or non-reception of audio data may be recorded in various forms as previously set with respect to the glasses 200. For example, the control unit 160 may determine that the audio data is not received at the glasses 200, if there is no bit value recorded in the reserved area of the transmission packet.

Meanwhile, the control unit 160 may control the output unit 130 to display reception or non-reception of the audio data in the form of a UI on the screen (display unit). In such an example, the control unit 160 may also display the information indicating a connection status of the interface unit 150 on the UI. To be specific, the control unit 160 may display at least one of a message indicating that the audio data is normally received at the glasses 200, and a message indicating that the interface unit 150 is successfully connected to the glasses 200, on the screen (display unit) of the output unit 130 in the form of an on-screen display (OSD). Accordingly, information regarding an operational status of the glasses 200 may be provided to the viewer.

Meanwhile, the control unit 160 may control the interface unit 150 to transmit one of the synchronous signals respectively corresponding to the plurality of contents to the glasses 200 with which the connection is established.

The synchronous signals transmitted to the glasses 200 may be set as default. By way of example, it is assumed that the image frames of the content 1 and the image frames of the content 2 are displayed alternately. From among the synchronous signals corresponding to content 1 and content 2, the synchronous signal corresponding to content 1 may be set to be transmitted to the glasses 200.

Meanwhile, if a request message for another synchronous signal is received from the glasses, the control unit 160 may control the interface unit 150 to transmit another synchronous signal. Accordingly, the control unit 160 may cause the audio data related to the respective contents to be modulated into different frequency signals and the audio data related to the content corresponding to another synchronous signal to be transmitted.

Meanwhile, while the synchronous signal set as default may be transmitted to the glasses 200 with which the connection operation is completed, it is understood that one or more other exemplary embodiments are not limited thereto.

For example, the control unit 160 may control the interface unit 150 to transmit the identical or different synchronous signals to different glasses 200, based on the information acquired from the paring. Further, the interface unit 150 may transmit identical synchronous signal to some glasses 200. By way of example, the interface unit 150 may transmit a synchronous signal corresponding to content 1 to glasses 1, transmit a synchronous signal corresponding to content 2 to glasses 2, and transmit a synchronous signal corresponding to content 1 to glasses 3.

Further, the control unit 160 may control the interface unit 150 to generate one transmission packet according to the Bluetooth communication standard based on the synchronous signals corresponding to the display timings of the respective contents. That is, the interface unit 150 may generate one transmission packet which includes all of: time information to turn on or off the shutter glasses of the glasses 200 in synchronization with the display timing of content 1; time information to turn on or off the shutter glasses of the glasses 200 in synchronization with the display timing of content 2; (...); and time information to turn on or off the shutter glasses of the glasses 200 in synchronization with the display timing of content (n).

In the above example, the interface unit 150 may match information about the glasses 200 to the display timings of the respective contents. By way of example, the interface unit 150 may match the information about different glasses 200 to the respective contents in accordance with an order the image frames of the contents are arranged. That is, if two contents are provided in the multiview mode (second mode), the image frames of the content arranged in the first, third, (...) and (n)th order may be matched with the information about glasses 1, while the image frames of the content arranged in the second, fourth, (...) and (n+1)th order may be matched with the information about glasses 2 (n = odd number). The interface unit 150 may transmit the transmission packet containing therein synchronous signals regarding the plurality of contents to the glasses 200. Among the synchronous signals regarding the plurality of contents, the glasses 200 may turn on or off the shutter glasses using the synchronous signal that contains glasses information regarding itself.

Meanwhile, the control unit 160 may modulate audio data related to the respective contents into different frequency signals and transmit the audio data related to the respective contents using different frequency bands. The control unit 160 may write information about the glasses 200 in the respective audio data, and the glasses 200 may selectively receive the audio data that corresponds to itself and output the same.

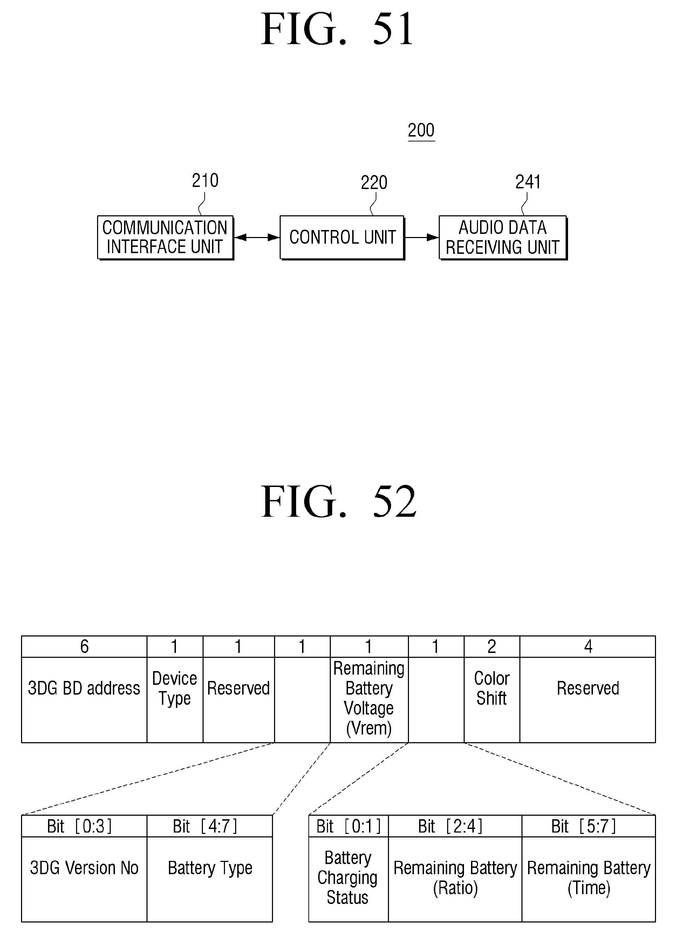

FIG. 51 is a block diagram of glasses 200 according to an exemplary embodiment. Referring to FIG. 51, the glasses 200 may include a communication interface unit 210 (e.g., communication interface), an audio data receiving unit 241 (e.g., audio data receiver), and a control unit 220 (e.g., controller). The glasses 200 may interoperate with the display apparatus 100 which alternately displays a plurality of contents. The glasses 200 may include components explained above and also components to be explained below.

In order to receive a synchronous signal corresponding to one of a plurality of contents, the communication interface unit 210 may transmit a message for requesting connection to the display apparatus 100. That is, if a Bluetooth communication module is employed, the communication interface unit 210 may transmit an inquiry message to the display apparatus 100. The communication interface unit 210 may perform a pairing operation when receiving a response message (EIR) from the display apparatus 100. This is explained above with reference to FIG. 2.

Meanwhile, if the display apparatus 100 and the communication interface unit 210 are connected to each other according to a communication protocol defined therebetween, the communication interface unit 210 may receive synchronous signals from the display apparatus 100.

To be specific, if the display apparatus 100 is in the multiview mode (second mode), the communication interface unit 210 may receive synchronous signals to synchronize the glasses 200 to the display timing of image frames of one of the plurality of contents. If the display apparatus 100 is in the normal mode, the communication interface unit 210 may receive synchronous signals to synchronize the glasses 200 to the display timing of left- and right-eye image frames of 3D content.

The audio data receiving unit 241 may receive audio data from the display apparatus 100. To be specific, the audio data receiving unit 241 may receive audio data which is modulated according to the RF communication method and transmitted on a preset frequency band. The audio data receiving unit 241 may receive audio data which corresponds to the synchronous signals received at the communication interface unit 210. That is, the received audio data may be related to the content corresponding to the synchronous signals.

The control unit 220 may control the overall operations of the glasses 200.

If a response message to the message for requesting a connection is received, the control unit 220 may control the audio data receiving unit 241 to tune to a preset frequency band and receive audio data corresponding to one content.

To this purpose, the control unit 220 may control the audio data receiving unit 241 to tune to the frequency band that is predefined between the display apparatus 100 and the glasses 200 for the audio data reception. Alternatively, the control unit 220 may scan a frequency band to find a frequency band in which audio data is present, and control the audio data receiving unit 241 to tune to the found frequency band to receive the audio data.

The control unit 220 may control so that the information indicating reception or non-reception of the audio data is transmitted to the display apparatus 100 via the communication interface unit 210. To be specific, the control unit 220 may record reception or non-reception of the audio data in the reserved area of the transmission packet transmitted to connect the display apparatus 100 and the communication interface unit 210 according to the communication protocol defined with respect to the display apparatus 100.

That is, during operation of the communication interface unit 210 to connect to the display apparatus 100 according to the Bluetooth communication protocol, if a response message is received from the display apparatus 100, the control unit 220 may control the communication interface 210 to transmit a transmission packet containing a Bluetooth address, a device type, or the like to the display apparatus 100. The control unit 220 may record a specific bit value to indicate reception or non-reception of audio data within the reserved area of the corresponding transmission packet. This is explained in greater detail below with reference to FIG. 52.

FIG. 52 is a view provided to explain a structure of a transmission packet transmitted from the glasses 200 to the display apparatus 100 according to an exemplary embodiment.

If a response message is received from the display apparatus 100, the glasses 200 may construct a transmission packet containing therein various information for the purpose of pairing with the display apparatus 100, and transmit the transmission packet to the display apparatus 100.

To be specific, referring to FIG. 52, the glasses 200 may construct a transmission packet to contain information regarding Bluetooth address (3DG BD address), Device Type, version information of the glasses (3DG Version No.), Battery type, Remaining Battery Voltage, Battery Charging Status, Remaining Battery Ratio, Remaining Battery Time, or Color Shift.

Accordingly, in the case of a 17-byte transmission packet, such a transmission packet may include 1-byte and 4-byte reserved areas. The control unit 220 may record in the 1-byte or 4-byte reserved area the information indicating reception or non-reception of the audio data. By way of example, in order to indicate that the audio data is received, the control unit 220 may record bit value '1' in the reserved area. The control unit 220 may record bit value '0' in the reserved area to indicate that the audio data is not received. Accordingly, the display apparatus 100 in receipt of the transmission packet may determine whether or not the audio signal is successfully transmitted to the glasses 200 and provide the same to the viewer.

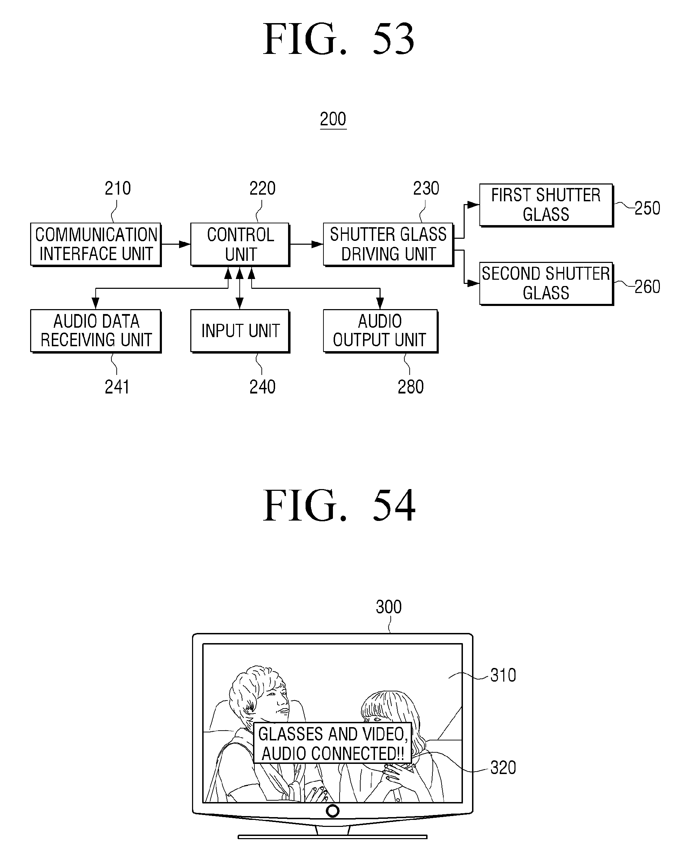

FIG. 53 is a block diagram of a detailed construction of glasses according to an exemplary embodiment. Referring to FIG. 53, the glasses 200 may include a communication interface unit 210 (e.g., communication interface), an audio data receiving unit 241 (e.g., audio data receiver), a control unit 220 (e.g., controller), a shutter glass driving unit 230 (e.g., shutter glass driver), a first shutter glass 250, a second shutter glass 260, and an input unit 240 (e.g., inputter). The components may perform operations explained above and also operations to be explained below. If certain descriptions are contradictory, the following description precedes the above description. Redundant descriptions will be omitted as much as possible for the sake of brevity.

The input unit 240 may receive a user command to perform operations to connect to the display apparatus 100. To this end, the input unit 240 may be implemented as a touch sensor or operation buttons. If the viewer touches on the touch sensor or operation buttons, the control unit 220 may control the communication interface unit 210 to transmit a message for requesting connection to the display apparatus 100. To be specific, if the communication interface unit 210 is implemented as the Bluetooth communication module, the message for requesting connection may be an inquiry message to search display apparatuses existing in the Bluetooth communication range.

Meanwhile, the input unit 240 may receive a user command to request transmission of synchronous signals. To be specific, if the connection to the display apparatus 100 is completed and the user touches on the touch sensor or operation buttons of the input unit 240, the control unit 220 may control the communication interface unit 210 to transmit to the display apparatus 100 a request message for requesting transmission of another synchronous signal. Accordingly, the communication interface unit 210 may receive synchronous signals which are different from the synchronous signals received from the display apparatus 100 so far. The control unit 220 may control the shutter glass driving unit 230 to generate a driving signal in accordance with the newly-received synchronous signals and the viewer may view different content from the content he or she viewed so far.

The display apparatus 100 in receipt of the request message may transmit another synchronous signal and also new audio data corresponding to the other synchronous signals. To be specific, the display apparatus 100 may transmit new audio data which is modulated to different frequency signals from each other in relation to contents corresponding to different synchronous signals. The control unit 220 may control the audio data receiving unit 241 to scan frequency bands and receive new audio data.

Meanwhile, although a user command to request transmission of synchronous signals may be inputted through the touch sensor or operation buttons to perform operations to connect to the display apparatus 100, it is understood that one or more other exemplary embodiments are not limited thereto. For example, the input unit 240 may include a separate touch sensor or operation buttons to receive user commands to perform operations to connect to the display apparatus 100.

The audio output unit 280 may output audio data corresponding to one content. To be specific, the audio output unit 280 may include a connection terminal to connect to a speaker, earphone (or headphone) or the like, and output audio content corresponding to one content received at the audio receiving unit 241 to provide the same to the viewer.

Meanwhile, although the display apparatus 100 may generate synchronous signals corresponding to the display timings of the content and transmit the same to the glasses 200 respectively, it is understood that one or more other exemplary embodiments are not limited thereto. For example, according to another exemplary embodiment, the display apparatus 100 may generate one transmission packet according to the Bluetooth communication standard based on the synchronous signals corresponding to the display timings of the respective contents and transmit the same to the glasses 200.

When receiving synchronous signals, the control unit 220 may confirm the display timing corresponding to the glasses information thereof and turn on or off the shutter glasses 250, 260 according to the confirmed display timing.

Meanwhile, referring to FIGS. 50 to 53, although the communication interface units 150, 210 provided in the display apparatus 100 and the glasses 200 respectively may transmit and receive information that indicates reception or non-reception of audio data, it is understood that one or more other exemplary embodiments are not limited thereto. For example, according to another exemplary embodiment, the audio data receiving unit 241 of the glasses 200 may transmit and receive the information indicating reception or non-reception of audio data to and from the audio data transmitting and receiving unit 175 of the display apparatus 100.

FIG. 54 is a view provided to explain a UI displayed on the screen (display unit) of a display apparatus 100 according to an exemplary embodiment. For convenience of explanation, it is assumed that the display apparatus 100 is provided with the Bluetooth communication module 1 and the pair of glasses 200 is provided with the Bluetooth communication module 2.

In the process that the Bluetooth communication module 1 and the Bluetooth communication module 2 perform operations to connect, information indicating reception or non-reception of audio data at the glasses 200 may be received from the Bluetooth communication module 2. After that, when the Bluetooth communication module 1 completes operations to connect to the Bluetooth communication module 2, referring to FIG. 54, the display apparatus 100 may display on the screen (display unit) the information indicating connection or non-connection of the Bluetooth communication module and information indicating reception or non-reception of audio data in the form of a UI.

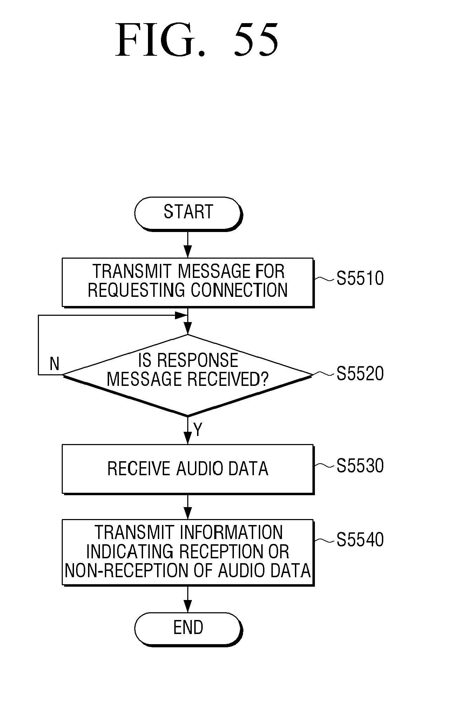

FIG. 55 is a flowchart provided to explain a method for providing content of the glasses 200 according to an exemplary embodiment. The glasses 200 may interoperate with the display apparatus 100 which alternately displays a plurality of contents respectively.

At operation S5510, a message for requesting connection is transmitted. To be specific, a message for requesting connection to the display apparatus 100 may be transmitted to receive synchronous signals corresponding to one of a plurality of contents.

At operation S5520-Y, if a response message is received in response to the message for requesting connection, the audio data is received. To be specific, if a response message is received in response to the message for requesting connection, a preset frequency band may be tuned and audio data corresponding to one content may be received.

At operation S5540, information indicating reception or non-reception of audio data is transmitted to the display apparatus 100. If the pair of glasses 200 is provided with the communication interface unit 210 to receive synchronous signals corresponding to one of a plurality of contents, the information indicating reception or non-reception of audio data may be recorded in the reserved area of the transmission packet which is transmitted to connect the display apparatus 100 and the communication interface unit 210 according to the communication protocol defined with respect to the display apparatus 100.

Further, in a communication method according to an exemplary embodiment, if connection between the display apparatus 100 and the communication interface unit 210 is completed so that the synchronous signals are received, the on-timing of the first and second shutter glasses 250, 260 may be controlled in accordance with the display timing of one content based on the synchronous signals. The audio data corresponding to one content may then be outputted.

Repetitious explanations or illustrations of the above exemplary embodiments, which are already explained or illustrated above, will be omitted for the sake of brevity.

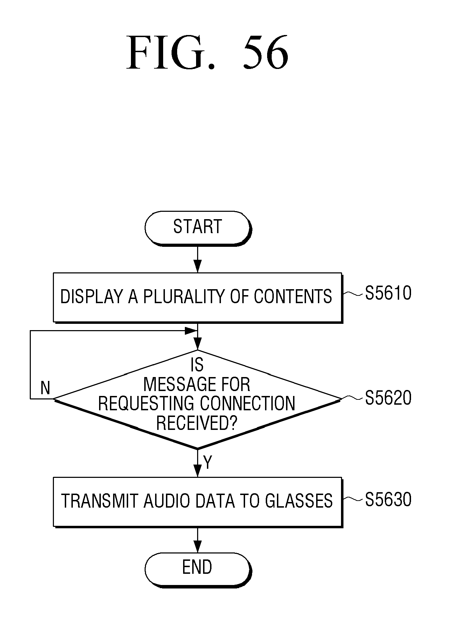

FIG. 56 is a flowchart provided to explain a method for providing content of a display apparatus 100 according to an exemplary embodiment. The display apparatus 100 may interoperate with the glasses 200.

At operation S5610, a plurality of contents are alternately displayed. To be specific, the image frames regarding a plurality of contents are alternately displayed.

At operation S5620, a message for requesting connection is received. That is, the message for requesting connection may be received from the glasses 200 for the transmission of synchronous signals corresponding to one of a plurality of contents.

At operation S5620-N, if a message for requesting connection is received, at operation S5630, the audio data is transmitted to the glasses 200. To be specific, audio data corresponding to one content may be transmitted on the preset frequency band to the glasses 200.

Meanwhile, the glasses 200 according to an exemplary embodiment may include a communication interface unit 210, and the communication interface unit 210 may include a Bluetooth communication module.

A method for providing content according to an exemplary embodiment may additionally include a step of performing operations to connect the display apparatus 100 and the glasses 200 according to the communication protocol defined with respect to the glasses 200, by transmitting a response message if the message for requesting connection is received.

Further, if information indicating reception or non-reception of audio data is received from the glasses 200, the received information may be displayed in the form of a UI on the screen (display unit). The information indicating reception or non-reception of audio data may be recorded in the reserved area of the transmission packet which is transmitted in the process of connecting the display apparatus 100 and the glasses 200.

Repetitious explanations or illustrations of the above exemplary embodiments, which are already explained or illustrated above, will be omitted for the sake of brevity.

Meanwhile, a method according to various exemplary embodiments may be stored in various types of recording media and used.

To be specific, codes to execute the method explained above may be stored in various types of terminal-readable recording media such as random access memory (RAM), flash memory, read only memory (ROM), erasable programmable ROM (EPROM), electronically erasable and programmable ROM (EEPROM), a register, a hard disk, a removable disk, a memory card, a USB memory, and an optical storage medium (e.g., CD-ROM, DVD, Blu-ray, etc.).

### Switching content currently viewing through the glasses

A system and a method for switching content currently viewed through the glasses to another content for viewing according to an exemplary embodiment will be explained below.

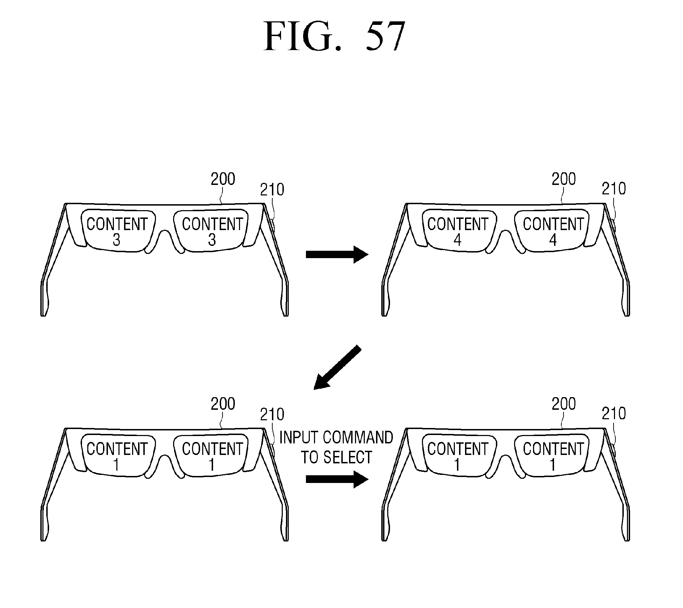

Referring to FIG. 57, if a switching mode begins in response to a switching command inputted through the input unit 210 provided in the glasses 200, the display apparatus 100 and the glasses 200 perform content switching operation. Accordingly, a viewer wearing the glasses 200 may view content 3, content 4 and content 1 in sequence. After that, if a select command is inputted through the input unit 210, the glasses 200 may turn on both the left and right shutter glasses in synchronization with content 1 which is viewed at a time point of inputting the select command. Accordingly, the viewer may select and view content 1.

Hereinbelow, a display apparatus 100 and glasses 200 for performing the operations explained above according to various embodiments will be explained in greater detail.

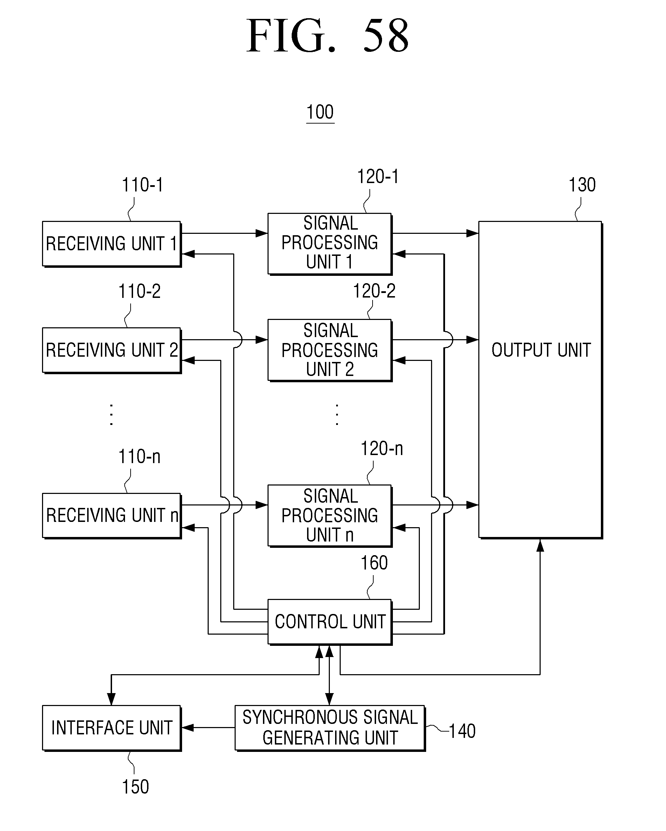

FIG. 58 is a block diagram provided to explain constitution of a display apparatus according to an embodiment. Referring to FIG. 58, the display apparatus 100 may include a plurality of receiving units 110-1, 110-2, ... , 110-n, a plurality of signal processing units 120-1, 120-2, ... , 120-n, an output unit 130, a synchronous signal generating unit 140, an interface unit 150, and a control unit 160. In describing the components such as the plurality of receiving units 110-1, 110-2, ... , 110-n, the plurality of signal processing units 120-1, 120-2, ... , 120-n, the output unit 130, the synchronous signal generating unit 140, the interface unit 150, and the control unit 160, repetitious explanation which is already provided above will be omitted as much as possible for the sake of brevity.

The interface unit 150 may perform communication with the glasses. The interface unit 150 may perform communication with the glasses according to various wireless methods and transmit synchronous signals to the glasses and receive a content switching command from the glasses.

Meanwhile, the interface unit 150 may transmit and receive Bluetooth device address and PIN code or the like to and from the glasses to perform pairing according to the Bluetooth communication method. When pairing is completed, the interface unit 150 may transmit the synchronous signals corresponding to one of a plurality of contents based on the information acquired from the pairing.

Further, when pairing with a plurality of glasses is completed, the interface unit 150 may transmit identical or different synchronous signals to different glasses based on the information acquired for the pairing. Further, the interface unit 150 may transmit identical synchronous signals to some glasses. By way of example, the interface unit 150 may transmit synchronous signals corresponding to content 1 to glasses 1, transmit synchronous signals corresponding to content 2 to glasses 2, and transmit synchronous signals corresponding to content 1 to glasses 3.

However, while the interface unit 150 and the glasses may perform communication according to Bluetooth communication method in the embodiment explained above, this is written only for illustrated purpose. Accordingly, different communication methods such as infrared communication, Zigbee communication may be utilized, or various wireless communication methods to form communication channels in short distance and transmit and receive the signals may be implemented.

The control unit 160 in receipt of a content switching command from the glasses may perform switching operation to sequentially switch content corresponding to the glasses to another content from among the plurality of contents.

To be specific, if content switching command is received, the control unit 160 may control the output unit 130 to change a pattern of arranging image frames of the respective contents so that image frames of another content are placed at a location of the image frames of the content corresponding to the glasses.

By way of example, it is assumed that the output unit 130 alternately arranges and displays the image frames of contents 1 to 3 and that synchronous signals corresponding to display timing of content 1 are transmitted to the glasses. In response to a switching command received from the glasses synchronized to content 1, the control unit 160 may control the output unit 130 to sequentially arrange image frames of content 2 and image frames of content 3 at a location of the image frames of content 1. In this case, the control unit 160 may control the interface unit 160 to continuously transmit synchronous signals to the glasses according to the display timing of content 1 before image frame arrangement pattern change. Accordingly, the viewer wearing the glasses may view all the contents sequentially.

On the other hand, if a content switching command is received, the control unit 160 may control the interface unit 150 to transmit the synchronous signals corresponding to another content from among the plurality of contents to the glasses so that the glasses are synchronized to the another content from among the plurality of contents.

By way of example, if the interface unit 150 is Bluetooth communication module, the control unit 160 may control the interface unit 150 to sequentially transmit transmission packets containing the information about display timing of the another content to the glasses in response to the content switching command. The glasses may turn on or off the shutter glasses of the glasses based on the time information included in the transmission packets received in sequence. Accordingly, the user may view all the contents sequentially.

If a select command is received through the interface unit 150 in the process that the content corresponding to the glasses is switched to another content in sequence, the control unit 160 may finish the switching operation so that the content at the time of receiving the select command is viewed through the glasses.

To be specific, if select command is inputted from the glasses in the process of changing the content arrangement pattern or synchronous signals to sequentially switch the contents synchronized to the glasses, the control unit 160 may synchronize the glasses based on the content arrangement pattern or synchronous signals at the time point of inputting the select command.

Accordingly, the control unit 160 may finish changing the content arrangement pattern at a time point of inputting the select command, and display the plurality of contents alternately based on the content arrangement pattern at the time point of finishing the switching. Alternatively, the control unit 160 may transmit the synchronous signals of the content which is displayed at the time point of inputting the select command. As a result, since the glasses is synchronized with the content displayed at the time point of inputting the select command, the viewer may view intended content according to the select command.

Meanwhile, the switching operation may be performed for the duration the content switching command is received from the glasses. That is, the control unit 160 may control so that the content switching operation is performed at a time point of receiving the content switching command and finish the content switching operation at a time point of finishing reception of the content switching command.

Meanwhile, although the display apparatus 100 may generate synchronous signals corresponding to the display timings of the contents and transmit the same to the glasses 200, an embodiment is not limited to the specific example.

Accordingly, the control unit 160 may control the interface unit 150 to generate one transmission packet according to the Bluetooth communication standard based on the synchronous signals corresponding to the display timings of the respective contents. That is, the interface unit 150 may generate one packet including all of: the time information to turn on/off the shutter glasses of the glasses in synchronization with the display timing of content 1; the time information to turn on/off the shutter glasses of the glasses in synchronization with the display timing of content 2; ...; the time information to turn on/off the shutter glasses of the glasses in synchronization with the display timing of the content (n).

In the above-mentioned example, the interface unit 150 may match information about the glasses to the display timings of the respective contents to generate the transmission packet. By way of example, the interface unit 150 may match the information about different glasses to each content, in accordance with the order the image frames of the content is arranged. That is, if two contents are provided in the multivew mode (second mode), the image frames of the content arranged in the first, third, ..., (n)th order may be matched with the information regarding glasses 1, while the image frames of the content arranged in the second, fourth, ..., (n+1)th order may be matched with the information regarding glasses 2 (n = odd number). The interface unit 150 may transmit the transmission packet, which is generated to include the synchronous signals regarding the plurality of contents, to the glasses. Among the synchronous signals related to the plurality of contents, the glasses may turn on/off the shutter glasses using the synchronous signals containing information about glasses that corresponds thereto.

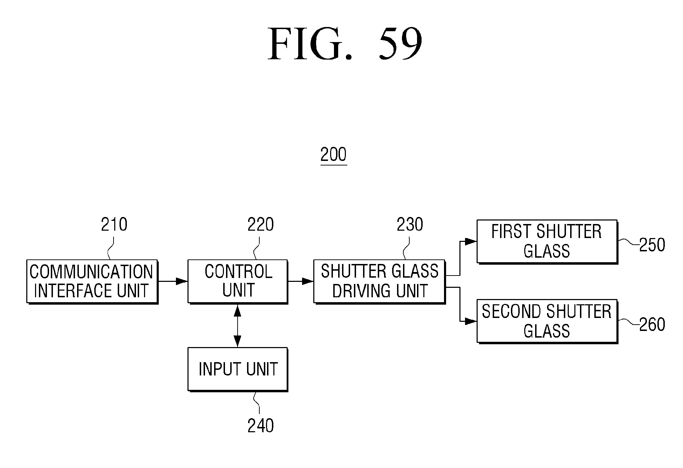

FIG. 59 is a block diagram provided to explain constitution of glasses according to an embodiment. Referring to FIG. 59, the glasses 200 may interoperate with the display apparatus 100 which alternately displays image frames of a plurality of contents on a basis of image frames, and may include an input unit 210, a control unit 220, a shutter glass driving unit 230, an interface unit 240, a first shutter glass 250 and a second shutter glass 260.

The components perform operations explained above and also operations to be explained below, and the repetitious explanation about the components will be omitted as much as possible for the sake of brevity.

The interface unit 240 may perform communication with the display apparatus. By way of example, the interface unit 240 may be a Bluetooth communication module which may perform communication with the display apparatus 100 to receive synchronous signals and transmit a content switching command to the display apparatus 100.

As explained above, the synchronous signals may be received in the form of transmission packet according to the Bluetooth communication standard, and may include time information to turn on or off the first and second shutter glasses 250, 260 of the glasses 200 in synchronization with the display timing of the content.

The input unit 210 may receive a switching command to initiate switching mode. To this end, the input unit 210 may include switching buttons to receive a switching command, and the switching buttons may be implemented in the form of touch sensor of operation buttons.

Further, the input unit 210 may receive a select command directing to select one from among the plurality of contents during sequential content switching in the switching mode. The input unit 210 may also receive a select command through the switching buttons which receive switching command. By way of example, the input unit 210 may receive a switching command for the duration that the switching buttons are touched, and then receive a select command at a time point of ceasing touching. On the other hand, the input unit 210 may include separate select button which may be implemented in the form of touch sensor or operation button.

If the switching mode begins, the control unit 220 may control so that synchronous signals corresponding to another viewable content from among the plurality of contents are received to sequentially change on-timing of the first and second shutter glasses 250, 260. To this end, the control unit 220 may control the interface unit 240 to transmit a content switching command to the display apparatus 100 to request synchronous signals corresponding to another content, if the switching mode begins.

The display apparatus 100 in receipt of the content switching command may sequentially transmit the transmission packets containing information about the display timings of viewable contents other than the currently-viewed content to the glasses 200. The control unit 220 may control the shutter glass driving unit 230 to sequentially receive the synchronous signals corresponding to the other contents and sequentially generate a driving signal based on the synchronous signals corresponding to the respective contents. Accordingly, the first and shutter glasses 250, 260 may be turned on every time the image frames of the respective contents are displayed. As explained above, since the glasses are synchronized to the respective contents sequentially, viewer may view all the contents sequentially.

Meanwhile, if a select command is inputted through the input unit 210 in the process of performing switching mode, the control unit 220 may control the shutter glass driving unit 230 to fix the on-timing of the first and second shutter glasses 250, 260 in accordance with the display timing of the content viewable at the timing of inputting the select command.

That is, the control unit 220 may control the interface unit 240 to transmit a command for requesting interruption of the content switching operation to the display apparatus 100, if a select command is inputted. The control unit 220 may control the shutter glass driving unit 230 to generate a driving signal based on the synchronous signals which are received from the display apparatus 100 at a time point of inputting the select command. As a result, the viewer, who has been viewing a plurality of contents sequentially, may view one content which is selected at a time point of inputting the select command.

Meanwhile, as explained above, both the switching command and the comment to select may be inputted through one switching button. In this example, the control unit 220 may perform switching mode while the switching button is touched, finishes switching mode if touching on the switching button is ceased, and control the shutter glass driving unit 230 to fix the on-timing of the first and second shutter glasses 250, 260 in accordance with the display timing of the content which is viewable at a time point of the touching is ceased.

That is, if the switching mode is finished, the control unit 220 may control the shutter glass driving unit 230 to generate a driving signal based on the synchronous signals received at a time point of finishing the switching mode. As a result, the viewer, who has sequentially viewed a plurality of contents, may view one content which is selected at the time point of ceasing touching on the switching button.

Meanwhile, although the display apparatus 100 may generate synchronous signals corresponding to the display timings of the contents respectively and transmit the same to the glasses 200, an embodiment is not limited to the specific example. That is, the display apparatus 100 may generate one transmission packet according to the Bluetooth communication standard based on the synchronous signals corresponding to the display timings of the respective contents and transmit the same to the glasses.

If the synchronous signals are received, the control unit 220 may confirm the display timings corresponding to its own glasses information, and turn on or off the shutter glasses according to the display timing as confirmed. Further, if a switching command is inputted, the control unit 220 may control the shutter glass driving unit 230 to generate a driving signal sequentially, based on the synchronous signals corresponding to the respective contents included in the transmission packet. Accordingly, the first and second shutter glasses 250, 260 may be sequentially turned on every time the image frames of the respective contents are displayed. The control unit 220 may control so that the driving signal is generated based on the synchronous signals at a time point of inputting a select command, and one is selected from among the sequentially-switched contents.

Although the display apparatus and the glasses may perform communication with each other according to various wireless communication methods to form communication channels and transmit and receive signals within short distance, an embodiment is not limited to the specific example. That is, the display apparatus may provide infrared (IR) synchronous signals with different frequencies to the glasses, and the glasses in receipt of synchronous signals of specific frequency may turn on or off the shutter glasses according to the display timing of the corresponding content.

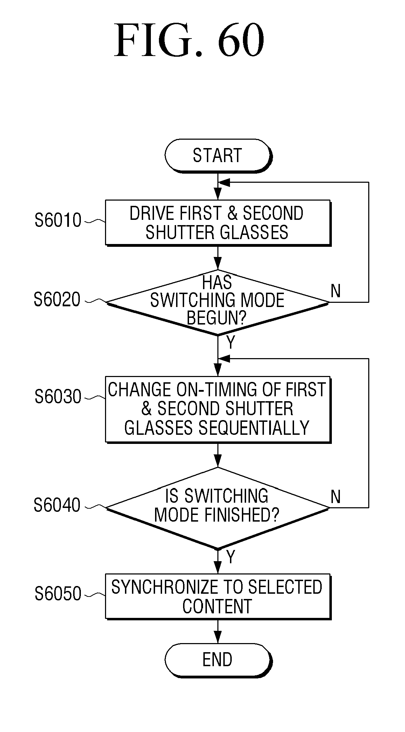

FIG. 60 is a flowchart provided to explain a method for selecting contents according to an exemplary embodiment. To be specific, a method for selecting content of glasses will be explained below, in which the glasses interoperate with a display apparatus which alternately display a plurality of contents on a basis of image frames.

First, at operation S6010, the first and second shutter glasses are driven. That is, the first and second shutter glasses are driven in accordance with the display timing of one of a plurality of contents, based on the synchronous signals received from the display apparatus.

At operation S6020-Y, if the switching mode begins, at operation S6030, the on-timings of the first and second shutter glasses are changed sequentially.

To be specific, if switching mode begins, a content switching command may be transmitted to the display apparatus to request for synchronous signals corresponding to another contents. And if the switching mode begins, synchronous signals corresponding to another viewable contents of the plurality of contents may be received and the on-timings of the first and second shutter glasses may be changed sequentially.

That is, the shutter glasses may be displayed every time the image frames of the respective contents are displayed based on the synchronous signals corresponding to another contents, so that all the contents are provided to the viewer sequentially. The switching mode may begin in response to a switching command inputted to the switching button provided on the glasses.

At operation S6040-Y, if switching mode is finished, at operation S6050, the selected content is synchronized. To be specific, if one is selected from among the plurality of sequentially-switching contents and thus switching mode is finished, the on-timing of the first and second shutter glasses may be maintained so that the selected content is viewed. To this purpose, a select command is inputted while the switching mode is performed, and on-timing of the first and second shutter glasses is fixed according to the display timing of the content which is viewable at a timing of inputting the select command.

That is, based on the synchronous signals corresponding to the display timing of the content which is provided to the viewer at a time point of inputting a select command, the glasses may be synchronized to the selected content. As a result, the viewer, who has been viewed the plurality of contents sequentially, may view one content that is selected at a time point of inputting a select command. The switching mode may be performed as long as the switching button is touched, and then finished upon ceasing of touching on the switching button.

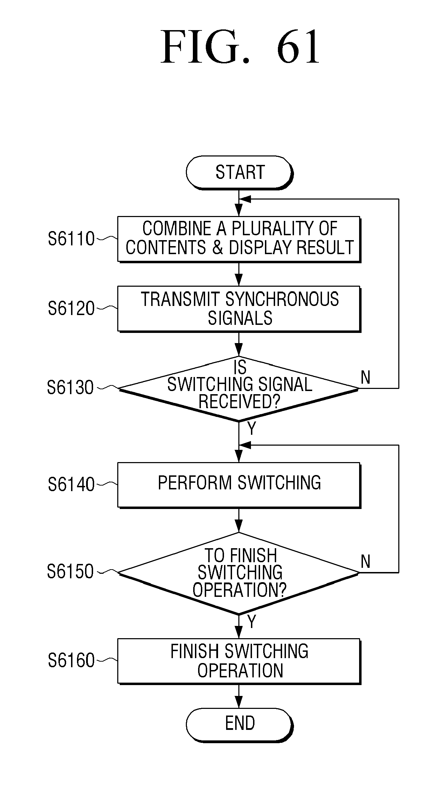

FIG. 61 is a flowchart provided to explain a method for switching contents according to an exemplary embodiment. Hereinbelow, a method for switching contents at a display apparatus according to an embodiment will be explained.

At operation S6110, a plurality of contents are combined and displayed. To be specific, a plurality of different contents are arranged alternately on a basis of image frames and displayed. Video data may be separated from the plurality of contents and go through processing such as decoding, scaling, or frame rate converting. This will not be explained in great detail below for the sake of brevity, and attention is referred to the above explanation for details.

At operation S6120, synchronous signals are transmitted. To be specific, the synchronous signals to synchronize the glasses to the respective contents are transmitted according to display timings of the respective contents.

At operation S6130-Y, if content switching command is received from the glasses, at operation S6140, operation to switch content is performed. To be specific, if a content switching command is received, operations are performed to switch from the content corresponding to the glasses to another contents from among the plurality of contents.

To be specific, if a content switching command is received, the content arrangement pattern may be changed so that the frames of another contents may be placed at a location of the frames of the content corresponding to the glasses. On the other hand, if a content switching command is received, the synchronous signals corresponding to another contents from among the plurality of contents may be transmitted to the glasses to synchronize the glasses to the another contents from among the plurality of contents. Since the above is explained in detail above with reference to various embodiments, repetitious explanation will be omitted for the sake of brevity.

At operation S6150-Y, if switching operation is completed, at operation S6160, the switching job is completed. That is, if one is selected from among the plurality of contents, the switching operation is completed. To be specific, if a select command is received from the glasses in the process of sequentially switching from the content corresponding to the glasses to another content from among the plurality of contents, the switching operation is completed so that the content at the time point of receiving the select command is viewable through the glasses.

The switching operation may be performed as long as the switching command is received from the glasses. That is, the content switching operation may be performed at a time point of receiving the switching command and interrupted at a time point the reception of the switching command is stopped.

Furthermore, one or more exemplary embodiments may be applicable to an image processing apparatus (e.g., a set-top box, an optical storage media reproducing apparatus, a storage device, etc.) which outputs content image signals to an external display device or panel.

Repetitious explanations and illustrations are omitted for the sake of brevity, and attention is referred to the above for details.

Meanwhile, programs to execute the methods according to various exemplary embodiments may be stored on various types of recording media and used.

To be specific, codes for executing the above-explained methods may be stored in various types of terminal-readable recording media such as random access memory (RAM), flash memory, read only memory (ROM), erasable programmable ROM (EPROM), electronically erasable and programmable ROM (EEPROM), register, hard disk, removable disk, memory card, USB memory, or CD-ROM. Moreover, it is understood that in exemplary embodiments, one or more units or components of the above-described apparatuses, glasses, devices, etc., can include circuitry, a processor, a microprocessor, etc., and may execute a computer program stored in a computer-readable medium.

The foregoing exemplary embodiments and advantages are merely exemplary and are not to be construed as limiting the present inventive concept. The present teaching can be readily applied to other types of apparatuses. Also, the description of exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus for processing an image displayed on a display unit, the display apparatus comprising:
a signal processing unit which receives a plurality of contents and constructs image frames corresponding to the plurality of contents;
an output unit which operates in a first mode and a second mode, wherein the output unit operating in the first mode displays, through the display unit, image frames corresponding to only one content, from among the plurality of contents, outputted from the signal processing unit, and the output unit operating in the second mode combines and displays the plurality of image frames corresponding to the plurality of contents outputted from the signal processing unit;
a video telephony processing unit comprising a photographing unit installed on an exterior of the display unit of the display apparatus to capture a front image of the display apparatus, the video telephony processing unit connecting video telephony if a request for video telephony is received via an external network; and
a control unit which controls the output unit to determine a combination of the plurality of image frames corresponding to the plurality of contents outputted through the signal processing unit, according to an operational status of the video telephony processing unit.

2. The display apparatus of claim 1, wherein the control unit detects a change of a viewer of the display apparatus using the captured front image obtained by the photographing unit, and controls the output unit to operate either in the first mode or in the second mode according to the detected change of the viewer.

3. The display apparatus of claim 2, wherein the control unit controls the output unit to switch to the second mode, if detecting an addition of a viewer while the output unit is operating in the first mode, and controls the output unit to switch to the first mode if detecting a disappearance of the viewer while the output unit is operating in the second mode.

4. The display apparatus of claim 3, further comprising a storage unit,
wherein the control unit controls the output unit to switch to the first mode, if detecting disappearance of the viewer while the output unit is operating in the second mode, stores viewing environment information of content corresponding to the disappeared viewer from among the plurality of contents outputted in the second mode, re-constructs content corresponding to the disappeared viewer using the stored viewing environment information of the content upon return of the disappeared viewer, and controls the output unit to output a plurality of contents including the re-constructed content.

5. The display apparatus of claim 2, wherein:
if a public mode is set, the control unit performs switching between the second mode and the first mode according to the detected change of the viewer; and
if a private mode is set, the control unit blocks switching between the second mode and the first mode irrespective of the detected change of the viewer, and controls the output unit to operate fixedly in the second mode.

6. The display apparatus of claim 2, further comprising a storage unit which stores viewing environment information of contents of individual viewers,
wherein if detecting an addition of a new viewer, the control unit constructs new content using viewing environment information, among the stored viewing environment information, of content corresponding to the new viewer and controls the output unit to output a plurality of contents including the new content.

7. The display apparatus of claim 2, wherein:
the photographing unit photographs an image including an infrared (IR) signal outputted from a remote controlling device; and
if a user command is received from the remote controlling device while the output unit is operating in the second mode, the control unit detects a viewer adjacent to the remote controlling device based on the photographed image including the IR signal and applies the user command to content corresponding to the detected viewer.

8. The display apparatus of claim 1, wherein, if the output unit operates in the first mode and the video telephony is connected in response to the request for the video telephony, the control unit changes the output unit from the first mode to the second mode and controls so that image frames of one of the plurality of contents replace a screen for the video telephony.

9. The display apparatus of claim 1, further comprising an interface unit which receives a command to connect the video telephony,
wherein, if the command to connect video telephony is inputted through the interface unit, the control unit controls the video telephony processing unit to connect the video telephony to a correspondent node which transmits the request for the video telephony.

10. The display apparatus of claim 1, wherein:
the interface unit receives a command to connect the video telephony from one of a plurality of glasses corresponding to the plurality of contents; and
the control unit controls the output unit to replace a screen for the video telephony with image frames of content corresponding to the one of the plurality of glasses that transmits the command to connect the video telephony.

11. The display apparatus of claim 10, wherein the video telephony processing unit comprises:
a photographing unit which performs photographing;
a video telephony receiving unit which receives video telephony data from a correspondent node transmitting the request for the video telephony, if the video telephony is connected; and
a video telephony screen processing unit which constructs the screen for the video telephony using video data contained in the video telephony data and photographed data captured at the photographing unit.

12. The display apparatus of claim 11, wherein:
the interface unit comprises a motion detecting unit which detects a viewer motion using data photographed at the photographing unit; and
if a preset viewer motion is detected at the motion detecting unit, the control unit controls the video telephony processing unit to connect to the correspondent node transmitting the request for the video telephony and controls the photographing unit to shift a direction of photographing to a direction that the viewer motion is detected.

13. The display apparatus of claim 1, wherein, if the request for the video telephony is received, the control unit controls the output unit to display a message for inquiring as to whether or not to perform the video telephony.

14. The display apparatus of claim 1, wherein, if the output unit is operating in the second mode and the video telephony is connected in response to the request for the video telephony, the control unit controls so that image frames of one content outputted at the output unit from among the plurality of contents are replaced by a video telephony screen.

15. The display apparatus of claim 14, further comprising a storage unit which stores image frames of the one content replaced by the screen for the video telephony.
